(19) Europäisches Patentamt
European Patent Office
Office européen des brevets

(11) EP 3 483 241 B1

(12) **EUROPEAN PATENT SPECIFICATION**

(45) Date of publication and mention of the grant of the patent:
**19.08.2020 Bulletin 2020/34**

(51) Int Cl.:
***C11D 1/94*** *(2006.01)* ***C11D 3/386*** *(2006.01)*
***C11D 11/00*** *(2006.01)*

(21) Application number: **18178709.4**

(22) Date of filing: **20.06.2018**

(54) **DETERGENT COMPOSITION**

REINIGUNGSMITTELZUSAMMENSETZUNG

COMPOSITION DE DÉTERGENT

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **13.11.2017 EP 17201300**

(43) Date of publication of application:
**15.05.2019 Bulletin 2019/20**

(73) Proprietor: **The Procter & Gamble Company**
**Cincinnati, OH 45202 (US)**

(72) Inventors:
- **BETTIOL, Jean-Luc Philippe**
  **1853 Strombeek-Bever (BE)**
- **GONZALES, Denis Alfred**
  **1853 Strombeek-Bever (BE)**
- **VELASQUEZ, Juan Esteban**
  **Cincinnati, Ohio 45202 (US)**
- **GEARY, Nicholas William**
  **Cincinnati, Ohio 45202 (US)**

(74) Representative: **P&G Patent Belgium UK**
**N.V. Procter & Gamble Services Company S.A.**
**Temselaan 100**
**1853 Strombeek-Bever (BE)**

(56) References cited:
**US-A1- 2017 321 161**

- **"Water Soluble Film Flakes Incorporating Functional Ingredients", IP.COM JOURNAL, IP.COM INC., WEST HENRIETTA, NY, US, 2 January 2014 (2014-01-02), XP013160490, ISSN: 1533-0001**

Remarks:
The file contains technical information submitted after the application was filed and not included in this specification

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 3 483 241 B1

## Description

REFERENCE TO A SEQUENCE LISTING

This application contains a Sequence Listing in computer readable form. The computer readable form is incorporated herein by reference.

FIELD OF THE INVENTION

The present invention relates to a detergent composition comprising a surfactant system and one or more diol synthases capable of converting one or more unsaturated fatty acids into one or more oxylipins. The composition provides one or more benefits, including good cleaning particularly good grease emulsification, and long lasting suds especially in presence of greasy soils

BACKGROUND OF THE INVENTION

Detergent compositions should have a good suds profile in particular a long lasting suds profile especially in the presence of greasy soils. Users usually see suds as an indicator of the performance of the detergent composition. Moreover, the user of a detergent composition may also use the suds profile and the appearance of the suds (e.g., density, whiteness) as an indicator that the wash solution still contains active detergent ingredients. This is particularly the case for manual washing, also referred to herein as hand-washing, where the user usually doses the detergent composition depending on the suds remaining and renews the wash solution when the suds subsides or when the suds does not look thick enough. Thus, a detergent composition, particularly a manual wash detergent composition that generates little or low density suds would tend to be replaced by the user more frequently than is necessary. Accordingly, it is desirable for a detergent composition to provide "good sudsing profile", which includes good suds height and density as well as good suds duration during the initial mixing of the detergent with water and/or during the entire washing operation.

Unsaturated fatty acids can be oxidized in the presence of molecular oxygen ($O_2$) by dioxygenases, such as diol synthases, to produce oxylipins. Diol synthases include linoleate diol synthases and oleate diol synthases. The linoleate diol synthase belongs to the family of oxidoreductases. Diol synthases, particularly linoleate diol synthases, have been generally disclosed as a component in combination with a resin for water-soluble film flakes, particularly the use of the film flakes to manufacture water-soluble packaging for single use fabric or dish detergent packets (Water Soluble Film Flakes Incorporating Functional Ingredients, IP.COM Journal, 2 January 2014). US 2017/321161 A1 discloses methods for promoting suds longevity in a washing process for washing soiled articles, comprising the step of: delivering a composition comprising a fatty acid-transforming enzyme to a volume of water to form a wash liquor and immersing the soiled article in the liquor, wherein the fatty acid transforming enzyme can be oleate 10S lipoxygenase. However, the inclusion of diol synthases, particularly linoleate diol synthases and/or oleate diol synthases in the context of liquid hand dishwashing detergent compositions for improving sudsing profile, particularly increased suds longevity especially in the presence of greasy soils, has not been disclosed.

Accordingly, the need remains for an improved liquid detergent composition comprising diol synthases and a specific surfactant system, which provides a good sudsing profile, in particular enhanced suds boosting and/or increased suds longevity, especially in the presence of greasy soils. The need also exists for an improved detergent composition, when used in a manual-washing process, the composition preferably also provides a pleasant washing experience, *i. e,* good feel on the user's hands during the wash. Preferably the detergent compositions are also easy to rinse. Further it is desirous that the improved detergent composition is stable and will not phase separate, resulting in greater shelf-life of the product. Preferably in addition, the composition provides a good finish to the washed items. There is also the desire to reduce the amount of surfactants without negatively impacting sudsing nor grease cleaning and emulsification profile. Thus, there is the need to find new compositions that improve cleaning and suds longevity in hand washing conditions.

It has been found that some types of soil, in particular greasy soils comprising unsaturated fatty acids, act as a suds suppressor, triggering consumers to replace the product more frequently than is necessary. As such there is a need to provide detergent compositions with desirable suds properties, especially in the presence of greasy soils, even more in the presence of greasy soils comprising unsaturated fatty acids, and that at the same time provide good soil and grease removal. Surprisingly, the Applicant discovered that some or all of the above-mentioned needs can be at least partially fulfilled through the improved detergent composition comprising one or more diol synthases and a specific surfactant system.

## SUMMARY OF THE INVENTION

The present invention meets one or more of these needs based on the surprising discovery that by formulating a detergent composition comprising one or more diol synthases capable of converting one or more unsaturated fatty acids into one or more oxylipins, and a surfactant system, such a composition exhibits good sudsing profile, particularly desirable suds volume and/or sustained suds stabilization, especially in the presence of greasy soils. It also provides good grease cleaning and emulsification benefits.

According to the present invention there is provided a detergent composition comprising: a) one or more diol synthases capable of converting one or more unsaturated fatty acids into one or more oxylipins and b) a surfactant system. Preferably the diol synthases are selected from the group consisting of linoleate diol synthases, oleate diol synthases, and mixtures thereof. More preferably the diol synthases are selected from the group consisting of: linoleate diol synthases (EC 1.13.11.44), 5,8-linoleate diol synthases (EC 1.13.11.60 and EC 5.4.4.5), 7,8-linoleate diol synthases (EC 1.13.11.60 and EC 5.4.4.6), 9,14-linoleate diol synthases (EC 1.13.11.B1), 8,11-linoleate diol synthases, oleate diol synthases, and mixtures thereof, even more preferably 5,8-linoleate diol synthases (EC 1.13.11.60 and EC 5.4.4.5), and mixtures thereof. The surfactant system comprises one or more anionic surfactants and one or more co-surfactants selected from the group consisting of amphoteric surfactant, zwitterionic surfactant, and mixtures thereof, wherein the weight ratio of said anionic surfactants to said co-surfactants is less than 9:1, more preferably from 5:1 to 1:1, more preferably from 4:1 to 2:1.

The detergent composition is a liquid manual dishwashing composition. Preferably the composition of the invention provides good cleaning and good suds profile, especially in the presence of greasy soils.

According to the present invention, there is provided a method of manually washing dishware comprising the steps of delivering a detergent composition of the invention into a volume of water to form a wash solution and immersing the dishware in said solution.

According to the present invention, there is provided a method of manually washing dishware comprising the steps of: a) delivering the detergent composition of the invention to a volume of water to form a wash liquor; and b) immersing the soiled articles into said wash liquor. When the composition of the invention is used according to this method a good sudsing profile, with a long lasting effect is achieved.

Yet another disclosure not according to the present invention relates to a method of manually washing dishware comprising: i) delivering a composition as described herein above onto the dishware or a cleaning implement; ii) cleaning the dishware with the composition in the presence of water; and iii) optionally, rinsing the dishware. Preferably, the composition of the present invention is used in neat form (*i.e.,* direct application) since greater benefits in terms of grease cleaning are obtained when the composition is directly applied on the soiled surface or on a cleaning implement, such as a sponge, to be used to clean the soiled surface.

The composition of the invention provides good cleaning and good suds profile, especially in the presence of greasy soils. The compositions of the present invention have been found to be particularly useful in the presence of unsaturated fatty acids or salts thereof. These may be present either in the soil or released to the wash liquor during removal of soils which break down to generate unsaturated fatty acids, such as body soils and cooking oils such as olive oil.

The manual washing is dishwashing and the soiled articles comprise soiled dishware. As used herein, "dishware" includes cookware and tableware.

The elements of the composition of the invention described in relation to the first aspect of the invention apply *mutatis mutandis* to the other aspects of the invention.

These and other features, aspects and advantages of the present invention will become evident to those skilled in the art from the detailed description which follows.

## DETAILED DESCRIPTION OF THE INVENTION

### Definitions

As used herein, the articles "a" and "an" when used in a claim, are understood to mean one or more of what is claimed or described.

As used herein, the term "substantially free of' or "substantially free from" means that the indicated material is present in an amount of no more than about 5 wt%, preferably no more than about 2%, and more preferably no more than about 1 wt% by weight of the composition.

As used therein, the term "essentially free of' or "essentially free from" means that the indicated material is present in an amount of no more than about 0.1 wt% by weight of the composition, or preferably not present at an analytically detectible level in such composition. It may include compositions in which the indicated material is present only as an impurity of one or more of the materials deliberately added to such compositions.

As used herein the term "diol synthase" refers to an enzyme that is capable of converting at least one unsaturated

fatty acid into a mixture of oxylipins, comprising at least a dihydroxy fatty acid.

As used herein the phrase "detergent composition" refers to compositions and formulations designed for cleaning soiled surfaces. Such compositions include dish-washing compositions.

As used herein the term "improved suds longevity" means an increase in the duration of visible suds in a washing process cleaning soiled articles using the composition comprising one or more diol synthase enzymes capable of converting one or more unsaturated fatty acids into one or more oxylipins, compared with the suds longevity provided by the same composition and process in the absence of the one or more diol synthase enzymes capable of converting one or more unsaturated fatty acids into one or more oxylipins.

As used herein, the term "soiled surfaces" refers to soiled dishware.

As used herein, the term "variant" of diol synthase means an amino acid sequence when the diol synthase is modified by, or at, one or more amino acids (for example 1, 2, 3, 4, 5, 6, 7, 8, 9 or 10 or more amino acid modifications) selected from substitutions, insertions, deletions and combinations thereof. The variant may have "conservative" substitutions, wherein a substituted amino acid has similar structural or chemical properties to the amino acid that replaces it, for example, replacement of leucine with isoleucine. A variant may have "non-conservative" changes, for example, replacement of a glycine with a tryptophan. Variants may also include sequences with amino acid deletions or insertions, or both. Guidance in determining which amino acid residues may be substituted, inserted, or deleted without abolishing the activity of the protein may be found using computer programs well known in the art. Variants may also include truncated forms derived from a wild-type surface active protein, such as for example, a protein with a truncated N-terminus. Variants may also include forms derived by adding an extra amino acid sequence to a wild-type protein, such as for example, an N-terminal tag, a C-terminal tag or an insertion in the middle of the protein sequence.

As used herein, the term "water hardness" or "hardness" means uncomplexed cation ions (*i.e.,* $Ca^{2+}$ or $Mg^{2+}$) present in water that have the potential to precipitate with anionic surfactants or any other anionically charged detergent actives under alkaline conditions, and thereby diminishing the surfactancy and cleaning capacity of surfactants. Further, the terms "high water hardness" and "elevated water hardness" can be used interchangeably and are relative terms for the purposes of the present invention, and are intended to include, but not limited to, a hardness level containing at least 12 grams of calcium ion per gallon water (gpg, "American grain hardness" units).

## Detergent Composition

The Applicant has surprisingly discovered a new way of formulating a detergent composition that is a liquid manual dishwashing detergent composition to provide good sudsing profile, particularly increased suds longevity, preferably in the presence of greasy soil. Essentially, the solution is to formulate a specific surfactant system which synergizes with diol synthases enzyme. In fact, the Applicant has discovered that when the specific surfactant system is co-formulated with the diol synthases, improved suds longevity, especially in the presence of greasy soil is obtained. While not wishing to be bound by theory, it is believed that the specific surfactant system containing the diol synthases may more easily go to the air-water interface and remain in the suds film lamellae due to its specific physical properties. As a result, the longevity of the suds is increased due to the surfactant-diol synthases interactions that form strong continuous interfacial membrane that stabilizes the suds particles at the air-water interface.

In addition, the Applicant has discovered that the diol synthases and specific surfactant system in the detergent composition of the present invention also provides enhanced suds boosting benefit. Preferably, the detergent composition of the invention also provides good grease removal, in particular good uncooked grease removal.

The detergent composition is a liquid manual dishwashing detergent composition. It typically contains from 30% to 95%, preferably from 40% to 90%, more preferably from 50% to 85% by weight of the composition of a liquid carrier in which the other essential and optional components are dissolved, dispersed or suspended. One preferred component of the liquid carrier is water.

Preferably the pH of the detergent composition of the invention, measured as a 10% product concentration in demineralized water at 20°C, is adjusted to between 3 and 14, more preferably between 4 and 13, more preferably between 6 and 12 and most preferably between 8 and 10. The pH of the detergent composition can be adjusted using pH modifying ingredients known in the art.

## Diol Synthases

Unexpectedly, the Applicants found that diol synthases are capable of producing a more stable hence longer lasting sudsing profile in detergent wash solutions comprising oily and/or greasy soils. Not wishing to be bound by theory, the Applicants believe that the increased sudsing benefits are due to the conversion of unsaturated fatty acids into oxygenated fatty acids with enhanced surfactant properties and decreased tendency to precipitation in the presence of hard water.

Diol synthases are fusion proteins and at least two different classes have been reported in the art. The class I

fungal diol synthases, also referred as Psi-factor producing oxygenases (Ppo), contain an N-terminal dioxygenase (DOX) domain and a C-terminal cytochrome P450/hydroperoxide isomerase (HPI) domain; while the class II bacterial diol synthases consists of an N-terminal allene oxide synthase (AOS) domain and a C-terminal dioxygenase (DOX) domain. In the first step of the reaction, the unsaturated fatty acid (*e.g.,* linoleic acid) is converted to a hydroperoxy fatty acid derivative by the DOX domain, frequently followed by isomerization to a dihydroxy fatty acid by the HPI domain or the AOS domain.

Several amino acid residues are conserved in class I diol synthases. For example, in the DOX domain, the YR(W/F)H motif containing the catalytic Tyr is highly conserved. In the HPI domain, the SRS-4 region motif ANQXQ, the EXXG motif, and the heme signature motif (G/E)(P/A)HX(C/S)(L/F/G) are also frequently found in diol synthases. The His and Cys residues of the heme motif and the last Asn of the SRS-4 region have been associated with the isomerization step and the type of oxylipins generated during the reaction.

The present invention comprises different groups of diol synthases, including linoleate diol synthases and oleate diol synthases. Even though oleate diol synthases typically recognize oleic acid/oleate as the preferred substrate and linoleate diol synthases recognize linoleic acid/linoleate as the preferred substrate, the terms "oleate diol synthase" and "linoleate diol synthase" are used interchangeably herein and do not suggest any substrate specificity, *i.e.,* the respective enzymes can act on both substrates.

Based on the reaction products, several diol synthases have been characterized: 5,8-linoleate diol synthases (5,8-LDS), 7,8-linoleate diol synthases (7,8-LDS), 8,11-linoleate diol synthases (8,11-LDS), and 9,14-linoleate diol synthases (9,14-LDS). Although they are frequently referred as linoleate diol synthases, they can convert substrates different than linoleate (e.g., oleate).

Non-limiting examples of 5,8-LDS include *Emericella nidulans* PpoA (SEQ ID NO: 1), *Aspergillus fumigatus* PpoA (SEQ ID NO: 2), *Aspergillus terreus* PpoA (SEQ ID NO: 3), *Aspergillus kawachii* PpoA (SEQ ID NO: 4), *Aspergillus clavatus* PpoA (SEQ ID NO: 5), *Aspergillus niger* PpoA (SEQ ID NO: 6). For instance, *A. nidulans* PpoA (SEQ ID NO: 1) converts C16 and C18 unsaturated fatty acids, including palmitoleic acid, oleic acid, linoleic acid, and $\alpha$-linolenic acid, into 5,8-dihydroxy fatty acids, and converts C20 unsaturated fatty acids, including eicosenoic acid, eicosadienoic acid and eicosatrienoic acid, to 7,10-dihydroxy fatty acids (Brodhun, F., et al. (2009), J. Biol. Chem. 284(18): 11792-11805 and Jerneren, F., et al. (2010), Biochim. Biophys. Acta, Mol. Cell Biol. Lipids 1801(4): 503-507).

Non-limiting examples of 7,8-LDS include *Glomerella cingulate* 7,8-LDS (SEQ ID NO: 7), *Gaeumannomyces graminis* 7,8-LDS (SEQ ID NO: 8), and *Magnaporthe oryzae* 7,8-LDS (SEQ ID NO: 9). For instance, *G. graminis* 7,8-LDS converts oleic acid, linoleic acid, and $\alpha$-linolenic acid into 7,8-dihydroxy fatty acids as major products, but this enzyme does not show activity when $\gamma$-linolenic acid, eicosatrienoic acid, arachidonis acid, and eicosapentaenoic acid are used as substrates. Similarly, *G. cingulate* 7,8-LDS converts palmitoleic acid, oleic acid, linoleic acid, and $\alpha$-linolenic acid to 7,8-dihydroxy fatty acids, but also processes eicosenoic acid, eicosadienoic acid, dihomo-$\gamma$-linolenic acid, and arachidonic acid to 8-hydroperoxy fatty acids by using only the N-terminal dioxygenase domain (Seo, M.-J., et al. (2016), Appl. Microbiol. Biotechnol. 100(7): 3087-3099).

Non-limiting examples of 8,11 -LDS include *Penicillium oxalicum* 8,11-LDS (SEQ ID NO: 10), *Penicillium chrysogenum* 8,11-LDS (SEQ ID NO: 11) and *Penicillium digitatum* 8,11-LDS (SEQ ID NO: 12). For instance, *Penicillium chrysogenum* 8,11-LDS converts linoleic acid and $\alpha$-linolenic acid to 8,11-dihydroxy fatty acids, whereas oleic acid and palmitoleic acid are converted to 8-hydroxy fatty acids. Interestingly, the Q898E or Q898L variants of G. *cingulate* 7,8-LDS also converts linoleic acid to the 8,11-dihydroxy fatty acid (Shin, K.-C., et al. (2016), J. Lipid Res. 57(2): 207-218).

Non-limiting examples of 9,14-LDS include *Nostoc* sp. PCC 7120 9,14-LDS (SEQ ID NO: 13) and *Acaryochloris marina* putative 9,14-LDS (SEQ ID NO: 14) and *Nostoc* sp. NIES-4103 putative 9,14-LDS (SEQ ID NO: 15). *Nostoc* sp. PCC 7120 9,14-LDS converts linoleic acid into the 9,14-dihydroxy fatty acid as the main product with 9,10-dihydroxy, 8-11-dihydroxy, and 9-hydroxy fatty acids; $\alpha$-linolenic acid to 9,16-dihydroxy, 9,13-dihidroxy, and 9-hydroxy fatty acids; and $\gamma$-linolenic acid to 9,14-dihidroxy and 9-hydroxy fatty acids (Lang, I., et al. (2008), Biochem. J. 410(2): 347-357).

Other dihydroxylation patterns have been observed in nature, but the enzymes have not been characterized yet. For example, *Bacillus megaterium* ALA2 and *Clavibacter* sp. ALA2 produce 12,13-dihydroxy fatty acids from linoleic acid. In another example, the red alga *Gracilariopsis lemaneiformis* produces 9,10-dihydroxy, 12,12-dihydroxy, and 12-hydroxy fatty acids from arachidonic acid. Finally, *Leptomitus lacteus* converts linoleic acid to 8,11-dihydroxy, 11,16-dihydroxy, 11,17-dihydroxy, 7-hydroxy, and 8-hydroxy fatty acids. Thus, diol synthases, can be used to convert unsaturated fatty acids into different hydroxylated products (Kim, K.-R. and D.-K. Oh (2013), Biotechnol. Adv. 31(8): 1473-1485).

The diol synthases are capable of transforming one or more unsaturated fatty acids into one or more oxylipins and are preferably present in the composition in an amount of from 0.0001 wt% to 1 wt% by weight of the cleaning composition based on active protein. More preferably the diol synthases may be present in the amounts from 0.001 wt% to 0.2 wt% by weight of the cleaning composition based on active protein.

Preferably the diol synthases are selected from the group consisting of: linoleate diol synthases (EC 1.13.11.44), 5,8-linoleate diol synthases (EC 1.13.11.60 and EC 5.4.4.5), 7,8-linoleate diol synthases (EC 1.13.11.60 and EC 5.4.4.6), 9,14-linoleate diol synthases (EC 1.13.11.B1), 8,11-linoleate diol synthases, oleate diol synthases, and mixtures thereof.

Preferably the diol synthases have at least 60%, preferably at least 70%, preferably at least 80%, preferably at least 85%, preferably at least 90%, preferably at least 95%, preferably at least 98% or preferably even 100% identity as calculated over the entire length of the sequence aligned against the entire length of at least one reference sequence of the wild-type diol synthases selected from the group consisting of *Emericella nidulans* PpoA (SEQ ID NO: 1), *Aspergillus fumigatus* PpoA (SEQ ID NO: 2), *Aspergillus terreus* PpoA (SEQ ID NO: 3), *Aspergillus kawachii* PpoA (SEQ ID NO: 4), *Aspergillus clavatus* PpoA (SEQ ID NO: 5), *Aspergillus niger* PpoA (SEQ ID NO: 6), *Glomerella cingulate* 7,8-LDS (SEQ ID NO: 7), *Gaeumannomyces graminis* 7,8-LDS (SEQ ID NO: 8), *Magnaporthe oryzae* 7,8-LDS (SEQ ID NO: 9), *Penicillium oxalicum* 8,11-LDS (SEQ ID NO: 10), *Penicillium chrysogenum* 8,11-LDS (SEQ ID NO: 11) and *Penicillium digitatum* 8,11-LDS (SEQ ID NO: 12), *Nostoc* sp. PCC 7120 9,14-LDS (SEQ ID NO: 13), *Acaryochloris marina* putative 9,14-LDS (SEQ ID NO: 14) and *Nostoc* sp. NIES-4103 putative 9,14-LDS (SEQ ID NO: 15).

Preferably the diol synthases are 5,8-linoleate diol synthases (EC 1.13.11.60 and EC 5.4.4.5). Preferably the 5,8-linoleate diol synthases (EC 1.13.11.60 and EC 5.4.4.5) have at least 60%, preferably at least 70%, preferably at least 80%, preferably at least 85%, preferably at least 90%, preferably at least 95%, preferably at least 98% or preferably even 100% identity as calculated over the entire length of the sequence aligned against the entire length of at least one reference sequence of the wild-type diol synthases selected from the group consisting of *Emericella nidulans* PpoA (SEQ ID NO: 1), *Aspergillus fumigatus* PpoA (SEQ ID NO: 2), *Aspergillus terreus* PpoA (SEQ ID NO: 3), *Aspergillus kawachii* PpoA (SEQ ID NO: 4), *Aspergillus clavatus* PpoA (SEQ ID NO: 5), *Aspergillus niger* PpoA (SEQ ID NO: 6), and mixtures thereof, more preferably *Emericella nidulans* PpoA (SEQ ID NO: 1).

The present invention also includes variants of diol synthases. Variants of diol synthases, as used herein, include a sequence resulting when a wild-type protein of the respective protein is modified by, or at, one or more amino acids (for example 1, 2, 5 or 10 amino acids). The invention also includes variants in the form of truncated forms derived from a wild-type diol synthase, such as a protein with a truncated N-terminus or a truncated C-terminus. Some diol synthases may include an N-terminal signal peptide that is likely removed upon secretion by the cell. The present invention includes variants without the N-terminal signal peptide. Bioinformatic tools, such as SignalP ver 4.1 (Petersen TN., Brunak S., von Heijne G. and Nielsen H. (2011), Nature Methods, 8:785-786), can be used to predict the existence and length of such signal peptides. The invention also includes variants derived by adding an extra amino acid sequence to a wild-type protein, such as for example, an N-terminal tag, a C-terminal tag or an insertion in the middle of the protein sequence. Non-limiting examples of tags are maltose binding protein (MBP) tag, glutathione S-transferase (GST) tag, thioredoxin (Trx) tag, His-tag, and any other tags known by those skilled in art. Tags can be used to improve solubility and expression levels during fermentation or as a handle for enzyme purification.

It is important that variants of diol synthases retain and preferably improve the ability of the wild-type protein to catalyze the conversion of the unsaturated fatty acids. Some performance drop in a given property of variants may of course be tolerated, but the variants should retain and preferably improve suitable properties for the relevant application for which they are intended. Screening of variants of one of the wild-types can be used to identify whether they retain and preferably improve appropriate properties.

The variants may have "conservative" substitutions. Suitable examples of conservative substitution includes one conservative substitution in the enzyme, such as a conservative substitution in SEQ ID NO: 1, SEQ ID NO: 2, SEQ ID NO: 3, SEQ ID NO: 4, SEQ ID NO: 5, SEQ ID NO: 6, SEQ ID NO: 7, SEQ ID NO: 8, SEQ ID NO: 9, SEQ ID NO: 10, SEQ ID NO: 11, SEQ ID NO: 12, SEQ ID NO: 13, SEQ ID NO: 14, or SEQ ID NO: 15. Other suitable examples include 10 or fewer conservative substitutions in the protein, such as five or fewer. An enzyme of the invention may therefore include 1, 2, 3, 4, 5, 6, 7, 8, 9, 10 or more conservative substitutions. An enzyme can be produced to contain one or more conservative substitutions by manipulating the nucleotide sequence that encodes that enzyme using, for example, standard procedures such as site-directed mutagenesis or PCR.

Examples of amino acids which may be substituted for an original amino acid in an enzyme and which are regarded as conservative substitutions include: Ser for Ala; Lys for Arg; Gln or His for Asn; Glu for Asp; Asn for Gln; Asp for Glu; Pro for Gly; Asn or Gln for His; Leu or Val for Ile; Ile or Val for Leu; Arg or Gln for Lys; Leu or Ile for Met; Met, Leu or Tyr for Phe; Thr for Ser; Ser for Thr; Tyr for Trp; Trp or Phe for Tyr; and Ile or Leu for Val.

A variant includes a "modified enzyme" or a "mutant enzyme" which encompasses proteins having at least one substitution, insertion, and/or deletion of an amino acid. A modified enzyme may have 1, 2, 3, 4, 5, 6, 7, 8, 9 or 10 or more amino acid modifications (selected from substitutions, insertions, deletions and combinations thereof).

Enzymes can be modified by a variety of chemical techniques to produce derivatives having essentially the same or preferably improved activity as the unmodified enzymes, and optionally having other desirable properties. For example, carboxylic acid groups of the protein, whether carboxyl-terminal or side chain, may be provided in the form of a salt of a pharmaceutically-acceptable cation or esterified, for example to form a C1-C6 alkyl ester, or converted to an amide, for example of formula CONR1R2 wherein R1 and R2 are each independently H or C1-C6 alkyl, or combined to form a heterocyclic ring, such as a 5- or 6-membered ring. Amino groups of the enzyme, whether amino-terminal or side chain, may be in the form of a pharmaceutically-acceptable acid addition salt, such as the HCl, HBr, acetic, benzoic, toluene sulfonic, maleic, tartaric and other organic salts, or may be modified to C1-C20 alkyl or dialkyl amino or further

converted to an amide. Hydroxyl groups of the protein side chains may be converted to alkoxy or ester groups, for example C1-C20 alkoxy or C1-C20 alkyl ester, using well-recognized techniques. Phenyl and phenolic rings of the protein side chains may be substituted with one or more halogen atoms, such as F, Cl, Br or I, or with C1-C20 alkyl, C1-C20 alkoxy, carboxylic acids and esters thereof, or amides of such carboxylic acids. Methylene groups of the protein side chains can be extended to homologous C2-C4 alkylenes. Thiols can be protected with any one of a number of well-recognized protecting groups, such as acetamide groups. Those skilled in the art will also recognize methods for introducing cyclic structures into the proteins of this disclosure to select and provide conformational constraints to the structure that result in enhanced stability.

Identity, or homology, percentages as mentioned herein in respect of the present invention are those that can be calculated with the GAP program, obtainable from GCG (Genetics Computer Group Inc., Madison, WI, USA). Alternatively, a manual alignment can be performed.

For enzyme sequence comparison the following settings can be used: Alignment algorithm: Needleman and Wunsch, J. Mol. Biol. 1970, 48: 443-453. As a comparison matrix for amino acid similarity the Blosum62 matrix is used (Henikoff S. and Henikoff J.G., P.N.A.S. USA 1992, 89: 10915-10919). The following gap scoring parameters are used: Gap penalty: 12, gap length penalty: 2, no penalty for end gaps.

A given sequence is typically compared against the full-length sequence of SEQ ID NO: 1, SEQ ID NO: 2, SEQ ID NO: 3, SEQ ID NO: 4, SEQ ID NO: 5, SEQ ID NO: 6, SEQ ID NO: 7, SEQ ID NO: 8, SEQ ID NO: 9, SEQ ID NO: 10, SEQ ID NO: 11, SEQ ID NO: 12, SEQ ID NO: 13, SEQ ID NO: 14, or SEQ ID NO: 15 to obtain a score.

The diol synthases may be incorporated into the detergent composition *via* an additive particle, such as an enzyme granule or in the form of an encapsulate, or may be added in the form of a liquid formulation.

In particular when the detergent composition comprises a liquid, it may be preferred to incorporate the enzyme *via* an encapsulate. Encapsulating the enzyme promotes the stability of the enzyme in the composition and helps to counteract the effect of any hostile compounds present in the composition, such as bleach, protease, surfactant, chelant, etc.

The diol synthases when present in an additive particle may be the only enzyme in the additive particle or may be present in the additive particle in combination with one or more additional enzymes.

Preferably the composition of the invention may further comprise one or more co-enzymes selected from the group consisting of: fatty-acid peroxidases (EC 1.11.1.3), unspecific peroxygenases (EC 1.11.2.1), plant seed peroxygenases (EC 1.11.2.3), fatty acid peroxygenases (EC1.11.2.4), linoleate 13S-lipoxygenases (EC 1.13.11.12), arachidonate 12-lipoxygenases (E.C. 1.13.11.31), arachidonate 15-lipoxygenase (EC 1.13.11.33), arachidonate 5-lipoxygenases (EC 1.13.11.34), arachidonate 8-lipoxygenases (EC 1.13.11.40), linoleate 11-lipoxygenases (EC 1.13.11.45), linoleate 9S-lipoxygenases (EC 1.13.11.58), linoleate 8R-lipoxygenases (EC 1.13.11.60), linoleate 9R-lipoxygenases (EC 1.13.11.61), linoleate 10R-lipoxygenases (EC 1.13.11.62), oleate 10S-lipoxygenases (EC 1.13.11.77), linoleate 9/13-lipoxygenases (EC 1.13.11.B6), linoleate 10S-lipoxygenases, unspecific monooxygenase (EC 1.14.14.1), alkane 1-monooxygenase (EC 1.14.15.3), oleate 12-hydroxylases (EC 1.14.18.4), cyclooxygenases (EC 1.14.99.1), fatty acid amide hydrolase (EC 3.5.1.99), oleate hydratases (EC 4.2.1.53), allene oxide synthases (EC 4.2.1.92), hydroperoxide isomerases (EC 4.2.1.92, EC 5.3.99.1, EC 5.4.4.5, EC 5.4.4.6), hydroperoxide lyases (EC 4.2.1.92), hydroperoxide dehydratases (EC 4.2.1.92), divinyl ether synthases (EC 4.2.1.121, EC 4.2.1.B8, EC 4.2.1.B9), linoleate isomerases (EC 5.2.1.5), linoleate (10E,12Z)-isomerases (EC 5.3.3.B2), 9,12-octadecadienoate 8-hydroperoxide 8R-isomerases (EC 5.4.4.5), 9,12-octadecadienoate 8-hydroperoxide 8S-isomerases (EC 5.4.4.6), 7,10-hydroperoxide diol synthases, fatty acid decarboxylases (OleT-like), iron-dependent decarboxylases (UndA-like), epoxy alcohol synthases, other CYP450 monooxygenases, amylases, lipases, proteases, cellulases, and mixtures thereof.

Preferably the co-enzymes are linoleate 9S-lipoxygenases (EC 1.13.11.58), linoleate 8R-lipoxygenases (EC 1.13.11.60), linoleate 9R-lipoxygenases (EC 1.13.11.61), linoleate 10R-lipoxygenases (EC 1.13.11.62), oleate 10S-lipoxygenases (EC 1.13.11.77), linoleate 9/13-lipoxygenases (EC 1.13.11.B6), linoleate 10S-lipoxygenases, oleate hydratases (EC 4.2.1.53), hydroperoxide isomerases (EC 4.2.1.92, EC 5.3.99.1, EC 5.4.4.5, EC 5.4.4.6), hydroperoxide lyases (EC 4.2.1.92), hydroperoxide dehydratases (EC 4.2.1.92), 9,12-octadecadienoate 8-hydroperoxide 8R-isomerases (EC 5.4.4.5), 9,12-octadecadienoate 8-hydroperoxide 8S-isomerases (EC 5.4.4.6), 7,10-hydroperoxide diol synthases, fatty acid decarboxylases (OleT-like), iron-dependent decarboxylases (UndA-like), and mixture therefore, more preferably oleate 10S-lipoxygenases (EC 1.13.11.77), 9,12-octadecadienoate 8-hydroperoxide 8R-isomerases (EC 5.4.4.5), 9,12-octadecadienoate 8-hydroperoxide 8S-isomerases (EC 5.4.4.6), 7,10-hydroperoxide diol synthases, and mixtures thereof.

Other suitable additional co-enzymes include protease such as metalloprotease or alkaline serine protease, such as subtilisin, mannanase, pectinase, DNAse, oxidoreductase, peroxidases, lipases, phospholipases, cellobiohydrolases, cellobiose dehydrogenases, esterases, cutinases, pectinases, pectate lyases, keratinases, reductases, oxidases, phenoloxidases, lipoxygenases, ligninases, pullulanases, tannases, pentosanases, glucanases, arabinosidases, hyaluronidase, chondroitinase, laccases, amylases, and mixtures thereof.

Preferably the unsaturated fatty acids are selected from the group consisting of: mono unsaturated fatty acids,

di unsaturated fatty acids, tri unsaturated fatty acids, tetra unsaturated fatty acids, penta unsaturated fatty acids, hexa unsaturated fatty acids, and mixtures thereof; preferably myristoleic acid, palmitoleic acid, sapienic acid, oleic acid, elaidic acid, vaccenic acid, linoleic acid, linoelaidic acid, α-linolenic acid, γ-linolenic acid, gadoleic acid, α-eleostearic acid, β-eleostearic acid, ricinoleic acid, eicosenic acid, arachidonic acid, eicosapentaenoic acid, erucic acid, docosadienoic acid, docosahexaenoic acid, tetracosenoic acid, and mixtures thereof; preferably palmitoleic acid, oleic acid, linoleic acid, α-linolenic acid, γ-linolenic acid, and mixtures thereof; more preferably oleic acid.

Preferably the oxylipins are selected from the group consisting of: hydroperoxy fatty acids, monohydroxy fatty acids, dihydroxy fatty acids, trihydroxyfatty acids, polyhydroxy fatty acids, their derivatives, and mixtures thereof; preferably said oxylipins are selected from the group consisting of: unsaturated monohydroxy fatty acids, unsaturated dihydroxy fatty acids, unsaturated 8R-hydroperoxy fatty acids, unsaturated 9R-hydroperoxy fatty acids, their derivatives, and mixtures thereof; more preferably unsaturated dihydroxy fatty acids; even more preferably 5,8-dihydroxy oleic acid.

Where necessary, the composition comprises, provides access to or forms *in situ* any additional substrate necessary for the effective functioning of the enzyme. For example, molecular oxygen is provided as an additional substrate for diol synthases; water for oleate hydratases; and hydrogen peroxide for peroxidases, peroxygenase, lipoxygenases, and/or fatty acid decarboxylases (OleT-like).

Surfactant System

Preferably the detergent composition of the invention comprises from 1% to 60%, preferably from 5% to 50%, more preferably from 8% to 40%, by weight of the total composition of a surfactant system.

The surfactant system of the composition of the present invention comprises an anionic surfactant. Preferably, the surfactant system for the cleaning composition of the present invention comprises from 1% to 40%, preferably 6% to 35%, more preferably 8% to 30% by weight of the total composition of an anionic surfactant. The anionic surfactant can be any anionic cleaning surfactant, preferably selected from sulfate and/or sulfonate anionic surfactants. HLAS (linear alkylbenzene sulfonate) would be the most preferred sulfonate anionic surfactant. Especially preferred anionic surfactant is selected from the group consisting of alkyl sulfate, alkyl alkoxy sufate and mixtures thereof, and preferably wherein the alkyl alkoxy sulfate is an alkyl ethoxy sulfate. Preferred anionic surfactant is a combination of alkyl sulfates and alkyl ethoxy sulfates with a combined average ethoxylation degree of less than 5, preferably less than 3, more preferably less than 2 and more than 0.5 and an average level of branching of from 5% to 40%, more preferably from 10% to 35%, and even more preferably from 20% to 30%.

The average alkoxylation degree is the mol average alkoxylation degree of all the components of the mixture (*i.e.,* mol average alkoxylation degree) of the anionic surfactant. In the mol average alkoxylation degree calculation the weight of sulfate anionic surfactant components not having alkoxylate groups should also be included.

$$\text{Mol average alkoxylation degree} = (x1 * \text{alkoxylation degree of surfactant } 1 + x2 * \text{alkoxylation degree of surfactant } 2 + \ldots.) / (x1 + x2 + \ldots.)$$

wherein x1, x2, ... are the number of moles of each sulfate anionic surfactant of the mixture and alkoxylation degree is the number of alkoxy groups in each sulfate anionic surfactant.

The average level of branching is the weight average % of branching and it is defined according to the following formula:

$$\text{Weight average of branching (\%)} = [(x1 * \text{wt\% branched alcohol 1 in alcohol } 1 + x2 * \text{wt\% branched alcohol 2 in alcohol } 2 + \ldots.) / (x1 + x2 + \ldots.)] * 100$$

wherein x1, x2, ... are the weight in grams of each alcohol in the total alcohol mixture of the alcohols which were used as starting material for the anionic surfactant for the composition of the invention. In the weight average branching degree calculation the weight of anionic surfactant components not having branched groups should also be included.

Suitable examples of commercially available sulfates include, those based on Neodol alcohols ex the Shell company, Lial - Isalchem and Safol ex the Sasol company, natural alcohols ex The Procter & Gamble Chemicals company. Suitable sulfonate surfactants for use herein include water-soluble salts of C8-C18 alkyl or hydroxyalkyl sulfonates; C11-C18 alkyl benzene sulfonates (LAS), modified alkylbenzene sulfonate (MLAS); methyl ester sulfonate (MES); and alpha-olefin sulfonate (AOS). Those also include the paraffin sulfonates may be monosulfonates and/or disulfonates, obtained by sulfonating paraffins of 10 to 20 carbon atoms. The sulfonate surfactant also include the alkyl

glyceryl sulfonate surfactants.

The surfactant system of the composition of the present invention further comprises a primary co-surfactant system, wherein the primary co-surfactant system is selected from the group consisting of amphoteric surfactant, zwitterionic surfactant, and mixtures thereof. Preferably, the surfactant system for the composition of the present invention comprises from 0.5% to 15%, preferably from 1% to 12%, more preferably from 2% to 10%, by weight of the total composition of a primary co-surfactant system.

Preferably, the primary co-surfactant system is an amphoteric surfactant. Preferably, the primary co-surfactant system is an amine oxide surfactant, and wherein the composition comprises anionic surfactant and amine oxide surfactant in a weight ratio of less than 9:1, more preferably from 5:1 to 1:1, more preferably from 4:1 to 2:1, preferably from 3:1 to 2.5:1. Preferred amine oxides are alkyl dimethyl amine oxide or alkyl amido propyl dimethyl amine oxide, more preferably alkyl dimethyl amine oxide and especially coco dimethyl amino oxide. Amine oxide may have a linear or branched alkyl moiety.

Optionally the amine oxide surfactant is a mixture of amine oxides comprising a low-cut amine oxide and a mid-cut amine oxide. The amine oxide of the composition of the invention then comprises:

a) from 10% to 45% by weight of the amine oxide of low-cut amine oxide of formula R1R2R3AO wherein R1 and R2 are independently selected from hydrogen, C1-C4 alkyls or mixtures thereof, and R3 is selected from C10 alkyls or mixtures thereof; and

b) from 55% to 90% by weight of the amine oxide of mid-cut amine oxide of formula R4R5R6AO wherein R4 and R5 are independently selected from hydrogen, C1-C4 alkyls or mixtures thereof, and R6 is selected from C12-C16 alkyls or mixtures thereof

In a preferred low-cut amine oxide for use herein R3 is n-decyl. In another preferred low-cut amine oxide for use herein R1 and R2 are both methyl. In an especially preferred low-cut amine oxide for use herein R1 and R2 are both methyl and R3 is n-decyl.

Preferably, the amine oxide comprises less than 5%, more preferably less than 3%, by weight of the amine oxide of an amine oxide of formula R7R8R9AO wherein R7 and R8 are selected from hydrogen, C1-C4 alkyls and mixtures thereof and wherein R9 is selected from C8 alkyls and mixtures thereof. Compositions comprising R7R8R9AO tend to be unstable and do not provide very suds mileage.

Preferably the primary co-surfactant system is a zwitterionic surfactant. Suitable exampes of zwitterionic surfactants include betaines, such as alkyl betaines, alkylamidobetaine, amidazoliniumbetaine, sulfobetaine (INCI Sultaines) as well as the Phosphobetaine and preferably meets formula (I):

R1-[CO-X (CH2)n]x-N+(R2)(R3)-(CH2)m-[CH(OH)-CH2]y-Y- (I)

wherein

R1 is a saturated or unsaturated C6-22 alkyl residue, preferably C8-18 alkyl residue, in particular a saturated C10-16 alkyl residue, for example a saturated C12-14 alkyl residue;
X is NH, NR4 with C1-4 Alkyl residue R4, O or S;
n is a number from 1 to 10, preferably 2 to 5, in particular 3;
x is 0 or 1, preferably 1;
R2 and R3 are independently a C1-4 alkyl residue, potentially hydroxy substituted such as a hydroxyethyl, preferably a methyl;
m is a number from 1 to 4, in particular 1, 2 or 3;
y is 0 or 1; and
Y is COO, SO3, OPO(OR5)O or P(O)(OR5)O, whereby R5 is a hydrogen atom H or a C1-4 alkyl residue.

Preferred betaines are the alkyl betaines of the formula (Ia), the alkyl amido propyl betaine of the formula (Ib), the Sulfo betaines of the formula (Ic), and the Amido sulfobetaine of the formula (Id);

R1-N+(CH3)2-CH2COO- (Ia)

R1-CO-NH(CH2)3-N+(CH3)2-CH2COO- (Ib)

R1-N+(CH3)2-CH2CH(OH)CH2SO3- (Ic)

R1-CO-NH-(CH2)3-N+(CH3)2-CH2CH(OH)CH2SO3- (Id)

in which R1 has the same meaning as in formula (I). Particularly preferred betaines are the Carbobetaine [wherein Y-=COO-], in particular the Carbobetaine of the formula (Ia) and (Ib), more preferred are the Alkylamidobetaine of the formula (Ib). A preferred betaine is, for example, Cocoamidopropylbetaine.

Preferably the surfactant system of the composition of the present invention further comprises from 0.1% to 10% by weight of the total composition of a secondary co-surfactant system preferably comprising a non-ionic surfactant. Suitable non-ionic surfactants include the condensation products of aliphatic alcohols with from 1 to 25 moles of ethylene oxide. The alkyl chain of the aliphatic alcohol can either be straight or branched, primary or secondary, and generally contains from 8 to 22 carbon atoms. Particularly preferred are the condensation products of alcohols having an alkyl group containing from 10 to 18 carbon atoms, preferably from 10 to 15 carbon atoms with from 2 to 18 moles, preferably 2 to 15, more preferably 5-12 of ethylene oxide per mole of alcohol. Highly preferred non-ionic surfactants are the condensation products of guerbet alcohols with from 2 to 18 moles, preferably 2 to 15, more preferably 5-12 of ethylene oxide per mole of alcohol. Preferably, the non-ionic surfactants are an alkyl ethoxylated surfactants, preferably comprising from 9 to 15 carbon atoms in its alkyl chain and from 5 to 12 units of ethylene oxide per mole of alcohol. Other suitable non-ionic surfactants for use herein include fatty alcohol polyglycol ethers, alkylpolyglucosides and fatty acid glucamides, preferably alkylpolyglucosides. Preferably the alkyl polyglucoside surfactant is a C8-C16 alkyl polyglucoside surfactant, preferably a C8-C14 alkyl polyglucoside surfactant, preferably with an average degree of polymerization of between 0.1 and 3, more preferably between 0.5 and 2.5, even more preferably between 1 and 2. Most preferably the alkyl polyglucoside surfactant has an average alkyl carbon chain length between 10 and 16, preferably between 10 and 14, most preferably between 12 and 14, with an average degree of polymerization of between 0.5 and 2.5 preferably between 1 and 2, most preferably between 1.2 and 1.6. C8-C16 alkyl polyglucosides are commercially available from several suppliers (e.g., Simusol® surfactants from Seppic Corporation; and Glucopon® 600 CSUP, Glucopon® 650 EC, Glucopon® 600 CSUP/MB, and Glucopon® 650 EC/MB, from BASF Corporation). Preferably, the composition comprises the anionic surfactant and the non-ionic surfactant in a ratio of from 2:1 to 50:1, preferably 2:1 to 10:1.

## Enzyme Stabilizer

Preferably the composition of the invention comprises an enzyme stabilizer. Suitable enzyme stabilizers may be selected from the group consisting of (a) univalent, bivalent and/or trivalent cations preferably selected from the group of inorganic or organic salts of alkaline earth metals, alkali metals, aluminum, iron, copper and zinc, preferably alkali metals and alkaline earth metals, preferably alkali metal and alkaline earth metal salts with halides, sulfates, sulfites, carbonates, hydrogencarbonates, nitrates, nitrites, phosphates, formates, acetates, propionates, citrates, maleates, tartrates, succinates, oxalates, lactates, and mixtures thereof. In a preferred embodiment the salt is selected from the group consisting of sodium chloride, calcium chloride, potassium chloride, sodium sulfate, potassium sulfate, sodium acetate, potassium acetate, sodium formate, potassium formate, calcium lactate, calcium nitrate and mixtures thereof. Most preferred are salts selected from the group consisting of calcium chloride, potassium chloride, potassium sulfate, sodium acetate, potassium acetate, sodium formate, potassium formate, calcium lactate, calcium nitrate, and mixtures thereof, and in particular potassium salts selected from the group of potassium chloride, potassium sulfate, potassium acetate, potassium formate, potassium propionate, potassium lactate and mixtures thereof. Most preferred are potassium acetate and potassium chloride. Preferred calcium salts are calcium formate, calcium lactate and calcium nitrate including calcium nitrate tetrahydrate. Calcium and sodium formate salts may be preferred. These cations are present at at least 0.01 wt%, preferably at least 0.03 wt%, more preferably at least 0.05 wt%, most preferably at least 0.25 wt% up to 2 wt% or even up to 1 wt% by weight of the total composition. These salts are formulated from 0.1 wt% to 5 wt%, preferably from 0.2 wt% to 4 wt%, more preferably from 0.3 wt% to 3 wt%, most preferably from 0.5 wt% to 2 wt% relative to the total weight of the composition. Further enzyme stabilizers can be selected from the group (b) carbohydrates selected from the group consisting of oligosaccharides, polysaccharides and mixtures thereof, such as a monosaccharide glycerate as described in WO201219844; (c) mass efficient reversible protease inhibitors selected from the group consisting of phenyl boronic acid and derivatives thereof, preferably 4-formyl phenylboronic acid; (d) alcohols such as 1,2-propane diol, propylene glycol; (e) peptide aldehyde stabilizers such as tripeptide aldehydes such as Cbz-Gly-Ala-Tyr-H, or disubstituted alaninamide; (f) carboxylic acids such as phenyl alkyl dicarboxylic acid as described in WO2012/19849 or multiply substituted benzyl carboxylic acid comprising a carboxyl group on at least two carbon atoms of the benzyl radical such as described in WO2012/19848, phthaloyl glutamine acid, phthaloyl asparagine acid, aminophthalic acid and/or an oligoamino-biphenyl-oligocarboxylic acid; and (g) mixtures thereof.

## Additional Enzymes

Preferred compositions of the invention comprise one or more enzymes selected from lipases, proteases, cellulases, amylases and any combination thereof.

Each additional enzyme is typically present in an amount from 0.0001 wt% to 1 wt% (weight of active protein) more preferably from 0.0005 wt% to 0.5 wt%, most preferably 0.005-0.1%. It may be particularly preferred for the compositions of the present invention to additionally comprise a lipase enzyme. Lipases break down fatty ester soils into fatty acids which are then acted upon by the unsaturated fatty acid-transforming enzyme into suds neutral or suds boosting agents.

It may be particularly preferred for the compositions of the present invention to additionally comprise a protease enzyme. Since oleic acid and other foam suppressing unsaturated fatty acids are present in body soils or even human skin, as protease enzyme acts as a skin care agent, or breaks down proteinaceous soils, fatty acids released are broken down, preventing suds suppression.

It may be particularly preferred for the compositions of the present invention to additionally comprise an amylase enzyme. Since oily soils are commonly entrapped in starchy soils, the amylase and unsaturated fatty acid transforming enzymes work synergistically together: fatty acid soils are released by breakdown of starchy soils with amylase, thus, the unsaturated fatty acid transforming enzyme is particularly effective in ensuring there is no negative impact on suds in the wash liquor.

Salt

The composition of the present invention may optionally comprise from 0.01% to 3%, preferably from 0.05% to 2%, more preferably from 0.2% to 1.5%, or most preferably 0.5% to 1%, by weight of the total composition of a salt, preferably a monovalent, divalent inorganic salt or a mixture thereof, preferably sodium chloride. Most preferably the composition alternatively or further comprises a multivalent metal cation in the amount of from 0.01 wt% to 3 wt%, preferably from 0.05% to 2%, more preferably from 0.2% to 1.5%, or most preferably 0.5% to 1% by weight of said composition, preferably said multivalent metal cation is magnesium, aluminium, copper, calcium or iron, more preferably magnesium, most preferably said multivalent salt is magnesium chloride. Without wishing to be bound by theory, it is believed that use of a multivalent cation helps with the formation of protein/ protein, surfactant/ surfactant or hybrid protein/ surfactant network at the oil water and air water interface that is strengthening the suds.

Carbohydrates

Preferably the composition of the present invention comprises one or more carbohydrates selected from the group comprising O-glycan, N-glycan, and mixtures thereof. Preferably the cleaning composition further comprises one or more carbohydrates selected from the group comprising derivatives of glucose, mannose, lactose, galactose, allose, altrose, gulose, idose, talose, fucose, fructose, sorbose, tagatose, psicose, arabinose, ribose, xylose, lyxose, ribulose, and xylulose. More preferably the cleaning composition comprises one or more carbohydrates selected from the group of $\alpha$-glucans and $\beta$-glucans. Glucans are polysaccharides of D-glucose monomers, linked by glycosidic bonds. Non-limiting examples of $\alpha$-glucans are dextran, starch, floridean starch, glycogen, pullulan, and their derivatives. Non-limiting examples of $\beta$-glucans are cellulose, chrysolaminarin, curdlan, laminarin, lentinan, lichenin, oat beta-glucan, pleuran, zymosan, and their derivatives.

Hydrotrope

The composition of the present invention may optionally comprise from 1% to 10%, or preferably from 0.5% to 10%, more preferably from 1% to 6%, or most preferably from 0.1% to 3%, or combinations thereof, by weight of the total composition of a hydrotrope, preferably sodium cumene sulfonate. Other suitable hydrotropes for use herein include anionic-type hydrotropes, particularly sodium, potassium, and ammonium xylene sulfonate, sodium, potassium and ammonium toluene sulfonate, sodium potassium and ammonium cumene sulfonate, and mixtures thereof, as disclosed in U.S. Patent 3,915,903. Preferably the composition of the present invention is isotropic. An isotropic composition is distinguished from oil-in-water emulsions and lamellar phase compositions. Polarized light microscopy can assess whether the composition is isotropic. See e.g., The Aqueous Phase Behaviour of Surfactants, Robert Laughlin, Academic Press, 1994, pp. 538-542. Preferably an isotropic composition is provided. Preferably the composition comprises 0.1% to 3% by weight of the total composition of a hydrotrope, preferably wherein the hydrotrope is selected from sodium, potassium, and ammonium xylene sulfonate, sodium, potassium and ammonium toluene sulfonate, sodium potassium and ammonium cumene sulfonate, and mixtures thereof.

Organic solvent

The composition of the present invention may optionally comprise an organic solvent. Suitable organic solvents include C4-14 ethers and diethers, polyols, glycols, alkoxylated glycols, C6-C16 glycol ethers, alkoxylated aromatic

alcohols, aromatic alcohols, aliphatic linear or branched alcohols, alkoxylated aliphatic linear or branched alcohols, alkoxylated C1-C5 alcohols, C8-C14 alkyl and cycloalkyl hydrocarbons and halo hydrocarbons, and mixtures thereof. Preferably the organic solvents include alcohols, glycols, and glycol ethers, alternatively alcohols and glycols. The composition comprises from 0% to less than 50%, preferably from 0.01% to 25%, more preferably from 0.1% to 10%, or most preferably from 0.5% to 5%, by weight of the total composition of an organic solvent, preferably an alcohol, more preferably an ethanol, a polyalkyleneglycol, more preferably polypropyleneglycol, and mixtures thereof.

Amphiphilic Polymer

The composition of the present invention may further comprise from 0.01% to 5%, preferably from 0.05% to 2%, more preferably from 0.07% to 1% by weight of the total composition of an amphiphilic polymer selected from the groups consisting of amphiphilic alkoxylated polyalkyleneimine and mixtures thereof, preferably an amphiphilic alkoxylated polyalkyleneimine.

Preferably, the amphiphilic alkoxylated polyalkyleneimine is an alkoxylated polyethyleneimine polymer comprising a polyethyleneimine backbone having average molecular weight range from 100 to 5,000, preferably from 400 to 2,000, more preferably from 400 to 1,000 Daltons and the alkoxylated polyethyleneimine polymer further comprising:

(i) one or two alkoxylation modifications per nitrogen atom by a polyalkoxylene chain having an average of 1 to 50 alkoxy moieties per modification, wherein the terminal alkoxy moiety of the alkoxylation modification is capped with hydrogen, a C1-C4 alkyl or mixtures thereof;
(ii) an addition of one C1-C4 alkyl moiety and one or two alkoxylation modifications per nitrogen atom by a polyalkoxylene chain having an average of 1 to 50 alkoxy moieties per modification wherein the terminal alkoxy moiety is capped with hydrogen, a C1-C4 alkyl or mixtures thereof; or
(iii) a combination thereof; and

wherein the alkoxy moieties comprises ethoxy (EO) and/or propxy (PO) and/or butoxy (BO) and wherein when the alkoxylation modification comprises EO it also comprises PO or BO.

Preferred amphiphilic alkoxylated polyethyleneimine polymers comprise EO and PO groups within their alkoxylation chains, the PO groups preferably being in terminal position of the alkoxy chains, and the alkoxylation chains preferably being hydrogen capped. Hydrophilic alkoxylated polyethyleneimine polymers solely comprising ethoxy (EO) units within the alkoxylation chain could also optionally be formulated within the scope of this invention.

For example, but not limited to, below is shown possible modifications to terminal nitrogen atoms in the polyethyleneimine backbone where R represents an ethylene spacer and E represents a C1-C4 alkyl moiety and X- represents a suitable water soluble counterion.

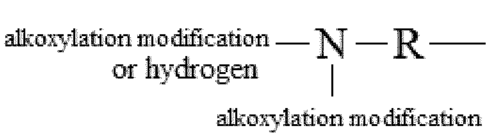

or

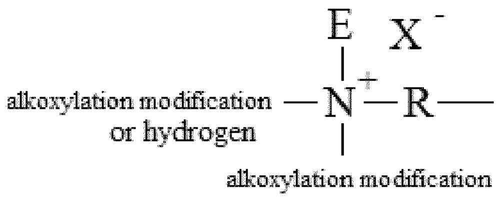

Also, for example, but not limited to, below is shown possible modifications to internal nitrogenatoms in the polyethyleneimine backbone where R represents an ethylene spacer and E represents a $C_1$-$C_4$ alkyl moiety and X- represents a suitable water soluble counterion.

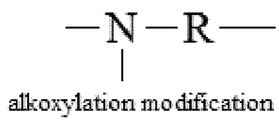

or

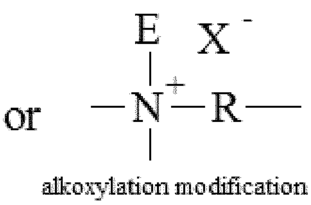

The alkoxylation modification of the polyethyleneimine backbone consists of the replacement of a hydrogen atom by a polyalkoxylene chain having an average of 1 to 50 alkoxy moieties, preferably from 20 to 45 alkoxy moieties, most preferably from 30 to 45 alkoxy moieties. The alkoxy moieties are selected from ethoxy (EO), propoxy (PO),butoxy

(BO), and mixtures thereof. Alkoxy moieties solely comprising ethoxy units are outside the scope of the invention though. Preferably, the polyalkoxylene chain is selected from ethoxy/propoxy block moieties. More preferably, the polyalkoxylene chain is ethoxy/propoxy block moieties having an average degree of ethoxylation from 3 to 30 and an average degree of propoxylation from 1 to 20, more preferably ethoxy/propoxy block moieties having an average degree of ethoxylation from 20 to 30 and an average degree of propoxylation from 10 to 20.

More preferably the ethoxy/propoxy block moieties have a relative ethoxy to propoxy unit ratio between 3 to 1 and 1 to 1, preferably between 2 to 1 and 1 to 1. Most preferably the polyalkoxylene chain is the ethoxy/propoxy block moieties wherein the propoxy moiety block is the terminal alkoxy moiety block.

The modification may result in permanent quaternization of the polyethyleneimine backbone nitrogen atoms. The degree of permanent quaternization may be from 0% to 30% of the polyethyleneimine backbone nitrogen atoms. It is preferred to have less than 30% of the polyethyleneimine backbone nitrogen atoms permanently quaternized. Most preferably the degree of quaternization is 0%.

A preferred polyethyleneimine has the general structure of Formula (II):

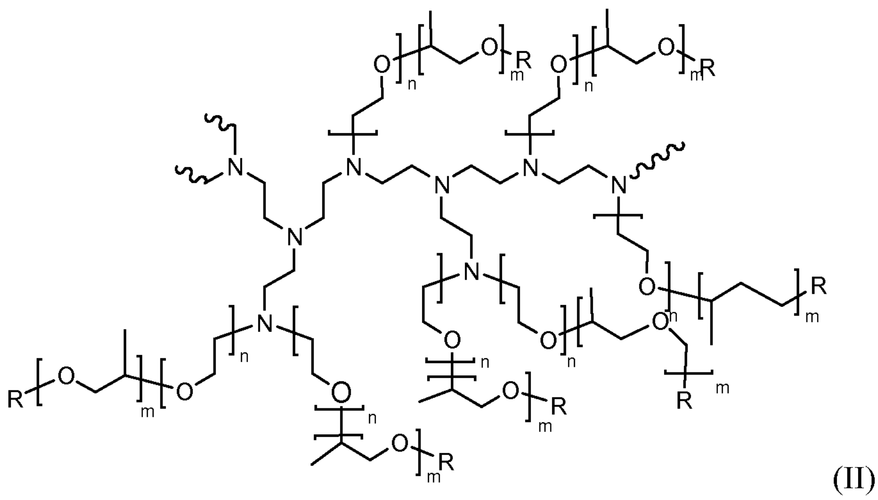

(II)

wherein the polyethyleneimine backbone has a weight average molecular weight of 600, n of formula (II) has an average of 10, m of formula (II) has an average of 7 and R of formula (II) is selected from hydrogen, a $C_1$-$C_4$ alkyl and mixtures thereof, preferably hydrogen. The degree of permanent quaternization of formula (II) may be from 0% to 22% of the polyethyleneimine backbone nitrogen atoms. The molecular weight of this polyethyleneimine preferably is between 10,000 and 15,000.

An alternative polyethyleneimine has the general structure of Formula (II) but wherein the polyethyleneimine backbone has a weight average molecular weight of 600, n of Formula (II) has an average of 24, m of Formula (II) has an average of 16 and R of Formula (II) is selected from hydrogen, a $C_1$-$C_4$ alkyl and mixtures thereof, preferably hydrogen. The degree of permanent quaternization of Formula (II) may be from 0% to 22% of the polyethyleneimine backbone nitrogen atoms. The molecular weight of this polyethyleneimine preferably is between 25,000 and 30,000.

Most preferred polyethyleneimine has the general structure of Formula (II) wherein the polyethyleneimine backbone has a weight average molecular weight of 600, n of Formula (II) has an average of 24, m of Formula (II) has an average of 16 and R of Formula (II) is hydrogen. The degree of permanent quaternization of Formula (II) is 0% of the polyethyleneimine backbone nitrogen atoms. The molecular weight of this polyethyleneimine preferably is from 25,000 to 30,000, most preferably 28,000.

These polyethyleneimines can be prepared, for example, by polymerizing ethyleneimine in the presence of a catalyst such as carbon dioxide, sodium bisulfite, sulfuric acid, hydrogen peroxide, hydrochloric acid, acetic acid, and the like, as described in more detail in PCT Publication No. WO 2007/135645.

Chelant

The detergent composition herein can comprise a chelant at a level of from 0.1% to 20%, preferably from 0.2% to 5%, more preferably from 0.2% to 3% by weight of total composition.

As commonly understood in the detergent field, chelation herein means the binding or complexation of a bi- or multidentate ligand. These ligands, which are often organic compounds, are called chelants, chelators, chelating agents, and/or sequestering agent. Chelating agents form multiple bonds with a single metal ion. Chelants, are chemicals that form soluble, complex molecules with certain metal ions, inactivating the ions so that they cannot normally react with

other elements or ions to produce precipitates or scale, or forming encrustations on soils turning them harder to be removed. The ligand forms a chelate complex with the substrate. The term is reserved for complexes in which the metal ion is bound to two or more atoms of the chelant.

Preferably, the composition of the present invention comprises one or more chelant, preferably selected from the group comprising carboxylate chelants, amino carboxylate chelants, amino phosphonate chelants such as MGDA (methylglycine-N,N-diacetic acid), GLDA (glutamic-N,N- diacetic acid), and mixtures thereof.

Suitable chelating agents can be selected from the group consisting of amino carboxylates, amino phosphonates, polycarboxylate chelating agents and mixtures thereof.

Other chelants include homopolymers and copolymers of polycarboxylic acids and their partially or completely neutralized salts, monomeric polycarboxylic acids and hydroxycarboxylic acids and their salts. Suitable polycarboxylic acids are acyclic, alicyclic, heterocyclic and aromatic carboxylic acids, in which case they contain at least two carboxyl groups which are in each case separated from one another by, preferably, no more than two carbon atoms. A suitable hydroxycarboxylic acid is, for example, citric acid. Another suitable polycarboxylic acid is the homopolymer of acrylic acid. Preferred are the polycarboxylates end capped with sulfonates.

Adjunct Ingredients

The cleaning composition herein may optionally comprise a number of other adjunct ingredients such as builders (e.g., preferably citrate), cleaning solvents, cleaning amines, conditioning polymers, cleaning polymers, surface modifying polymers, soil flocculating polymers, structurants, emollients, humectants, skin rejuvenating actives, enzymes, carboxylic acids, scrubbing particles, bleach and bleach activators, perfumes, malodor control agents, pigments, dyes, opacifiers, beads, pearlescent particles, microcapsules, inorganic cations such as alkaline earth metals such as Ca/Mg-ions, antibacterial agents, preservatives, viscosity adjusters (*e.g.,* salt such as NaCl, and other mono-, di- and trivalent salts) and pH adjusters and buffering means (e.g., carboxylic acids such as citric acid, HCl, NaOH, KOH, alkanolamines, phosphoric and sulfonic acids, carbonates such as sodium carbonates, bicarbonates, sesquicarbonates, borates, silicates, phosphates, imidazole and alike).

Method of washing

Other aspects of the invention are directed to methods of washing ware especially dishware with the composition of the present invention. Accordingly, there is provided a method of manually washing dishware comprising the steps of delivering a detergent composition of the invention into a volume of water to form a wash solution and immersing the dishware in the solution. Preferably the diol synthases are present at a concentration from 0.005 ppm to 15 ppm, preferably from 0.02 ppm to 0.5 ppm, in an aqueous wash liquor during the washing process. As such, the composition herein will be applied in its diluted form to the dishware. Soiled surfaces *e.g.* dishes are contacted with an effective amount, typically from 0.5 mL to 20 mL (per 25 dishes being treated), preferably from 3mL to 10 mL, of the detergent composition of the present invention, preferably in liquid form, diluted in water. The actual amount of detergent composition used will be based on the judgment of user, and will typically depend upon factors such as the particular product formulation of the composition, including the concentration of active ingredients in the composition, the number of soiled dishes to be cleaned, the degree of soiling on the dishes, and the like. Generally, from 0.01 mL to 150 mL, preferably from 3 mL to 40 mL of a liquid detergent composition of the invention is combined with from 2,000 mL to 20,000 mL, more typically from 5,000 mL to 15,000 mL of water in a sink having a volumetric capacity in the range of from 1,000 mL to 20,000 mL, more typically from 5,000 mL to 15,000 mL. The soiled dishes are immersed in the sink containing the diluted compositions then obtained, where contacting the soiled surface of the dish with a cloth, sponge, or similar article cleans them. The cloth, sponge, or similar article may be immersed in the detergent composition and water mixture prior to being contacted with the dish surface, and is typically contacted with the dish surface for a period of time ranged from 1 to 10 seconds, although the actual time will vary with each application and user. The contacting of cloth, sponge, or similar article to the surface is preferably accompanied by a concurrent scrubbing of the surface.

Another aspect of the present invention is use of one or more diol synthases capable of converting unsaturated fatty acids into oxylipins to provide increased suds longevity in an aqueous wash liquor comprising soil. Preferably the diol synthases are selected from the group consisting of linoleate diol synthases, oleate diol synthases, and mixtures thereof. More preferably, the diol synthases are selected from the group consisting of: linoleate diol synthases (EC 1.13.11.44), 5,8-linoleate diol synthases (EC 1.13.11.60 and EC 5.4.4.5), 7,8-linoleate diol synthases (EC 1.13.11.60 and EC 5.4.4.6), 9,14-linoleate diol synthases (EC 1.13.11.B1), 8,11-linoleate diol synthases, oleate diol synthases, and mixtures thereof; most preferably 5,8-linoleate diol synthases (EC 1.13.11.60 and EC 5.4.4.5), and mixtures thereof.

Another aspect of the present invention is directed to a method of improving suds longevity or grease emulsification in a washing process for washing soiled articles, preferably dishware. The method comprises the steps of: a) delivering a cleaning composition comprising one or more diol synthases of the invention and a surfactant system to a

volume of water to form a wash liquor; and b) immersing the soiled articles into said wash liquor. Preferably the diol synthases are present at a concentration from 0.005 ppm to 15 ppm, preferably from 0.02 ppm to 0.5 ppm, in an aqueous wash liquor during the washing process.

TEST METHODS

The following assays set forth must be used in order that the invention described and claimed herein may be more fully understood.

Test Method 1 - Glass Vial Suds Mileage Method

The objective of the glass vial suds mileage test method is to measure the evolution of suds volume over time generated by a certain solution of detergent composition in the presence of a greasy soil, *e.g.,* olive oil. The steps of the method are as follows:

1. Test solutions are prepared by subsequently adding aliquots at room temperature of: a) 10 g of an aqueous detergent solution at specified detergent concentration and water hardness, b) 1.0 g of an aqueous protein solution at specified concentration and water hardness, and c) 0.11 g of olive oil (Bertolli®, Extra Virgin Olive Oil), into a 40 mL glass vial (dimensions: 95 mm H x 27.5 mm D). For the reference samples, the protein solutions are substituted with 1.0 mL of demineralized water.
2. The test solutions are mixed in the closed test vials by stirring at room temperature for 2 minutes on a magnetic stirring plate (IKA, model # RTC B S001; VWR magnetic stirrer, catalog # 58949-012; 500 RPM), followed by manually shaking for 20 seconds with an upwards downwards movement (about 2 up and down cycles per second, +/- 30 cm up and 30 cm down).
3. Following the shaking, the test solutions in the closed vials are further stirred on a magnetic stirring plate (IKA, model # RTC B S001; VWR magnetic stirrer, catalog # 58949-012; 500 RPM) for 60 minutes inside a water bath at 46 °C to maintain a constant temperature. The samples are then shaken manually for another 20 seconds as described above and the initial suds heights (H1) are recorded with a ruler.
4. The samples are incubated for an additional 30 minutes inside the water bath at 46 °C while stirring (IKA, model # RTC B S001; VWR magnetic stirrer, catalog # 58949-012; 500 RPM), followed by manual shaking for another 20 seconds as described above. The final suds heights (H2) are recorded.
5. Protein solutions that produce larger suds heights (H1 and H2), preferably combined with lower drops in suds height between H1 and H2, are more desirable.

Test Method 2 - Sink Suds Mileage Method

The evolution of the suds volume generated by a solution of a detergent composition can be determined while adding soil loads periodically as follows. A stream of hard water (15 dH) fills a sink (cylinder dimensions: 300 mm D x 288 mm H) to 4 L with a constant pressure of 4 bar. Simultaneously, an aliquot of the detergent composition (final concentration 0.12 w%) is dispensed through a pipette with a flow rate of 0.67 mL/sec at a height of 37 cm above the bottom of the sink surface. An initial suds volume is generated in the sink due to the pressure of the water. The temperature of the solution is maintained at 46 °C during the test.

After recording the initial suds volume (average suds height x sink surface area), a fixed amount of greasy soil (composition : see Table 1, 6 mL) is injected in the middle of the sink, while a paddle (dimensions: 10 cm x 5 cm, positioned in the middle of the sink at the air liquid interface at an angle of 45 degrees) rotates 20 times into the solution at 85 RPM. This step is followed immediately by another measurement of the total suds volume. The soil injecting, paddling, and measuring steps are repeated until the measured suds volume reaches a minimum level, which is set at 400 $cm^3$. The amount of soil additions needed to get to that level is recorded. The complete process is repeated a number of times and the average of the number of additions for all the replicates is calculated for each detergent composition

Finally, the suds mileage index is then calculated as: (average number of soil additions for test detergent composition) / (average number of soil additions for reference detergent composition) x 100.

Pending on the test purpose the skilled person could choose to select an alternative water hardness, solution temperature, product concentration or soil type.

Table 1 - Greasy Soil Composition

| Ingredient | Weight % |
|---|---|
| Crisco oil | 12.730 |
| Crisco shortening | 27.752 |
| Lard | 7.638 |
| Refined Rendered Edible Beef Tallow | 51.684 |
| Oleic Acid, 90% (Techn) | 0.139 |
| Palmitic Acid, 99+% | 0.036 |
| Stearic Acid, 99+% | 0.021 |

## EXAMPLES

The following examples are provided to further illustrate the present invention and are not to be construed as limitations of the present invention.

### Example 1a - Production of *Emericella nidulans* PpoA

A codon optimized gene (SEQ ID NO: 16) encoding for an *Emericella nidulans* PpoA variant that includes a C-terminal His-tag (SEQ ID NO: 17) is designed and synthesized and the protein is expressed and purified by Genscript (Piscataway, NJ). In brief, the complete synthetic gene sequence is subcloned into a pET30a vector. *Escherichia coli* BL21 (DE3) cells are transformed with the recombinant plasmid and a single colony is inoculated into 2xYT medium containing kanamycin. After $OD_{600}$ reached values over 1, isopropyl β-D-1-thiogalactopyranoside (IPTG) is added (0.1 mM) to induce protein expression and the culture is incubated at 15 °C and 200 rpm for 16 h. Cells are harvested by centrifugation and the pellet is lysed by sonication. After centrifugation, the supernatant is collected and the protein is purified by two-step purification using a nickel affinity column and Q Sepharose column and standard protocols known in the art. The protein is stored in a buffer containing 50 mM Tris-HCl, 150 mM NaCl, and 10% Glycerol at pH 8.0. The final protein concentration is 0.28 mg/ mL determined by Bradford protein assay with BSA as a standard (ThermoFisher, Catalog # 23236).

### Example 1b - Diol Synthases Detergent Compositions

The evolution of suds volume generated by a certain solution of detergent composition in presence of a soil, *i.e.,* olive oil or greasy soil, is followed over time under specific conditions (*e.g.,* water hardness, solution temperature, detergent concentrations, etc.). The following solutions are prepared:

A. Hard water (15 dH): 0.75 g $MgCl_2.6H_2O$ (Sigma-Aldrich, catalog # M9272), 2.10 g $CaCl_2.6H_2O$ (Sigma-Aldrich, catalog # 21108), and 0.689 g $NaHCO_3$ (Sigma-Aldrich, catalog # 31437) are dissolved in 5 L of demineralized water.
B. Detergent solution of a high surfactant content detergent composition ("solution DG-HS") is prepared using Fairy Dark Green, as commercially available in the UK in Feb 2017, diluted in hard water (15 dH) prepared as above, at targeted detergent concentration of 0.12%.
C. Detergent solution of a low surfactant content detergent composition ("solution DG-LS") is prepared using Fairy Dark Green, as commercially available in the UK in Feb 2017, diluted in hard water (15 dH) prepared as above, at targeted detergent concentration of 0.06%.
D. Protein solutions: Proteins are diluted in demineralized water to the required concentration before proceeding with the suds mileage method.
E. Greasy soil: A grease soil is prepared according to the composition described in Table 1.

### Example 2 - Glass Vial Suds Mileage of *Emericella nidulans* PpoA with Olive Oil

Inventive Compositions A, B and C are examples of detergent compositions according to the present invention, made with: a) detergent solution DG-LS (prepared as described in Example 1b), and b) diluted samples of purified *Emericella nidulans* PpoA (SEQ ID NO: 16) (prepared as described in Example 1a). Comparative Composition D contains the same detergent solution DG-LS in the absence of the enzyme. The glass vial suds mileage test is performed on the compositions using olive oil, as described in the test methods section (Test Method 1).

The initial (H1) and final (H2) measurements are recorded in Table 2. The % suds height drop represents the drop in suds height as measured between the initial and final time point and is calculated by the following equation:

$$\% \text{ suds height drop} = \{[(H1 - H2)]/H1\}*100.$$

The % suds height drops are calculated for the compositions and shown in Table 2

Table 2: Suds Milage

| Composition | PpoA Concentration in Composition [ppm] | H1 [mm] | H2 [mm] | % suds height drop H2 vs H1 |
|---|---|---|---|---|
| Inventive Composition A | 12 | 8 | 7 | 12.5% |
| Inventive Composition B | 1.2 | 6 | 6 | 0% |
| Inventive Composition C | 0.12 | 5 | 3 | 40% |
| Comparative Composition D | 0 | 4 | 2 | 50% |

Aliquots of Compositions A to D are stored at -20 °C until analysis by LC-MS to determine formation of oxygenated derivatives of oleic acid. Dihydroxy oleic acid is only detected in Inventive Compositions A and B, confirming the activity of the enzyme.

The results in Table 2 confirm that Inventive Compositions A-C detergent solutions comprising *Emericella nidulans* PpoA enzyme (SEQ ID NO: 16) according to the present invention have a superior suds profile when single variably compared to Comparative Composition D solution without the enzyme, both in view of absolute suds height as in view of suds stability.

Example 3 - Glass Vial Suds Mileage of *Emericella nidulans* PpoA with Greasy Soil

Inventive Compositions E and F are examples of detergent compositions according to the present invention, made with: a) detergent solution DG-LS (prepared as described in Example 1b), and b) diluted samples of purified *Emericella nidulans* PpoA (SEQ ID NO: 16) (prepared as described in Example 1a). Comparative Composition G contains the same detergent solution DG-LS in the absence of the enzyme. The glass vial suds mileage test is performed on these compositions using greasy soil, as described in the test methods section (Test Method 1). The initial (H1) and final (H2) measurements are recorded are recorded in Table 3.

Table 3: Suds Mileage

| Composition | PpoA Concentration in Composition [ppm] | H1 [mm] | H2 [mm] |
|---|---|---|---|
| Inventive Composition E | 1.2 | 11 | 11 |
| Inventive Composition F | 0.12 | 10 | 9 |
| Comparative Composition G | 0 | 5 | 4 |

The results confirm that Inventive Compositions E and F detergent solutions comprising *Emericella nidulans* PpoA (SEQ ID NO: 16) according to the invention have a superior suds profile compared to Comparative Composition G solution without the enzyme.

Example 4: Exemplary Manual Dish-Washing Detergent Composition

Table 4 exemplifies a manual dish-washing detergent composition comprising *Emericella nidulans* PpoA (SEQ ID NO: 1).

| Ingredient | Wt% |
|---|---|
| Sodium alkyl ethoxy sulfate (C1213EO0.6S) | 22.91% |
| n-C12-14 Di Methyl Amine Oxide | 7.64% |
| Lutensol® XP80 (non-ionic surfactant supplied by BASF) | 0.45% |
| Sodium Chloride | 1.2% |
| Poly Propylene Glycol (MW 2000) | 1% |
| Ethanol | 2% |
| Sodium Hydroxide | 0.24% |
| *Asperigullus nidalus* PpoA (SEQ ID NO: 1) | 0.1% |
| Minors (perfume, preservative, dye) + water | To 100 % |
| pH (@ 10% solution) | 9 |

All percentages and ratios given for enzymes are based on active protein. All percentages and ratios herein are calculated by weight unless otherwise indicated. All percentages and ratios are calculated based on the total composition unless otherwise indicated.

It should be understood that every maximum numerical limitation given throughout this specification includes every lower numerical limitation, as if such lower numerical limitations were expressly written herein. Every minimum numerical limitation given throughout this specification will include every higher numerical limitation, as if such higher numerical limitations were expressly written herein. Every numerical range given throughout this specification will include every narrower numerical range that falls within such broader numerical range, as if such narrower numerical ranges were all expressly written herein.

## Claims

1. A detergent composition comprising:

a) one or more diol synthases capable of converting one or more unsaturated fatty acids into one or more oxylipins, preferably the diol synthases are selected from the group consisting of linoleate diol synthases, oleate diol synthases, and mixtures thereof, more preferably wherein the diol synthases are selected from the group consisting of: linoleate diol synthases (EC 1.13.11.44), 5,8-linoleate diol synthases (EC 1.13.11.60 and EC 5.4.4.5), 7,8-linoleate diol synthases (EC 1.13.11.60 and EC 5.4.4.6), 9,14-linoleate diol synthases (EC

1.13.11.B1), 8,11-linoleate diol synthases, oleate diol synthases, and mixtures thereof; even more preferably 5,8-linoleate diol synthases (EC 1.13.11.60 and EC 5.4.4.5), and mixtures thereof; and
b) a surfactant system comprising:

i) one or more anionic surfactants; and
ii) one or more co-surfactants selected from the group consisting of amphoteric surfactant, zwitterionic surfactant, and mixtures thereof;
wherein the weight ratio of the anionic surfactants to the co-surfactants is less than 9:1, more preferably from 5:1 to 1:1, more preferably from 4:1 to 2:1;

wherein the detergent composition is a liquid manual dishwashing detergent composition.

**2.** The composition according to claim 1, wherein the unsaturated fatty acids are selected from the group consisting of: mono unsaturated fatty acids, di unsaturated fatty acids, tri unsaturated fatty acids, tetra unsaturated fatty acids, penta unsaturated fatty acids, hexa unsaturated fatty acids, and mixtures thereof; preferably myristoleic acid, palmitoleic acid, sapienic acid, oleic acid, elaidic acid, vaccenic acid, linoleic acid, linoelaidic acid, α-linolenic acid, γ-linolenic acid, gadoleic acid, α-eleostearic acid, β-eleostearic acid, ricinoleic acid, eicosenic acid, arachidonic acid, eicosapentaenoic acid, erucic acid, docosadienoic acid, docosahexaenoic acid, tetracosenoic acid, and mixtures thereof; preferably palmitoleic acid, oleic acid, linoleic acid, α-linolenic acid, γ-linolenic acid, and mixtures thereof; more preferably oleic acid.

**3.** The composition according any preceding claims, where the 5,8-linoleate diol synthases (EC 1.13.11.60 and EC 5.4.4.5) have at least 80%, preferably at least 85%, preferably at least 90%, preferably at least 95%, preferably at least 98% or preferably even 100% identity as calculated over the entire length of the sequence aligned against the entire length of at least one reference sequence of the wild-type diol synthases selected from the group consisting of *Emericella nidulans* PpoA (SEQ ID NO: 1), *Aspergillus fumigatus* PpoA (SEQ ID NO: 2), *Aspergillus terreus* PpoA (SEQ ID NO: 3), *Aspergillus kawachii* PpoA (SEQ ID NO: 4), *Aspergillus clavatus* PpoA (SEQ ID NO: 5), *Aspergillus niger* PpoA (SEQ ID NO: 6), and mixtures thereof; more preferably *Emericella nidulans* PpoA (SEQ ID NO: 1).

**4.** The composition according to any of the preceding claims, wherein the oxylipins are selected from the group consisting of: hydroperoxy fatty acids, monohydroxy fatty acids, dihydroxy fatty acids, trihydroxyfatty acids, polyhydroxy fatty acids, their derivatives, and mixtures thereof; preferably the oxylipins are selected from the group consisting of: unsaturated monohydroxy fatty acids, unsaturated dihydroxy fatty acids, unsaturated 8R-hydroperoxy fatty acids, unsaturated 9R-hydroperoxy fatty acids, their derivatives, and mixtures thereof; more preferably unsaturated dihydroxy fatty acids; even more preferably 5,8-dihydroxy oleic acid.

**5.** The composition according to any of the preceding claims, further comprising one or more co-enzymes selected from the group consisting of: fatty-acid peroxidases (EC 1.11.1.3), unspecific peroxygenases (EC 1.11.2.1), plant seed peroxygenases (EC 1.11.2.3), fatty acid peroxygenases (EC1.11.2.4), linoleate 13S-lipoxygenases (EC 1.13.11.12), arachidonate 12-lipoxygenases (E.C. 1.13.11.31), arachidonate 15-lipoxygenase (EC 1.13.11.33), arachidonate 5-lipoxygenases (EC 1.13.11.34), arachidonate 8-lipoxygenases (EC 1.13.11.40), linoleate 11-lipoxygenases (EC 1.13.11.45), linoleate 9S-lipoxygenases (EC 1.13.11.58), linoleate 8R-lipoxygenases (EC 1.13.11.60), linoleate 9R-lipoxygenases (EC 1.13.11.61), linoleate 10R-lipoxygenases (EC 1.13.11.62), oleate 10S-lipoxygenases (EC 1.13.11.77), linoleate 9/13-lipoxygenases (EC 1.13.11.B6), linoleate 10S-lipoxygenases, unspecific monooxygenase (EC 1.14.14.1), alkane 1-monooxygenase (EC 1.14.15.3), oleate 12-hydroxylases (EC 1.14.18.4), cyclooxygenases (EC 1.14.99.1), fatty acid amide hydrolase (EC 3.5.1.99), oleate hydratases (EC 4.2.1.53), allene oxide synthases (EC 4.2.1.92), hydroperoxide isomerases (EC 4.2.1.92, EC 5.3.99.1, EC 5.4.4.5, EC 5.4.4.6), hydroperoxide lyases (EC 4.2.1.92), hydroperoxide dehydratases (EC 4.2.1.92), divinyl ether synthases (EC 4.2.1.121, EC 4.2.1.B8, EC 4.2.1.B9), linoleate isomerases (EC 5.2.1.5), linoleate (10E,12Z)-isomerases (EC 5.3.3.B2), 9,12-octadecadienoate 8-hydroperoxide 8R-isomerases (EC 5.4.4.5), 9,12-octadecadienoate 8-hydroperoxide 8S-isomerases (EC 5.4.4.6), 7,10-hydroperoxide diol synthases, fatty acid decarboxylases (OleT-like), iron-dependent decarboxylases (UndA-like), epoxy alcohol synthases, amylases, lipases, proteases, cellulases, and mixtures thereof, preferably linoleate 9S-lipoxygenases (EC 1.13.11.58), linoleate 8R-lipoxygenases (EC 1.13.11.60), linoleate 9R-lipoxygenases (EC 1.13.11.61), linoleate 10R-lipoxygenases (EC 1.13.11.62), oleate 10S-lipoxygenases (EC 1.13.11.77), linoleate 9/13-lipoxygenases (EC 1.13.11.B6), linoleate 10S-lipoxygenases, oleate hydratases (EC 4.2.1.53), hydroperoxide isomerases (EC 4.2.1.92, EC 5.3.99.1, EC 5.4.4.5, EC 5.4.4.6), hydroperoxide lyases (EC 4.2.1.92), hydroperoxide dehydratases (EC 4.2.1.92), 9,12-octadecadienoate 8-hydroperoxide 8R-isomerases (EC 5.4.4.5), 9,12-octadecadienoate 8-hydroperoxide 8S-isomerases (EC 5.4.4.6), 7,10-hydroperoxide diol synthases, fatty acid decarboxylases (OleT-like), iron-dependent decarboxylases (UndA-like), and mixture therefore, more preferably oleate 10S-lipoxygenases (EC 1.13.11.77), 9,12-octadecadienoate 8-hydroperoxide 8R-isomerases (EC 5.4.4.5), 9,12-octadecadienoate 8-hydroperoxide 8S-isomerases (EC 5.4.4.6), 7,10-hydroperoxide diol synthases, and mixtures thereof.

**6.** The composition according to any preceding claims, wherein:

a) the diol synthases are present in an amount of from 0.0001 wt% to 1 wt%, preferably from 0.001 wt% to 0.2 wt%, by weight of the cleaning composition based on active protein.

**7.** The composition according to any preceding claims, wherein:
b) the surfactant system is present in an amount of from 1 wt% to 60 wt%, preferably from 5 wt% to 50 wt%, by weight of the cleaning composition.

**8.** The composition according to any preceding claims, wherein the amphoteric surfactant is amine oxide surfactant and the zwitterionic surfactant is betaine surfactant.

**9.** The composition according to any preceding claims, further comprising an enzyme stabilizer selected from the group consisting of chemical and physical stabilisers, preferably the physical stabiliser comprises encapsulated enzyme.

**10.** The composition according to any preceding claims, further comprising a chelant, preferably selected from the group comprising carboxylate chelants, amino carboxylate chelants, amino phosphonate chelants, and mixtures thereof, preferably selected from the group of MGDA (methylglycine-N,N-diacetic acid), GLDA (glutamic-N,N- diacetic acid), and mixtures thereof.

**11.** The composition according to any preceding claims, wherein the anionic surfactants are selected from the group consisting of alkyl sulfates, alkyl alkoxy sulfates preferably alkyl ethoxy sulfates, and mixtures thereof, preferably the anionic surfactants are a combination of alkyl sulfates and alkyl ethoxy sulfates with a combined average ethoxylation degree of less than 5, preferably less than 3, more preferably less than 2 and more than 0.5 and an average level of branching of from 5% to 40%, more preferably from 10% to 35%, and even more preferably from 20% to 30%.

**12.** The composition accordinng to any preceding claims, wherein the anionic surfactants are a combination of alkyl sulfate and alkyl ethoxy sulfate and the co-surfactants are amine oxide surfactants preferably alkyl dimethyl amine oxide or alkyl amido propyl dimethyl amine oxide surfactant, and wherein the anionic surfactants and the amine oxide surfactants are in a weight ratio of between 3:1 to 2.5:1.

**13.** A method of manually washing dishware comprising the steps of delivering a detergent composition according to any preceding claims into a volume of water to form a wash solution and immersing the dishware in the solution.

**14.** The method according to claim 13, wherein the diol synthases are present at a concentration of from 0.005 ppm to 15 ppm, preferably from 0.02 ppm to 0.5 ppm, in an aqueous wash liquor during the washing process.

**Patentansprüche**

**1.** Waschmittelzusammensetzung, umfassend:

a) eine oder mehrere Diolsynthasen, die in der Lage sind, eine oder mehrere ungesättigte Fettsäuren in ein oder mehrere Oxylipine umzuwandeln, wobei die Diolsynthasen vorzugsweise ausgewählt sind aus der Gruppe, bestehend aus Linoleatdiolsynthasen, Oleatdiolsynthasen und Mischungen davon, mehr bevorzugt wobei die Diolsynthasen ausgewählt sind aus der Gruppe, bestehend aus: Linoleatdiolsynthasen (EC 1.13.11.44), 5,8-Linoleatdiolsynthasen (EC 1.13.11.60 und EC 5.4.4.5), 7,8-Linoleatdiolsynthasen (EC 1.13.11.60 und EC 5.4.4.6), 9,14-Linoleatdiolsynthasen (EC 1.13.11.B1), 8,11-Linoleatdiolsynthasen, Oleatdiolsynthasen und Mischungen davon; noch mehr bevorzugt 5,8-Linoleatdiolsynthasen (EC 1.13.11.60 und EC 5.4.4.5) und Mischungen davon; und
b) ein Tensidsystem, umfassend:

i) ein oder mehrere anionische Tenside; und

ii) ein oder mehrere Cotenside, ausgewählt aus der Gruppe, bestehend aus amphoterem Tensid, zwitterionischem Tensid und Mischungen davon;

wobei das Gewichtsverhältnis der anionischen Tenside zu den Cotensiden weniger als 9 : 1 beträgt, mehr bevorzugt 5 : 1 bis 1 : 1, mehr bevorzugt 4 : 1 bis 2 : 1;
wobei die Waschmittelzusammensetzung eine flüssige Handgeschirrspülmittelzusammensetzung ist.

**2.** Zusammensetzung nach Anspruch 1, wobei die ungesättigten Fettsäuren ausgewählt sind aus der Gruppe, bestehend aus: einfach ungesättigten Fettsäuren, zweifach ungesättigten Fettsäuren, dreifach ungesättigten Fettsäuren, vierfach ungesättigten Fettsäuren, fünffach ungesättigten Fettsäuren, sechsfach ungesättigten Fettsäuren und Mischungen davon; vorzugsweise Myristoleinsäure, Palmitoleinsäure, Sapiensäure, Ölsäure, Elaidinsäure, Vaccensäure, Linolsäure, Linoelaidsäure, α-Linolensäure, γ-Linolensäure, Gadoleinsäure, α-Eleostearinsäure, β-Eleostearinsäure, Ricinolsäure, Eicosensäure, Arachidonsäure, Eicosapentaensäure, Erucasäure, Docosadiensäure, Docosahexaensäure, Tetracosensäure und Mischungen davon; vorzugsweise Palmitoleinsäure, Ölsäure, Linolsäure, α-Linolensäure, γ-Linolensäure und Mischungen davon; mehr bevorzugt Ölsäure.

**3.** Zusammensetzung nach einem der vorstehenden Ansprüche, wobei die 5,8-Linoleatdiolsynthasen (EC 1.13.11.60 und EC 5.4.4.5) mindestens 80 %, vorzugsweise mindestens 85 %, vorzugsweise mindestens 90 %, vorzugsweise mindestens 95 %, vorzugsweise mindestens 98 % oder vorzugsweise sogar 100 % Identität, wie berechnet über die gesamte Länge der Sequenz, ausgerichtet gegen die gesamte Länge mindestens einer Referenzsequenz der Wildtyp-Diolsynthasen aufweisen, ausgewählt aus der Gruppe bestehend aus *Emericella nidulans* PpoA (SEQ ID NO: 1), *Aspergillus fumigatus* PpoA (SEQ ID NO: 2), *Aspergillus terreus* PpoA (SEQ ID NO: 3), *Aspergillus kawachii* PpoA (SEQ ID NO: 4), *Aspergillus clavatus* PpoA (SEQ ID NO: 5), *Aspergillus niger* PpoA (SEQ ID NO: 6) und Mischungen davon; mehr bevorzugt *Emericella nidulans* PpoA (SEQ ID NO: 1).

**4.** Zusammensetzung nach einem der vorstehenden Ansprüche, wobei die Oxylipine ausgewählt sind aus der Gruppe, bestehend aus: Hydroperoxyfettsäuren, Monohydroxyfettsäuren, Dihydroxyfettsäuren, Trihydroxyfettsäuren, Polyhydroxyfettsäuren, ihren Derivaten und Mischungen davon; vorzugsweise wobei die Oxylipine ausgewählt sind aus der Gruppe, bestehend aus: ungesättigten Monohydroxyfettsäuren, ungesättigten Dihydroxyfettsäuren, ungesättigten 8R-Hydroperoxyfettsäuren, ungesättigten 9R-Hydroperoxyfettsäuren, ihren Derivaten und Mischungen davon; mehr bevorzugt ungesättigten Dihydroxyfettsäuren; noch mehr bevorzugt 5,8-Dihydroxyölsäure.

**5.** Zusammensetzung nach einem der vorstehenden Ansprüche, ferner umfassend ein oder mehrere Coenzyme, ausgewählt aus der Gruppe, bestehend aus: Fettsäureperoxidasen (EC 1.11.1.3), unspezifischen Peroxygenasen (EC 1.11.2.1), Pflanzensamenperoxygenasen (EC 1.11.2.3), Fettsäureperoxygenasen (EC1.11.2.4), Linoleat-13S-Lipoxygenasen (EC 1.13.11.12), Arachidonat-12-Lipoxygenasen (E.C. 1.13.11.31), Arachidonat-15-Lipoxygenase (EC 1.13.11.33), Arachidonat-5-Lipoxygenasen (EC 1.13.11.34), Arachidonat-8-Lipoxygenasen (EC 1.13.11.40), Linoleat-11-Lipoxygenasen (EC 1.13.11.45), Linoleat-9S-Lipoxygenasen (EC 1.13.11.58), Linoleat-8R-Lipoxygenasen (EC 1.13.11.60), Linoleat-9R-Lipoxygenasen (EC 1.13.11.61), Linoleat-10R-Lipoxygenasen (EC 1.13.11.62), Oleat-10S-Lipoxygenasen (EC 1.13.11.77), Linoleat-9/13-Lipoxygenasen (EC 1.13.11.B6), Linoleat-10S-Lipoxygenasen, unspezifischer Monooxygenase (EC 1.14.14.1), Alkan-1-Monooxygenase (EC 1.14.15.3), Oleat-12-Hydroxylasen (EC 1.14.18.4), Cyclooxygenasen (EC 1.14.99.1), Fettsäureamidhydrolase (EC 3.5.1.99), Oleathydratasen (EC 4.2.1.53), Allenoxidsynthasen (EC 4.2.1.92), Hydroperoxidisomerasen (EC 4.2.1.92, EC 5.3.99.1, EC 5.4.4.5, EC 5.4.4.6), Hydroperoxidlyasen (EC 4.2.1.92), Hydroperoxiddehydratasen (EC 4.2.1.92), Divinylethersynthasen (EC 4.2.1.121, EC 4.2.1.B8, EC 4.2.1.B9), Linoleatisomerasen (EC 5.2.1.5), Linoleat-(10E,12Z)-Isomerasen (EC 5.3.3.B2), 9,12-Octadecadienoat-8-Hydroperoxid-8R-Isomerasen (EC 5.4.4.5), 9,12-Octadecadienoat-8-Hydroperoxid-8S-Isomerasen (EC 5.4.4.6), 7,10-Hydroperoxiddiolsynthasen, Fettsäuredecarboxylasen (OleT-ähnlich), eisenabhängige Decarboxylasen (UndA-ähnlich), Epoxyalkoholsynthasen, Amylasen, Lipasen, Proteasen, Cellulasen und Mischungen davon, vorzugsweise Linoleat-9S-Lipoxygenasen (EC 1.13.11.58), Linoleat-8R-Lipoxygenasen (EC 1.13.11.60), Linoleat-9R-Lipoxygenasen (EC 1.13.11.61), Linoleat-10R-Lipoxygenasen (EC 1.13.11.62), Oleat-10S-Lipoxygenasen (EC 1.13.11.77), Linoleat-9/13-Lipoxygenasen (EC 1.13.11.B6), Linoleat-10S-Lipoxygenasen, Oleathydratasen (EC 4.2.1.53), Hydroperoxidisomerasen (EC 4.2.1.92, EC 5.3.99.1, EC 5.4.4.5, EC 5.4.4.6), Hydroperoxidlyasen (EC 4.2.1.92), Hydroperoxiddehydratasen (EC 4.2.1.92), 9,12-Octadecadienoat-8-Hydroperoxid-8R-Isomerasen (EC 5.4.4.5), 9,12-Octadecadienoat-8-Hydroperoxid-8S-Isomerasen (EC 5.4.4.6), 7,10-Hydroperoxid-Diolsynthasen, Fettsäuredecarboxylasen (OleT-ähnlich), eisenabhängige Decarboxylasen (UndA-ähnlich) und Mischung daher, mehr bevorzugt Oleat-10S-Lipoxygenasen (EC 1.13.11.77), 9,12-Octadecadienoat-8-Hydroperoxid-8R-Isomerasen (EC 5.4.4.5), 9,12-Octadecadienoat-8-Hydroperoxid-8S-Isomerasen (EC 5.4.4.6), 7,10-Hydroperoxid-Diolsynthasen und Mischungen davon.

6. Zusammensetzung nach einem der vorstehenden Ansprüche, wobei:

a) die Diolsynthasen in einer Menge von 0,0001 Gew.-% bis 1 Gew.-%, vorzugsweise von 0,001 Gew.-% bis 0,2 Gew.-%, nach Gewicht der Reinigungszusammensetzung basierend auf aktivem Protein, vorhanden sind.

7. Zusammensetzung nach einem der vorstehenden Ansprüche, wobei:
b) das Tensidsystem in einer Menge von 1 Gew.-% bis 60 Gew.-%, vorzugsweise von 5 Gew.-% bis 50 Gew.-%, nach Gewicht der Reinigungszusammensetzung, vorhanden ist.

8. Zusammensetzung nach einem der vorstehenden Ansprüche, wobei das amphotere Tensid Aminoxidtensid und das zwitterionische Tensid Betaintensid ist.

9. Zusammensetzung nach einem der vorstehenden Ansprüche, ferner umfassend einen Enzymstabilisator, ausgewählt aus der Gruppe, bestehend aus chemischen und physikalischen Stabilisatoren, wobei der physikalische Stabilisator vorzugsweise eingekapseltes Enzym umfasst.

10. Zusammensetzung nach einem der vorstehenden Ansprüche, ferner umfassend einen Chelatbildner, vorzugsweise ausgewählt aus der Gruppe, umfassend Carboxylatchelatbildner, Aminocarboxylatchelatbildner, Aminophosphonatchelatbildner und Mischungen davon, vorzugsweise ausgewählt aus der Gruppe aus MGDA (Methylglycin-N,N-diessigsäure), GLDA (Glutamat-N,N-diessigsäure) und Mischungen davon.

11. Zusammensetzung nach einem der vorstehenden Ansprüche, wobei die anionischen Tenside ausgewählt sind aus der Gruppe, bestehend aus Alkylsulfaten, Alkylalkoxysulfaten, vorzugsweise Alkylethoxysulfaten und Mischungen davon, wobei die anionischen Tenside vorzugsweise eine Kombination sind von Alkylsulfaten und Alkylethoxysulfaten mit einem kombinierten durchschnittlichen Ethoxylierungsgrad von weniger als 5, vorzugsweise weniger als 3, mehr bevorzugt weniger als 2 und mehr als 0,5, und einem durchschnittlichen Verzweigungsniveau von 5 % bis 40 %, mehr bevorzugt von 10 % bis 35 % und noch mehr bevorzugt von 20 % bis 30 %.

12. Zusammensetzung nach einem der vorstehenden Ansprüche, wobei die anionischen Tenside eine Kombination von Alkylsulfat und Alkylethoxysulfat sind und die Cotenside Aminoxidtenside sind, vorzugsweise Alkyldimethylaminoxid oder Alkylamidopropyldimethylaminoxidtensid, und wobei die anionischen Tenside und die Aminoxidtenside in einem Gewichtsverhältnis zwischen 3 : 1 bis 2,5 : 1 vorliegen.

13. Verfahren zum Geschirrspülen von Hand, umfassend die Schritte des Abgebens einer Reinigungszusammensetzung nach einem der vorstehenden Ansprüche in ein Wasservolumen, um eine Waschlösung zu bilden, und Eintauchen des Geschirrs in die Lösung.

14. Verfahren nach Anspruch 13, wobei die Diolsynthasen in einer Konzentration von 0,005 ppm bis 15 ppm, vorzugsweise von 0,02 ppm bis 0,5 ppm, in einer wässrigen Waschflotte während des Waschprozesses vorhanden sind.

## Revendications

1. Composition détergente comprenant :

a) une ou plusieurs diol synthases susceptibles de convertir un ou plusieurs acides gras insaturés en une ou plusieurs oxylipines, de préférence les diol synthases sont choisies dans le groupe constitué de linoléate diol synthases, oléate diol synthases, et des mélanges de celles-ci, plus préférablement dans laquelle les diol synthases sont choisies dans le groupe constitué de : linoléate diol synthases (EC 1.13.11.44), 5,8-linoléate diol synthases (EC 1.13.11.60 et EC 5.4.4.5), 7,8-linoléate diol synthases (EC 1.13.11.60 et EC 5.4.4.6), 9,14-linoléate diol synthases (EC 1.13.11.B1), 8,11-linoléate diol synthases, oléate diol synthases, et des mélanges de celles-ci ; encore plus préférablement 5,8-linoléate diol synthases (EC 1.13.11.60 et EC 5.4.4.5), et des mélanges de celles-ci ; et
b) un système tensioactif comprenant :

i) un ou plusieurs agents tensioactifs anioniques ; et
ii) un ou plusieurs cotensioactifs choisis dans le groupe constitué d'agent tensioactif amphotère, agent tensioactif zwittérionique, et des mélanges de ceux-ci ;

dans laquelle le rapport pondéral des agents tensioactifs anioniques aux cotensioactifs est inférieur à 9:1, plus préférablement de 5:1 à 1:1, plus préférablement de 4:1 à 2:1 ;
dans laquelle la composition détergente est une composition détergente liquide de lavage manuel de la vaisselle.

**2.** Composition selon la revendication 1, dans laquelle les acides gras insaturés sont choisis dans le groupe constitué de : acides gras mono-insaturés, acides gras di-insaturés, acides gras tri-insaturés, acides gras tétra-insaturés, acides gras penta-insaturés, acides gras hexa-insaturés, et des mélanges de ceux-ci ; de préférence acide myristoléique, acide palmitoléique, acide sapiénique, acide oléique, acide élaïdique, acide vaccénique, acide linoléique, acide linoélaïdique, acide $\alpha$-linolénique, acide $\gamma$-linolénique, acide gadoléique, acide $\alpha$-éléostéarique, acide $\beta$-éléostéarique, acide ricinoléique, acide eicosénique, acide arachidonique, acide eicosapentaénoïque, acide érucique, acide docosadiénoïque, acide docosahexaénoïque, acide tétracosénoïque, et des mélanges de ceux-ci ; de préférence acide palmitoléique, acide oléique, acide linoléique, acide $\alpha$-linolénique, acide $\gamma$-linolénique, et des mélanges de ceux-ci ; plus préférablement acide oléique.

**3.** Composition selon une quelconque revendication précédente, où les 5,8-linoléate diol synthases (EC 1.13.11.60 et EC 5.4.4.5) ont au moins 80 %, de préférence au moins 85 %, de préférence au moins 90 %, de préférence au moins 95 %, de préférence au moins 98 % ou de préférence même 100 % d'identité telle que calculée sur la longueur entière de la séquence alignée vis-à-vis de la longueur entière d'au moins une séquence de référence des diol synthases de type sauvage choisies dans le groupe constitué de *Emericella nidulans* PpoA (SEQ ID NO: 1), *Aspergillus fumigatus* PpoA (SEQ ID NO: 2), *Aspergillus terreus* PpoA (SEQ ID NO: *3), Aspergillus kawachii* PpoA (SEQ ID NO: 4), *Aspergillus clavatus* PpoA (SEQ ID NO: 5), *Aspergillus niger* PpoA (SEQ ID NO: 6), et des mélanges de celles-ci ; plus préférablement *Emericella nidulans* PpoA (SEQ ID NO: 1).

**4.** Composition selon l'une quelconque des revendications précédentes, dans laquelle les oxylipines sont choisies dans le groupe constitué de : acides gras hydroperoxy, acides gras monohydroxy, acides gras dihydroxy, acides gras trihydroxy, acides gras polyhydroxy, leurs dérivés, et des mélanges de ceux-ci ; de préférence les oxylipines sont choisies dans le groupe constitué de : acides gras monohydroxy insaturés, acides gras dihydroxy insaturés, acides gras 8R-hydroperoxy insaturés, acides gras 9R-hydroperoxy insaturés, leurs dérivés, et des mélanges de ceux-ci ; plus préférablement des acides gras dihydroxy insaturés ; encore plus préférablement l'acide 5,8-dihydroxy oléique.

**5.** Composition selon l'une quelconque des revendications précédentes, comprenant en outre une ou plusieurs coenzymes choisies dans le groupe constitué de : peroxydases d'acide gras (EC 1.11.1.3), peroxygénases non spécifiques (EC 1.11.2.1), peroxygénases de semences de plantes (EC 1.11.2.3), peroxygénases d'acide gras (EC1.11.2.4), linoléate 13S-lipoxygénases (EC 1.13.11.12), arachidonate 12-lipoxygénases (E.C. 1.13.11.31), arachidonate 15-lipoxygénase (EC 1.13.11.33), arachidonate 5-lipoxygénases (EC 1.13.11.34), arachidonate 8-lipoxygénases (EC 1.13.11.40), linoléate 11-lipoxygénases (EC 1.13.11.45), linoléate 9S-lipoxygénases (EC 1.13.11.58), linoléate 8R-lipoxygénases (EC 1.13.11.60), linoléate 9R-lipoxygénases (EC 1.13.11.61), linoléate 10R-lipoxygénases (EC 1.13.11.62), oléate 10S-lipoxygénases (EC 1.13.11.77), linoléate 9/13-lipoxygénases (EC 1.13.11.B6), linoléate 10S-lipoxygénases, mono-oxygénase non spécifique (EC 1.14.14.1), alcane 1-mono-oxygénase (EC 1.14.15.3), oléate 12-hydroxylases (EC 1.14.18.4), cyclo-oxygénases (EC 1.14.99.1), hydrolase d'amide d'acide gras (EC 3.5.1.99), oléate hydratases (EC 4.2.1.53), allène oxyde synthases (EC 4.2.1.92), hydroperoxyde isomérases (EC 4.2.1.92, EC 5.3.99.1, EC 5.4.4.5, EC 5.4.4.6), hydroperoxyde lyases (EC 4.2.1.92), hydroperoxyde déshydratases (EC 4.2.1.92), divinyléther synthases (EC 4.2.1.121, EC 4.2.1.B8, EC 4.2.1.B9), linoléate isomérases (EC 5.2.1.5), linoléate (10E,12Z)-isomérases (EC 5.3.3.B2), 9,12-octadécadiénoate 8-hydroperoxyde 8R-isomérases (EC 5.4.4.5), 9,12-octadécadiénoate 8-hydroperoxyde 8S-isomérases (EC 5.4.4.6), 7,10-hydroperoxyde diol synthases, décarboxylases d'acide gras (de type OleT), décarboxylases dépendantes du fer (de type UndA), époxy alcool synthases, amylases, lipases, protéases, cellulases, et des mélanges de celle-ci, de préférence linoléate 9S-lipoxygénases (EC 1.13.11.58), linoléate 8R-lipoxygénases (EC 1.13.11.60), linoléate 9R-lipoxygénases (EC 1.13.11.61), linoléate 10R-lipoxygénases (EC 1.13.11.62), oléate 10S-lipoxygénases (EC 1.13.11.77), linoléate 9/13-lipoxygénases (EC 1.13.11.B6), linoléate 10S-lipoxygénases, oléate hydratases (EC 4.2.1.53), hydroperoxyde isomérases (EC 4.2.1.92, EC 5.3.99.1, EC 5.4.4.5, EC 5.4.4.6), hydroperoxyde lyases (EC 4.2.1.92), hydroperoxyde déshydratases (EC 4.2.1.92), 9,12-octadécadiénoate 8-hydroperoxyde 8R-isomérases (EC 5.4.4.5), 9,12-octadécadiénoate 8-hydroperoxyde 8S-isomérases (EC 5.4.4.6), 7,10-hydroperoxyde diol synthases, décarboxylases d'acide gras (de type OleT), décarboxylases dépendantes du fer (de type UndA), et un mélange pour cette raison, plus préférablement oléate 10S-lipoxygénases (EC 1.13.11.77), 9,12-octadécadiénoate 8-hydroperoxyde 8R-isomérases (EC 5.4.4.5), 9,12-octadécadiénoate 8-hydroperoxyde 8S-isomérases (EC 5.4.4.6), 7,10-hydroperoxyde diol synthases, et des mélanges de celles-ci.

**6.** Composition selon l'une quelconque des revendications précédentes, dans laquelle :

a) les diol synthases sont présentes en une quantité allant de 0,0001 % en poids à 1 % en poids, de préférence de 0,001 % en poids à 0,2 % en poids, en poids de la composition de nettoyage sur une base de protéine active.

**7.** Composition selon l'une quelconque des revendications précédentes, dans laquelle :
b) le système tensioactif est présent en une quantité allant de 1 % en poids à 60 % en poids, de préférence de 5 % en poids à 50 % en poids, en poids de la composition de nettoyage.

**8.** Composition selon l'une quelconque des revendications précédentes, dans laquelle l'agent tensioactif amphotère est un agent tensioactif d'oxyde d'amine et l'agent tensioactif zwittérionique est un agent tensioactif de bétaïne.

**9.** Composition selon l'une quelconque des revendications précédentes, comprenant en outre un stabilisant d'enzymes choisi dans le groupe constitué de stabilisants chimiques et physiques, de préférence le stabilisant physique comprend une enzyme encapsulée.

**10.** Composition selon l'une quelconque des revendications précédentes, comprenant en outre un agent chélatant, choisi de préférence parmi le groupe comprenant des agents chélatants carboxylate, des agents chélatants aminocarboxylate, des agents chélatants aminophosphonate, et des mélanges de ceux-ci, choisi de préférence parmi le groupe de MGDA (acide méthylglycine-N,N-diacétique), de GLDA (acide glutamique-N,N-diacétique), et de mélanges de ceux-ci.

**11.** Composition selon l'une quelconque des revendications précédentes, dans laquelle les agents tensioactifs anioniques sont choisis dans le groupe constitué de sulfates d'alkyle, alcoxy-sulfates d'alkyle de préférence éthoxy-sulfates d'alkyle, et des mélanges de ceux-ci, de préférence les agents tensioactifs anioniques sont une combinaison de sulfates d'alkyle et d'éthoxy-sulfates d'alkyle avec un degré moyen d'éthoxylation combiné inférieur à 5, de préférence inférieur à 3, plus préférablement inférieur à 2 et supérieur à 0,5 et un taux moyen de ramification allant de 5 % à 40 %, plus préférablement de 10 % à 35 %, et même plus préférablement de 20 % à 30 %.

**12.** Composition selon l'une quelconque des revendications précédentes, dans laquelle les agents tensioactifs anioniques sont une combinaison de sulfate d'alkyle et d'éthoxy-sulfate d'alkyle et les cotensioactifs sont des agents tensioactifs d'oxyde d'amine de préférence un agent tensioactif oxyde d'alkyl-diméthylamine ou oxyde d'alkylamidopropyldiméthylamine, et dans laquelle les agents tensioactifs anioniques et les agents tensioactifs d'oxyde d'amine sont dans un rapport pondéral compris entre 3:1 et 2,5:1.

**13.** Procédé de lavage manuel de la vaisselle comprenant les étapes consistant à distribuer une composition détergente selon l'une quelconque des revendications précédentes dans un volume d'eau pour former une solution de lavage et à immerger la vaisselle dans la solution.

**14.** Procédé selon la revendication 13, dans lequel les diol synthases sont présentes à une concentration allant de 0,005 ppm à 15 ppm, de préférence de 0,02 ppm à 0,5 ppm, dans une liqueur de lavage aqueuse pendant le processus de lavage.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 2017321161 A1
- WO 201219844 A
- WO 201219849 A
- WO 201219848 A
- US 3915903 A
- WO 2007135645 A
- EP 172013005


### Non-patent literature cited in the description


- Water Soluble Film Flakes Incorporating Functional Ingredients. *IP.COM Journal,* 02 January 2014
- **BRODHUN, F. et al.** *J. Biol. Chem.,* 2009, vol. 284 (18), 11792-11805
- **JERNEREN, F.** *Biochim. Biophys. Acta, Mol. Cell Biol. Lipids,* 2010, vol. 1801 (4), 503-507
- **SEO, M.-J. et al.** *Appl. Microbiol. Biotechnol.,* 2016, vol. 100 (7), 3087-3099
- **SHIN, K.-C. et al.** *J. Lipid Res.,* 2016, vol. 57 (2), 207-218
- **LANG, I. et al.** *Biochem. J.,* 2008, vol. 410 (2), 347-357
- **KIM, K.-R. ; D.-K. OH.** *Biotechnol. Adv.,* 2013, vol. 31 (8), 1473-1485
- **PETERSEN TN. ; BRUNAK S. ; HEIJNE G. ; NIELSEN H.** *Nature Methods,* 2011, vol. 8, 785-786
- **NEEDLEMAN ; WUNSCH.** *J. Mol. Biol.,* 1970, vol. 48, 443-453
- **HENIKOFF S. ; HENIKOFF J.G.** *P.N.A.S.,* 1992, vol. 89, 10915-10919
- **ROBERT LAUGHLIN.** The Aqueous Phase Behaviour of Surfactants. Academic Press, 1994, 538-542

SEQUENCE LISTING

<110> The Procter & Gamble Company

<120> DETERGENT COMPOSITION

<130> CM04894FM

<150> EP172013005.5
<151> 2017-11-13

<160> 17

<170> PatentIn version 3.5

<210> 1
<211> 1081
<212> PRT
<213> Emericella nidulans

<400> 1

```
Met Gly Glu Asp Lys Glu Thr Asn Ile Leu Ala Gly Leu Gly Asn Thr
1               5                   10                  15

Ile Ser Gln Val Glu Asn Val Val Ala Ala Ser Leu Arg Pro Leu Pro
            20                  25                  30

Thr Ala Thr Gly Asp Gly Thr Tyr Val Ala Glu Ser Thr Gln Thr Gly
        35                  40                  45

Leu Ala Lys Asp Leu Ser His Val Asp Leu Lys Asp Val Arg Thr Leu
    50                  55                  60

Ala Glu Val Val Lys Ser Ala Ala Thr Gly Glu Pro Val Asp Asp Lys
65                  70                  75                  80

Gln Tyr Ile Met Glu Arg Val Ile Gln Leu Ala Ala Gly Leu Pro Ser
                85                  90                  95

Thr Ser Arg Asn Ala Ala Glu Leu Thr Lys Ser Phe Leu Asn Met Leu
            100                 105                 110

Trp Asn Asp Leu Glu His Pro Pro Val Ser Tyr Leu Gly Ala Asp Ser
        115                 120                 125

Met His Arg Lys Ala Asp Gly Ser Gly Asn Asn Arg Phe Trp Pro Gln
    130                 135                 140

Leu Gly Ala Ala Gly Ser Ala Tyr Ala Arg Ser Val Arg Pro Lys Thr
145                 150                 155                 160

Met Gln Ser Pro Ser Leu Pro Asp Pro Glu Thr Ile Phe Asp Cys Leu
```

165 170 175

Leu Arg Arg Lys Glu Tyr Arg Glu His Pro Asn Lys Ile Ser Ser Val
180 185 190

Leu Phe Tyr Leu Ala Ser Ile Ile Ile His Asp Leu Phe Gln Thr Asp
195 200 205

Pro Lys Asp Asn Ser Val Ser Lys Thr Ser Ser Tyr Leu Asp Leu Ser
210 215 220

Pro Leu Tyr Gly Asn Asn Gln Asp Glu Gln Asn Leu Val Arg Thr Phe
225 230 235 240

Lys Asp Gly Lys Leu Lys Pro Asp Cys Phe Ala Thr Lys Arg Val Leu
245 250 255

Gly Phe Pro Pro Gly Val Gly Val Leu Leu Ile Met Phe Asn Arg Phe
260 265 270

His Asn Tyr Val Val Asp Gln Leu Ala Ala Ile Asn Glu Cys Gly Arg
275 280 285

Phe Thr Lys Pro Asp Glu Ser Asn Val Asp Glu Tyr Ala Lys Tyr Asp
290 295 300

Asn Asn Leu Phe Gln Thr Gly Arg Leu Val Thr Cys Gly Leu Tyr Ala
305 310 315 320

Asn Ile Ile Leu Lys Asp Tyr Val Arg Thr Ile Leu Asn Ile Asn Arg
325 330 335

Thr Asp Ser Thr Trp Ser Leu Asp Pro Arg Met Glu Met Lys Asp Gly
340 345 350

Leu Leu Gly Glu Ala Ala Ala Met Ala Thr Gly Asn Gln Val Ser Ala
355 360 365

Glu Phe Asn Val Val Tyr Arg Trp His Ala Cys Ile Ser Lys Arg Asp
370 375 380

Glu Lys Trp Thr Glu Asp Phe His Arg Glu Ile Met Pro Gly Val Asp
385 390 395 400

Pro Ser Thr Leu Ser Met Gln Asp Phe Val Ala Gly Leu Gly Arg Trp
405 410 415

Gln Ala Gly Leu Pro Gln Glu Pro Leu Glu Arg Pro Phe Ser Gly Leu
420 425 430

Gln Arg Lys Pro Asp Gly Ala Phe Asn Asp Asp Asp Leu Val Asn Leu
435 440 445

Phe Glu Lys Ser Val Glu Asp Cys Ala Gly Ala Phe Gly Ala Ser His
450 455 460

Val Pro Ala Ile Phe Lys Ser Val Glu Ala Leu Gly Ile Met Gln Ala
465 470 475 480

Arg Arg Trp Asn Leu Gly Thr Leu Asn Glu Phe Arg Gln Tyr Phe Asn
485 490 495

Leu Ala Pro His Lys Thr Phe Glu Asp Ile Asn Ser Asp Pro Tyr Ile
500 505 510

Ala Asp Gln Leu Lys Arg Leu Tyr Asp His Pro Asp Leu Val Glu Ile
515 520 525

Tyr Pro Gly Val Val Val Glu Glu Ala Lys Asp Ser Met Val Pro Gly
530 535 540

Ser Gly Leu Cys Thr Asn Phe Thr Ile Ser Arg Ala Ile Leu Ser Asp
545 550 555 560

Ala Val Ala Leu Val Arg Gly Asp Arg Phe Tyr Thr Val Asp Tyr Thr
565 570 575

Pro Lys His Leu Thr Asn Trp Ala Tyr Asn Glu Ile Gln Pro Asn Asn
580 585 590

Ala Val Asp Gln Gly Gln Val Phe Tyr Lys Leu Val Leu Arg Ala Phe
595 600 605

Pro Asn His Phe Asp Gly Asn Ser Ile Tyr Ala His Phe Pro Leu Val
610 615 620

Val Pro Ser Glu Asn Glu Lys Ile Leu Lys Ser Leu Gly Val Ala Glu
625 630 635 640

Lys Tyr Ser Trp Glu Lys Pro Ser Arg Ile Ser His Pro Ile Phe Ile
645 650 655

Ser Ser His Ala Ala Cys Met Ser Ile Leu Glu Asn Gln Glu Thr Phe
660 665 670

Lys Val Thr Trp Gly Arg Lys Ile Glu Phe Leu Met Gln Arg Asp Lys
675 680 685

His Gln Tyr Gly Lys Asp Phe Met Leu Ser Gly Asp Arg Pro Pro Asn
690 695 700

Ala Ala Ser Arg Lys Met Met Gly Ser Ala Leu Tyr Arg Asp Glu Trp
705 710 715 720

Glu Ala Glu Val Lys Asn Phe Tyr Glu Gln Thr Thr Leu Lys Leu Leu
725 730 735

His Lys Asn Ser Tyr Lys Leu Ala Gly Val Asn Gln Val Asp Ile Val
740 745 750

Arg Asp Val Ala Asn Leu Ala Gln Val His Phe Cys Ser Ser Val Phe
755 760 765

Ser Leu Pro Leu Lys Thr Asp Ser Asn Pro Arg Gly Ile Phe Ala Glu
770 775 780

Ser Glu Leu Tyr Lys Ile Met Ala Ala Val Phe Thr Ala Ile Phe Tyr
785 790 795 800

Asp Ala Asp Ile Gly Lys Ser Phe Glu Leu Asn Gln Ala Ala Arg Thr
805 810 815

Val Thr Gln Gln Leu Gly Gln Leu Thr Met Ala Asn Val Glu Ile Ile
820 825 830

Ala Lys Thr Gly Leu Ile Ala Asn Leu Val Asn Arg Leu His Arg Arg
835 840 845

Asp Val Leu Ser Glu Tyr Gly Ile His Met Ile Gln Arg Leu Leu Asp
850 855 860

Ser Gly Leu Pro Ala Thr Glu Ile Val Trp Thr His Ile Leu Pro Thr
865 870 875 880

Ala Gly Gly Met Val Ala Asn Gln Ala Gln Leu Phe Ser Gln Cys Leu
885 890 895

Asp Tyr Tyr Leu Ser Glu Glu Gly Ser Gly His Leu Pro Glu Ile Asn
900 905 910

Arg Leu Ala Lys Glu Asn Thr Pro Glu Ala Asp Glu Leu Leu Thr Arg
915 920 925

Tyr Phe Met Glu Gly Ala Arg Leu Arg Ser Ser Val Ala Leu Pro Arg
930 935 940

Val Ala Ala Gln Pro Thr Val Val Glu Asp Asn Gly Glu Lys Leu Thr
945 950 955 960

Ile Lys Ala Gly Gln Val Val Met Cys Asn Leu Val Ser Ala Cys Met
965 970 975

Asp Pro Thr Ala Phe Pro Asp Pro Glu Lys Val Lys Leu Asp Arg Asp
980 985 990

Met Asn Leu Tyr Ala His Phe Gly Phe Gly Pro His Lys Cys Leu Gly
995 1000 1005

Leu Asp Leu Cys Lys Thr Gly Leu Ser Thr Met Leu Lys Val Leu
1010 1015 1020

Gly Arg Leu Asp Asn Leu Arg Arg Ala Pro Gly Ala Gln Gly Gln
1025 1030 1035

Leu Lys Lys Leu Ser Gly Pro Gly Gly Ile Ala Lys Tyr Met Asn
1040 1045 1050

Glu Asp Gln Ser Gly Phe Thr Pro Phe Pro Ser Thr Met Lys Ile
1055 1060 1065

Gln Trp Asp Gly Glu Leu Pro Gln Leu Lys Glu Asp Phe
1070 1075 1080

<210> 2
<211> 1079
<212> PRT
<213> Aspergillus fumigatus

<400> 2

Met Ser Glu Lys Gln Thr Gly Ser Ala Asn Gly Gly Leu Gly Lys Thr
1 5 10 15

Leu Ala Gln Leu Glu Gln Val Val Ser Ala Ser Leu Arg Pro Leu Pro
20 25 30

Ser Gln Thr Gly Asp Gly Thr Tyr Val Thr Glu Gln Val Lys Thr Gly
35 40 45

Ile Leu Lys Asp Leu Ser His Val Asp Leu Gly Asp Leu Lys Thr Leu
50 55 60

Val Asp Val Ser Lys Ser Ala Leu Thr Gly Glu Ala Leu Asp Asp Arg
65 70 75 80

Lys Tyr Ile Met Glu Arg Val Ile Gln Leu Ser Ala Gly Leu Pro Ser
85 90 95

Thr Ser Gln Ile Gly Lys Glu Leu Thr Asn Thr Phe Leu Thr Thr Leu
100 105 110

Trp Asn Asp Leu Glu His Pro Pro Ile Ser Tyr Leu Gly Arg Asp Ala
115 120 125

Met Tyr Arg Arg Ala Asp Gly Ser Gly Asn Asn Val Leu Trp Pro His
130 135 140

Ile Gly Ala Ala Gly Thr Pro Tyr Ala Arg Ser Val Gln Pro Lys Thr
145 150 155 160

Val Gln Ser Pro Asn Leu Pro Asp Pro Glu Thr Leu Phe Asp Cys Leu
165 170 175

Leu Ala Arg Lys Glu Tyr Lys Glu His Pro Asn Lys Ile Ser Ser Val
180 185 190

Leu Phe Tyr Ile Ala Ser Ile Ile Ile His Asp Leu Phe Glu Thr Asp
195 200 205

Arg Lys Asp Pro Ala Ile Ser Leu Thr Ser Ser Tyr Leu Asp Leu Ser
210 215 220

Pro Leu Tyr Gly Asn Asn Gln Gln Glu Gln Asp Leu Ile Arg Thr Phe
225 230 235 240

Lys Asp Gly Lys Leu Lys Pro Asp Cys Phe Ser Thr Lys Arg Val Leu
245 250 255

Gly Phe Pro Pro Gly Val Gly Val Val Leu Ile Met Phe Asn Arg Phe
260 265 270

His Asn Tyr Val Val Glu Lys Leu Ala Met Ile Asn Glu Gly Gly Arg
275 280 285

Phe Thr Lys Pro Gln Glu Ser Asp Thr Ala Ala Tyr Ala Lys Tyr Asp
290 295 300

Asn Asp Leu Phe Gln Thr Gly Arg Leu Val Thr Cys Gly Leu Tyr Val

305 310 315 320

Asn Ile Ile Leu Lys Asp Tyr Val Arg Thr Ile Leu Asn Ile Asn Arg
325 330 335

Thr Asp Ser Ile Trp Ser Leu Asp Pro Arg Ser Glu Met Lys Asp Gly
340 345 350

Leu Leu Gly Arg Ala Ala Ala Gln Ala Thr Gly Asn Gln Val Ala Ala
355 360 365

Glu Phe Asn Leu Val Tyr Arg Trp His Ser Cys Ile Ser Gln Arg Asp
370 375 380

Gln Lys Trp Thr Glu Asp Met Tyr Gln Glu Leu Phe Pro Gly Gln Asp
385 390 395 400

Pro Ser Lys Ile Ser Leu Gln Asp Phe Leu Arg Gly Leu Gly Arg Trp
405 410 415

Glu Ala Lys Leu Pro Gly Glu Pro Arg Glu Arg Pro Phe Ala Gly Leu
420 425 430

Gln Arg Lys Ala Asp Gly Ser Tyr Asp Asp Asn Asp Leu Val Lys Ile
435 440 445

Phe Glu Glu Ser Val Glu Asp Cys Ala Gly Ala Phe Gly Ala Leu His
450 455 460

Val Pro Thr Val Phe Arg Ser Ile Glu Ala Leu Gly Ile Gln Gln Ala
465 470 475 480

Arg Ser Trp Asn Leu Ala Thr Leu Asn Glu Phe Arg Lys Tyr Phe Asn
485 490 495

Leu Ala Pro Tyr Lys Thr Phe Glu Glu Ile Asn Ser Asp Pro Tyr Val
500 505 510

Ala Asp Gln Leu Lys Arg Leu Tyr Asp His Pro Asp Arg Val Glu Ile
515 520 525

Tyr Pro Gly Ile Ile Val Glu Asp Ala Lys Glu Ser Met Ala Pro Gly
530 535 540

Ser Gly Leu Cys Thr Asn Phe Thr Ile Ser Arg Ala Ile Leu Ser Asp
545 550 555 560

```
Ala Val Ala Leu Val Arg Gly Asp Arg Phe His Thr Val Asp Phe Thr
                565                 570                 575

Pro Lys His Leu Thr Asn Trp Ala Tyr Asn Glu Ile Gln Pro Gln Asp
            580                 585                 590

Ser Val Asp Gln Thr His Val Phe Tyr Lys Leu Val Leu Arg Ala Phe
        595                 600                 605

Pro Asn His Phe Arg Gly Asp Ser Ile Tyr Ala His Phe Pro Leu Val
    610                 615                 620

Val Pro Ser Glu Asn Lys Lys Ile Leu Thr Lys Leu Gly Thr Ala Asp
625                 630                 635                 640

Lys Tyr Ser Trp Asp Arg Pro Asn Tyr Thr Pro Pro Pro Gln Phe Ile
                645                 650                 655

Asn Ser His Ser Ala Cys Met Ser Ile Leu Ser Asp Gln Glu Thr Phe
            660                 665                 670

Lys Val Thr Trp Gly Ser Lys Ile Glu Phe Leu Met Arg His Asn Asn
        675                 680                 685

Gln Pro Tyr Gly Arg Asp Phe Met Leu Ser Gly Asp Arg Thr Pro Asn
    690                 695                 700

Ala Met Ser Arg Gln Met Met Gly Lys Ala Leu Tyr Arg Asp Lys Trp
705                 710                 715                 720

Glu Thr Glu Val Lys Arg Phe Tyr Glu Asn Ile Thr Leu Lys Leu Leu
                725                 730                 735

His Arg Tyr Ser Tyr Lys Leu Ala Gly Val Asn Gln Val Asp Val Val
            740                 745                 750

Arg Asp Ile Ala Asn Leu Ala Gln Val His Phe Cys Ala Ser Val Phe
        755                 760                 765

Ser Leu Pro Leu Lys Thr Glu Ser Asn Pro Arg Gly Ile Phe Thr Glu
    770                 775                 780

Ser Glu Leu Tyr Gln Ile Met Ala Val Val Phe Thr Ser Ile Phe Tyr
785                 790                 795                 800

Asp Ala Asp Ile Gly Lys Ser Phe Glu Leu Asn Gln Ala Ala Arg Ala
                805                 810                 815
```

```
Val Thr Gln Gln Leu Gly Gln Leu Thr Leu Ala Asn Val Glu Leu Ile
            820                 825                 830

Ala Lys Thr Gly Phe Ile Ala Asn Leu Val Asn Ser Leu His Arg His
        835                 840                 845

Asp Val Leu Ser Glu Tyr Gly Val His Met Ile Gln Arg Leu Leu Asp
    850                 855                 860

Ser Gly Met Pro Ala Pro Glu Ile Val Trp Thr His Val Leu Pro Thr
865                 870                 875                 880

Ala Gly Gly Met Val Ala Asn Gln Ala Gln Leu Phe Ser Gln Ser Leu
                885                 890                 895

Asp Tyr Tyr Leu Ser Glu Glu Gly Ser Val His Leu Pro Glu Ile Asn
            900                 905                 910

Arg Leu Ala Lys Glu Asp Thr Thr Glu Ala Asp Asp Leu Leu Leu Arg
        915                 920                 925

Tyr Phe Met Glu Gly Ala Arg Ile Arg Ser Ser Val Ala Leu Pro Arg
    930                 935                 940

Val Val Ala Gln Pro Thr Val Val Glu Asp Asn Gly Gln Lys Ile Thr
945                 950                 955                 960

Leu Lys Gln Gly Gln His Ile Ile Cys Asn Leu Val Ser Ala Ser Met
                965                 970                 975

Asp Pro Val Thr Phe Pro Glu Pro Asp Lys Val Lys Leu Asp Arg Asp
            980                 985                 990

Met Asn Leu Tyr Ala His Phe Gly  Phe Gly Pro His Gln  Cys Leu Gly
        995                 1000                1005

Leu Gly  Leu Cys Lys Thr Ala  Leu Thr Thr Met Leu  Lys Val Ile
    1010                1015                1020

Gly Arg  Leu Asp Asn Leu Arg  Arg Ala Pro Gly Gly  Gln Gly Lys
    1025                1030                1035

Leu Lys  Lys Leu Ser Gly Pro  Gly Gly Ile Ala Met  Tyr Met Thr
    1040                1045                1050

Pro Asp  Gln Thr Ala Phe Phe  Pro Phe Pro Thr Thr  Met Lys Ile
    1055                1060                1065
```

Gln Trp Asp Gly Asp Leu Pro Glu Val Lys Glu
1070 1075

<210> 3
<211> 1071
<212> PRT
<213> Aspergillus terreus

<400> 3

Met Gln Gly Ile Gly Lys Ala Ile Ser Gln Leu Glu Lys Val Ala Thr
1 5 10 15

Ala Ser Leu Arg Pro Leu Pro Thr Glu Thr Gly Asp Gly Ser Tyr Val
20 25 30

Ala Glu Ser Thr Ala Thr Gly Leu Val Gln Asp Leu Pro His Val Asp
35 40 45

Leu Gly Asp Leu Lys Thr Leu Leu Asp Val Thr Lys Asn Ala Ala Thr
50 55 60

Gly Glu Pro Ile Asp Asp Lys Gly Tyr Val Met Glu Arg Leu Ile Gln
65 70 75 80

Leu Ala Ser Gly Leu Pro Ser Thr Ser Arg Asn Ala Lys Gln Leu Thr
85 90 95

Ser Ala Phe Leu Asn Gln Leu Trp Asn Asp Leu Asp His Pro Pro Val
100 105 110

Ser Thr Val Gly Gly Glu Tyr Ser His Arg Ser Ala Asp Gly Ser Gly
115 120 125

Asn Asn Ile Leu Trp Pro Gly Ile Gly Ala Ala Gly Ser His Tyr Ala
130 135 140

Arg Ser Val Gln Pro Lys Thr Met Gln Ser Pro Ser Leu Pro Asp Pro
145 150 155 160

Glu Ala Leu Phe Asp Ser Leu Leu Ala Arg Lys Asp Phe Lys Glu His
165 170 175

Pro Asn Lys Ile Ser Ser Val Leu Phe Tyr Ile Ala Ser Ile Ile Ile
180 185 190

His Asp Leu Phe Gln Thr Asp His Arg Asp Ser Ser Ile Asn Arg Thr
195 200 205

```
Ser Ser Tyr Leu Asp Leu Ser Pro Leu Tyr Gly Asn Asn Gln Asp Glu
    210                 215                 220

Gln Tyr Leu Met Arg Thr Phe Lys Asp Gly Lys Leu Lys Pro Asp Cys
225                 230                 235                 240

Phe Ser Ser Lys Arg Ile Leu Gly Phe Pro Pro Gly Val Gly Val Leu
                245                 250                 255

Leu Ile Met Phe Asn Arg Phe His Asn Tyr Val Val Glu Gln Leu Ala
            260                 265                 270

Ala Val Asn Glu Gly Gly Arg Phe Thr Lys Pro Ser Glu Ser Asn Asp
        275                 280                 285

Lys Glu Tyr Ala Lys Tyr Asp Asn Asn Leu Phe Gln Thr Gly Arg Leu
    290                 295                 300

Val Thr Cys Gly Leu Tyr Ile Asn Ile Ile Leu Lys Asp Tyr Val Arg
305                 310                 315                 320

Thr Ile Leu Asn Ile Asn Arg Thr Asn Ser Thr Trp Ser Leu Asp Pro
                325                 330                 335

Arg Met Asp Met Lys Asp Gly Leu Leu Gly Asp Ala Ala Pro Leu Ala
            340                 345                 350

Thr Gly Asn Gln Val Ser Ala Glu Phe Asn Leu Ile Tyr Arg Trp His
        355                 360                 365

Ser Cys Ile Ser Gln Arg Asp Glu Lys Trp Thr Thr Asp Leu Tyr Asn
    370                 375                 380

Asp Ile Phe Ser Asp Lys Gly Gln Glu Asp Ile Pro Leu Asn Glu Phe
385                 390                 395                 400

Met Met Gly Val Gly Lys Trp Glu Ala Gly Leu Pro Gln Gln Pro Ala
                405                 410                 415

Glu Arg Pro Phe Ala Gly Leu Lys Arg Lys Pro Asn Gly Leu Phe Asp
            420                 425                 430

Asp Asp Asp Leu Val Thr Ile Phe Lys Glu Ser Val Glu Asp Cys Ala
        435                 440                 445

Gly Ala Phe Gly Ala Ser His Val Pro Thr Ile Phe Lys Ser Ile Glu
```

450 455 460

Ser Leu Gly Ile Lys Gln Ala Arg Ala Trp Asn Leu Ala Thr Leu Asn
465 470 475 480

Glu Leu Arg Gln Tyr Phe Gly Leu Thr Pro His Lys Thr Phe Glu Asp
485 490 495

Ile Asn Ser Asp Pro Tyr Ile Ser Glu Gln Leu Arg Arg Leu Tyr Asp
500 505 510

His Pro Asp Gln Val Glu Ile Tyr Pro Gly Val Ile Val Glu Glu Thr
515 520 525

Lys Glu Ser Met Leu Pro Gly Ser Gly Leu Cys Thr Asn Phe Thr Ile
530 535 540

Ser Arg Ala Ile Leu Ser Asp Ala Val Ala Leu Val Arg Gly Asp Arg
545 550 555 560

Phe Tyr Thr Val Asp Tyr Thr Pro Lys Gln Leu Thr Asn Trp Ala Phe
565 570 575

Thr Glu Ile Gln Pro Lys Asp Ser Val Asp Gln Gly His Met Phe His
580 585 590

Lys Leu Val Tyr Arg Ala Phe Pro Asn Tyr Phe Lys Gly Asn Ser Val
595 600 605

Tyr Ala His Phe Pro Met Val Val Pro Ser Glu Asn Gln Lys Ile Leu
610 615 620

Thr Ala Leu Gly Ser Ala Glu Lys Tyr Ser Trp Asp Lys Pro Gly Phe
625 630 635 640

Ile His Pro Pro Gln Phe Ile Asn Ser His Ser Thr Cys Val Ser Ile
645 650 655

Leu Ala Asp Gln Glu Thr Phe Lys Val Ser Trp Gly Asp Lys Ile Glu
660 665 670

Phe Leu Met Ser Asn His Asp Lys Ile Tyr Gly Lys Asp Phe Met Leu
675 680 685

Ser Gly Asp Arg Leu Pro Asn Ala Glu Ser Arg Lys Met Met Gly Ala
690 695 700

```
Ala Leu Tyr Thr Asp Gln Trp Glu Glu Glu Val Lys Lys Phe Tyr Glu
705                 710                 715                 720

Lys Ile Thr Leu Lys Leu Leu Lys Lys His Ser Tyr Lys Ile Ala Gly
                725                 730                 735

Val Asn Gln Val Asp Ile Val Arg Asp Val Ala Asn Leu Ala Gln Val
            740                 745                 750

Asn Phe Cys Ala Asn Val Phe Ser Leu Pro Leu Lys Thr Glu Ala Ser
        755                 760                 765

Pro Arg Gly Ile Phe Thr Glu Ser Glu Leu Tyr Met Ile Met Ala Ala
    770                 775                 780

Val Phe Ala Ala Ile Phe Tyr Asp Ala Asp Pro Ala Asn Ser Phe Ala
785                 790                 795                 800

Leu Asn Gln Ala Ala Arg Glu Val Thr Gln Gln Leu Gly Gln Val Thr
                805                 810                 815

Met Ala Asn Val Glu Leu Ile His Lys Thr Gly Phe Ile Ser Asn Leu
            820                 825                 830

Val Asn Gly Leu Gln Arg His Asp Val Leu Ser Asn Tyr Gly Ile His
        835                 840                 845

Met Ile Gln Arg Leu Leu Ala Ser Gly Leu Pro Ala Ser Glu Ile Val
    850                 855                 860

Trp Thr His Leu Leu Pro Thr Ala Gly Gly Met Val Ala Asn Gln Gly
865                 870                 875                 880

Gln Leu Phe Ser Gln Cys Leu Asp Tyr Tyr Leu Ser Glu Glu Gly Ser
                885                 890                 895

Val His Leu Pro Glu Ile Asn Arg Leu Ala Lys Glu Asn Thr Pro Glu
            900                 905                 910

Ala Asp Glu Leu Leu Leu Arg Tyr Phe Met Glu Gly Ala Arg Leu Arg
        915                 920                 925

Ser Ser Val Gly Leu Pro Arg Val Val Ala Lys Pro Thr Val Ile Asp
    930                 935                 940

Asp Asn Gly Thr Lys Leu Thr Leu Lys Glu Gly Gln His Ile Leu Cys
945                 950                 955                 960
```

Asn Leu Val Ala Ala Ser His Asp Pro Val Ser Phe Pro Glu Pro Glu
965 970 975

Lys Val Arg Leu Asp Arg Asp Met Asp Leu Tyr Val His Phe Gly Ser
980 985 990

Gly Pro His Lys Cys Leu Gly Phe Gly Leu Cys Lys Leu Gly Leu Thr
995 1000 1005

Thr Met Leu Lys Val Val Gly Gly Leu Asp Asn Leu Arg Arg Ala
1010 1015 1020

Pro Gly Pro Gln Gly Gln Leu Lys Arg Leu Ala Gly Pro Gly Gly
1025 1030 1035

Ile Ser Lys Tyr Met Thr Ala Asp Gln Ser Gly Phe Phe Pro Phe
1040 1045 1050

Pro Thr Thr Met Lys Ile Gln Trp Asp Gly Asp Leu Pro Glu Pro
1055 1060 1065

Ala Ser Asp
1070

<210> 4
<211> 1080
<212> PRT
<213> Aspergillus kawachii

<400> 4

Met Ser Gly Ser Asn Asn His Ser Ile Val Asn Gly Ile Gly Ser Thr
1 5 10 15

Ile Ser Gln Val Glu Lys Ala Ile Ser Ala Ser Leu Arg Pro Leu Pro
20 25 30

Thr Ala Thr Gly Asn Gly Thr Tyr Val Thr Glu Pro Ala Gln Thr Gly
35 40 45

Ile Val Lys Asp Leu Ser His Val Asp Leu Thr Asp Phe Lys Ala Leu
50 55 60

Leu Glu Val Val Lys Asp Ala Val Thr Gly Gln Pro Val Asp Asp Arg
65 70 75 80

His Tyr Ile Met Glu Arg Val Ile Gln Leu Ala Ala Gly Leu Pro Ser
85 90 95

```
Thr Ser Lys Ser Gly Lys Asp Leu Thr Asn Thr Phe Leu Lys Gln Leu
            100                 105                 110

Trp Asn Asp Leu Glu His Pro Pro Ile Ser Tyr Leu Gly Arg Asn Thr
        115                 120                 125

Ser Tyr Arg Lys Ala Asp Gly Ser Gly Asn Asn Phe Leu Trp Pro His
    130                 135                 140

Ile Gly Ala Ala Gly Ser His Tyr Ala Arg Ser Val Arg Pro Thr Thr
145                 150                 155                 160

Val Gln Ser Pro Ser Leu Pro Asp Pro Ser Thr Leu Phe Glu Ser Leu
                165                 170                 175

Leu Glu Arg Lys Glu Tyr Lys Glu His Pro Asn Lys Ile Ser Ser Val
            180                 185                 190

Leu Phe Tyr Leu Ala Ser Ile Ile Ile His Asp Leu Phe Gln Thr Asp
        195                 200                 205

Arg Asn Asp Tyr Thr Leu Asn Lys Thr Ser Ser Tyr Leu Asp Leu Ser
    210                 215                 220

Pro Leu Tyr Gly Asn Asn Gln Asp Glu Gln Asn Leu Val Arg Ser Phe
225                 230                 235                 240

Lys Asp Gly Lys Leu Lys Pro Asp Cys Phe Ser Ser Lys Arg Val Leu
                245                 250                 255

Gly Phe Pro Pro Gly Val Gly Val Leu Leu Leu Met Phe Asn Arg Phe
            260                 265                 270

His Asn Tyr Val Val Glu Asn Leu Ala Thr Ile Asn Glu Gly Gly Arg
        275                 280                 285

Phe Thr Lys Pro Asp Glu Ser Asp Val Asp Ala Ser Thr Arg Tyr Asp
    290                 295                 300

Asn Asp Leu Phe Gln Thr Gly Arg Leu Val Thr Cys Gly Leu Tyr Ile
305                 310                 315                 320

Asn Ile Ile Leu Lys Asp Tyr Val Arg Thr Ile Leu Asn Ile Asn Arg
                325                 330                 335

Thr Asp Ser Leu Trp Ser Leu Asp Pro Arg Ala Asp Ile Gln Asp Ser
            340                 345                 350
```

Leu Leu Gly Ser Ala Pro Ala Glu Ala Thr Gly Asn Gln Val Ser Ala
355 360 365

Glu Phe Asn Leu Val Tyr Arg Trp His Ala Cys Val Ser Gln Arg Asp
370 375 380

Glu Lys Trp Thr Gln Asp Leu Tyr Lys Asp Leu Phe Pro Gly Lys Asp
385 390 395 400

Pro Asn Asn Val Ser Leu Pro Glu Phe Leu Arg Gly Val Ala Lys Trp
405 410 415

Glu Ala Ser Leu Pro Glu Gln Pro Pro Asp Arg Pro Phe Ala Gly Leu
420 425 430

Gln Arg Asn Ala Asp Gly Ala Phe Asp Asp Asp Asp Leu Ala Asn Met
435 440 445

Phe Ala Asp Gly Val Glu Asp Cys Ala Gly Ala Phe Gly Ala Gly Asn
450 455 460

Ile Pro Ser Val Phe Arg Asn Ile Glu Ala Leu Gly Ile Leu Gln Ala
465 470 475 480

Arg Ser Trp Asn Leu Ala Thr Leu Asn Glu Phe Arg Lys Phe Phe Asp
485 490 495

Leu Ala Pro Tyr Lys Thr Phe Glu Glu Ile Asn Pro Asp Pro Tyr Ile
500 505 510

Ala Ala Gln Leu Lys Asn Leu Tyr Asp Glu Pro Asp Leu Val Glu Met
515 520 525

Tyr Pro Gly Val Ile Val Glu Ala Thr Lys Asp Ala Val Val Pro Gly
530 535 540

Ser Gly Leu Cys Thr Asn Phe Thr Ile Ser Arg Ala Ile Leu Ser Asp
545 550 555 560

Ala Val Ser Leu Val Arg Gly Asp Arg Phe Tyr Thr Val Asp Tyr Thr
565 570 575

Pro Lys His Leu Thr Asn Trp Ala Tyr His Glu Ile Gln Pro Gln Asp
580 585 590

Ser Val Asp Gln Gly Gln Val Phe Tyr Lys Leu Val Leu Arg Ala Phe

595 600 605

Pro Asn His Phe Lys Gly Asp Ser Ile Tyr Ala His Phe Pro Leu Val
610 615 620

Ile Pro Ser Glu Asn Lys Lys Ile Leu Glu Lys Leu Ser Val Ala Gln
625 630 635 640

Asp Tyr Ser Trp Gly Arg Pro Ser Tyr Thr Pro Thr Pro Gln Phe Ile
645 650 655

Ser Ser Asn Ala Ala Cys Ile Ser Val Leu Asn Asp Gln Glu Ala Phe
660 665 670

Lys Val Thr Trp Gly Ser Lys Ile Glu Phe Leu Met Arg His Asn Asn
675 680 685

His Pro Tyr Gly Arg Asp Phe Met Leu Ser Gly Asp Lys Pro Pro Asn
690 695 700

Ala Ala Ser Arg Arg Met Met Gly Ser Ala Leu Tyr Arg Asp Lys Trp
705 710 715 720

Glu Ser Glu Val Lys Arg Phe Tyr Glu Asp Ile Thr Ile Lys Leu Leu
725 730 735

Arg Gln His Ser Tyr Lys Leu Gly Gly Thr Asn Gln Val Asp Ile Val
740 745 750

Arg Asp Val Ala Asn Tyr Ala Gln Val His Phe Cys Ala Asn Val Phe
755 760 765

Ser Leu Pro Leu Lys Thr Glu Ser Asn Pro Arg Gly Ile Phe Thr Glu
770 775 780

Ala Glu Leu Tyr Glu Ile Leu Ala Leu Val Phe Ala Ser Ile Phe Tyr
785 790 795 800

Asp Ala Asp Val Gly Thr Ser Phe Gln Leu Asn His Thr Ala Arg Asp
805 810 815

Val Thr Gln Gln Leu Gly Asp Leu Thr Met Ala Asn Val Asp Phe Val
820 825 830

Asn Lys Ala Gly Phe Ile Ala Asn Ile Val Ser Ser Leu His Arg His
835 840 845

```
Asp Val Leu Ser Glu Tyr Gly Glu His Met Ile Gln Arg Leu Leu His
    850                 855                 860

Asn Asn Ile Pro Pro Ala Asp Ile Val Trp Thr His Leu Leu Pro Thr
865                 870                 875                 880

Ala Gly Gly Met Val Ala Asn Gln Ala Gln Leu Phe Ser Gln Cys Leu
                885                 890                 895

Asp Tyr Tyr Leu Ser Asp Glu Gly Ser Val His Leu Pro Asp Ile Lys
            900                 905                 910

Arg Leu Ala Gln Glu Asn Thr Ser Glu Ala Asp Ser Leu Leu Leu Arg
        915                 920                 925

Tyr Phe Met Glu Gly Ala Arg Leu Arg Ser Ser Val Gly Leu Pro Arg
    930                 935                 940

Leu Val Ala Lys Pro Thr Val Val Asp Asp Gly Gly Ser Lys Tyr Thr
945                 950                 955                 960

Leu Lys Pro Gly Gln Ser Val Leu Cys Asn Leu Val Ser Ala Ser Met
                965                 970                 975

Asp Pro Arg Ser Phe Pro Glu Pro Glu Lys Val Lys Leu Asp Arg Asp
            980                 985                 990

Met Ser Leu Tyr Ala His Phe Gly  Phe Gly Pro His Gln  Cys Leu Gly
        995                 1000                1005

Met Gly  Ile Cys Lys Leu Ala  Leu Thr Thr Met Leu  Arg Val Val
    1010                 1015                 1020

Gly Arg  Leu Asp Asn Leu Arg  Arg Ala Pro Gly Ser  Gln Gly Gln
    1025                 1030                 1035

Leu Lys  Arg Ile Ala Gly Pro  Gly Gly Ile Ser Met  Tyr Met Thr
    1040                 1045                 1050

Ala Asp  Gln Ser Ser Tyr Trp  Pro Phe Pro Ser Thr  Met Lys Ile
    1055                 1060                 1065

Gln Trp  Asp Gly Asp Leu Pro  Ser Leu Ala Thr Asn
    1070                 1075                 1080
```

<210> 5
<211> 1080

<212> PRT
<213> Aspergillus clavatus

<400> 5

```
Met Ser Gly Lys Arg Glu Glu Ser Thr Asn Gly Gly Ile Gly Lys Thr
1               5                   10                  15

Ile Ala Gln Ile Glu Lys Val Val Thr Ala Ser Leu Arg Pro Leu Pro
            20                  25                  30

Ser Lys Thr Gly Asp Gly Thr Tyr Val Thr Glu Ala Val Lys Thr Gly
        35                  40                  45

Leu Leu Lys Asp Leu Ser His Val Asp Leu Gly Asp Leu Lys Thr Leu
    50                  55                  60

Leu Glu Val Ser Lys Ser Ala Leu Thr Gly Glu Ala Val Asp Asp Lys
65                  70                  75                  80

Lys Tyr Ile Met Glu Arg Val Val Gln Leu Ala Ala Gly Leu Pro Ser
                85                  90                  95

Thr Ser Gln Ile Gly Lys Asp Met Thr Asn Thr Phe Leu Thr Thr Leu
            100                 105                 110

Trp Asn Asp Leu Glu His Pro Pro Ile Ser Tyr Leu Gly Arg Asp Ala
        115                 120                 125

Met Tyr Arg Lys Ala Asp Gly Ser Gly Asn Asn Ile Leu Trp Pro His
    130                 135                 140

Ile Gly Ala Ala Gly Thr Pro Tyr Ala Arg Ser Val Arg Pro Lys Thr
145                 150                 155                 160

Met Gln Ser Pro Asn Leu Pro Asp Pro Glu Thr Leu Phe Asp Cys Leu
                165                 170                 175

Leu Ala Arg Lys Glu Tyr Lys Glu His Pro Asn Lys Ile Ser Ser Val
            180                 185                 190

Leu Phe Tyr Ile Ala Ser Ile Ile Ile His Asp Ile Phe Gln Thr Asp
        195                 200                 205

Arg Lys Asp Pro Thr Val Ser Leu Thr Ser Ser Tyr Leu Asp Leu Ser
    210                 215                 220

Pro Leu Tyr Gly Asn Asn Gln Asp Glu Gln Asn Leu Val Arg Thr Phe
225                 230                 235                 240
```

```
Lys Asp Gly Lys Leu Lys Pro Asp Cys Phe Ser Thr Lys Arg Val Leu
                245                 250                 255

Gly Phe Pro Pro Gly Val Gly Val Leu Leu Ile Met Phe Asn Arg Phe
            260                 265                 270

His Asn His Val Val Glu Asn Leu Ala Leu Ile Asn Glu Gly Gly Arg
        275                 280                 285

Phe Thr Lys Pro Gln Glu Ser Asp Ala Gln Ala Tyr Ala Lys Tyr Asp
    290                 295                 300

Asn Asp Leu Phe Gln Thr Gly Arg Leu Ile Thr Cys Gly Leu Tyr Val
305                 310                 315                 320

Asn Ile Ile Leu Lys Asp Tyr Val Arg Thr Ile Leu Asn Ile Asn Arg
                325                 330                 335

Thr Asp Ser Ile Trp Ser Leu Asp Pro Arg Ala Asp Met Lys Asp Gly
            340                 345                 350

Leu Leu Gly Glu Ala Ala Ala Gln Ala Thr Gly Asn Gln Val Ser Ala
        355                 360                 365

Glu Phe Asn Leu Val Tyr Arg Trp His Ser Cys Ile Ser Lys Arg Asp
    370                 375                 380

Gln Lys Trp Thr Glu Asp Met Tyr Gln Glu Val Phe Pro Gly Gln Asp
385                 390                 395                 400

Pro Ser Lys Leu Pro Leu Gln Asp Phe Met Arg Gly Leu Gly Arg Trp
                405                 410                 415

Glu Ala Lys Leu Pro Gly Glu Pro Gln Glu Arg Pro Phe Ala Gly Leu
            420                 425                 430

Gln Arg Lys Ala Asp Gly Ser Tyr Asp Asp Asp Asp Leu Val Lys Ile
        435                 440                 445

Phe Gly Asp Ser Val Glu Asp Cys Ala Gly Ala Phe Gly Val Leu His
    450                 455                 460

Val Pro Thr Val Phe Arg Ser Ile Glu Ala Leu Gly Ile Gln Gln Ala
465                 470                 475                 480

Arg Ser Trp Asn Leu Ala Thr Leu Asn Glu Phe Arg Asn Tyr Phe Asn
                485                 490                 495
```

Leu Ala Pro Tyr Lys Thr Phe Glu Glu Ile Asn Pro Asp Pro Tyr Val
500 505 510

Ala Asp Gln Leu Arg Arg Leu Tyr Asp His Pro Asp Arg Val Glu Ile
515 520 525

Tyr Pro Gly Ile Ile Val Glu Asp Thr Lys Glu Ser Met Ala Pro Gly
530 535 540

Ser Gly Leu Cys Thr Asn Phe Thr Ile Ser Arg Ala Ile Leu Ser Asp
545 550 555 560

Ala Val Ala Leu Val Arg Gly Asp Arg Phe His Thr Val Asp Phe Thr
565 570 575

Pro Lys His Leu Thr Asn Trp Ala Tyr Asn Glu Ile Gln Pro Gln Glu
580 585 590

Ser Val Asp Gln Thr His Val Leu Tyr Lys Leu Val Phe Arg Ala Phe
595 600 605

Pro Asn His Phe Lys Gly Asp Ser Ile Tyr Ala His Phe Pro Leu Val
610 615 620

Ile Pro Ser Glu Asn Lys Lys Ile Leu Thr Lys Leu Gly Thr Ala Asp
625 630 635 640

Lys Tyr Ser Trp Asp Arg Pro Ser Phe Thr His Pro Pro Gln Phe Ile
645 650 655

Asn Ser His Ser Ala Cys Met Ser Ile Leu Ala Asp Gln Glu Thr Phe
660 665 670

Lys Val Ser Trp Gly Lys Lys Ile Glu Phe Leu Met Arg His Asn Asp
675 680 685

Gln Pro His Gly Arg Asp Phe Met Leu Ser Gly Asp Lys Pro Pro Asn
690 695 700

Ala Glu Ser Arg Gln Met Met Gly Lys Ala Leu Tyr Arg Asn Lys Trp
705 710 715 720

Glu Thr Glu Val Lys Asp Phe Tyr Glu Glu Ile Thr Leu Lys Leu Leu
725 730 735

His Arg Asn Ser Tyr Lys Leu Ala Gly Thr Asn Gln Val Asp Ile Val

```
            740                 745                 750

Arg Asp Val Ala Asn Leu Ala Gln Val Tyr Phe Cys Ala Ser Val Phe
        755                 760                 765

Ser Leu Pro Leu Lys Thr Glu Ser Asn Pro Arg Gly Val Phe Thr Glu
    770                 775                 780

Ser Glu Leu Tyr Gln Ile Met Ala Val Val Phe Thr Ser Ile Phe Tyr
785                 790                 795                 800

Asp Ala Asp Val Cys Lys Ser Phe Glu Leu Asn Gln Gly Ala Arg Ala
                805                 810                 815

Val Thr Gln Gln Leu Gly Gln Leu Thr Met Ala Asn Val Glu Leu Ile
            820                 825                 830

Glu Lys Thr Gly Phe Ile Ala Asn Leu Val Asn Ser Leu His Arg His
        835                 840                 845

Asp Ala Leu Thr Glu Tyr Gly Val His Met Ile Gln Arg Leu Leu Asp
    850                 855                 860

Thr Gly Thr Pro Ala Ala Glu Ile Val Trp Thr His Val Leu Pro Thr
865                 870                 875                 880

Ala Gly Gly Met Val Ala Asn Gln Ala Gln Leu Phe Ser Gln Cys Leu
                885                 890                 895

Asp Tyr Tyr Leu Ser Asp Glu Gly Ser Ile His Leu Pro Glu Ile Asn
            900                 905                 910

Arg Leu Ala Lys Gln Asp Thr Pro Glu Ala Asp Asp Leu Leu Leu Arg
        915                 920                 925

Tyr Phe Met Glu Gly Ala Arg Leu Arg Ser Ser Val Ala Leu Pro Arg
    930                 935                 940

Val Val Ala Gln Pro Thr Val Val Glu Asp Asn Gly Gln Lys Val Ile
945                 950                 955                 960

Leu Lys Glu Gly Gln His Ile Leu Cys Asn Leu Val Ser Ala Ser Met
                965                 970                 975

Asp Pro Ala Ser Phe Pro Glu Pro Asp Lys Val Lys Leu Asp Arg Asp
            980                 985                 990
```

```
Met Asn Leu Tyr Ala His Phe Gly  Phe Gly Pro His Gln  Cys Leu Gly
        995                 1000                1005

Ile Gly  Leu Cys Lys Leu Ala  Leu Thr Thr Met Leu  Lys Val Val
    1010                 1015                1020

Gly Arg  Leu Asp Asn Leu Arg  Arg Ala Pro Gly Gly  Gln Gly Arg
    1025                 1030                1035

Leu Lys  Lys Leu Ser Gly Pro  Gly Gly Ile Ala Met  Tyr Met Thr
    1040                 1045                1050

Pro Asp  Gln Ser Gly Phe Phe  Pro Phe Pro Thr Thr  Met Lys Ile
    1055                 1060                1065

Gln Trp  Asp Gly Asp Leu Pro  Pro Leu Lys Thr Glu
    1070                 1075                1080
```

<210> 6
<211> 1080
<212> PRT
<213> Aspergillus niger

<400> 6

```
Met Ser Gly Ala Asn Asn His Ser Ile Val Asn Gly Ile Gly Ser Thr
1               5                   10                  15

Ile Ser Gln Val Glu Lys Ala Ile Ser Ala Ser Leu Arg Pro Leu Pro
            20                  25                  30

Thr Ala Thr Gly Asn Gly Thr Tyr Ile Thr Glu Pro Asp Gln Thr Gly
        35                  40                  45

Ile Val Lys Asp Leu Ser His Val Asp Phe Thr Asp Ile Lys Ala Leu
    50                  55                  60

Leu Glu Val Ile Lys Asp Ala Val Thr Gly Gln Pro Val Asp Asp Arg
65                  70                  75                  80

His Tyr Ile Met Glu Arg Val Ile Gln Leu Ala Ala Gly Leu Pro Ser
                85                  90                  95

Thr Ser Lys Asn Gly Lys Asp Leu Thr Asn Ala Phe Leu Lys Gln Leu
            100                 105                 110

Trp Asn Asp Leu Glu His Pro Pro Ile Ser Tyr Leu Gly Arg Asp Ser
        115                 120                 125
```

```
Ser Tyr Arg Lys Ala Asp Gly Ser Gly Asn Asn Phe Leu Trp Pro His
    130                 135                 140

Ile Gly Ala Ala Gly Ser His Tyr Ala Arg Ser Val Arg Pro Thr Thr
145                 150                 155                 160

Val Gln Ser Pro Ser Leu Pro Asp Pro Ser Thr Leu Phe Ala Ser Leu
                165                 170                 175

Leu Glu Arg Lys Glu Tyr Lys Glu His Pro Asn Lys Ile Ser Ser Val
            180                 185                 190

Leu Phe Tyr Leu Ala Ser Val Ile Ile His Asp Leu Phe Gln Thr Asp
        195                 200                 205

Arg Ser Asp Phe Thr Leu Asn Lys Thr Ser Ser Tyr Leu Asp Leu Ser
    210                 215                 220

Pro Leu Tyr Gly Asn Asn Gln Asp Glu Gln Asp Leu Val Arg Thr Phe
225                 230                 235                 240

Lys Asp Gly Lys Leu Lys Pro Asp Cys Phe Ser Ser Lys Arg Val Leu
                245                 250                 255

Gly Phe Pro Pro Gly Val Gly Val Leu Leu Leu Met Phe Asn Arg Phe
            260                 265                 270

His Asn Tyr Val Val Glu Asn Leu Ala Thr Ile Asn Glu Gly Gly Arg
        275                 280                 285

Phe Thr Lys Pro Asp Glu Ser Asp Val Asp Ala Ser Thr Lys Tyr Asp
    290                 295                 300

Asn Asp Leu Phe Gln Thr Gly Arg Leu Val Thr Cys Gly Leu Tyr Ile
305                 310                 315                 320

Asn Ile Ile Leu Lys Asp Tyr Val Arg Thr Ile Leu Asn Ile Asn Arg
                325                 330                 335

Thr Asp Ser Leu Trp Ser Leu Asp Pro Arg Ala Asp Ile Gln Asp Ser
            340                 345                 350

Leu Leu Gly Ser Ala Pro Ala Glu Ala Thr Gly Asn Gln Val Ser Ala
        355                 360                 365

Glu Phe Asn Leu Val Tyr Arg Trp His Ala Cys Ile Ser Gln Arg Asp
    370                 375                 380
```

Glu Lys Trp Thr Gln Asp Leu Tyr Lys Asp Leu Phe Pro Gly Lys Asp
385 390 395 400

Pro Asn Asn Val Ser Leu Gln Glu Phe Ile Arg Gly Val Ala Lys Trp
405 410 415

Glu Ala Ser Leu Pro Glu Gln Pro Pro Asp Arg Pro Phe Ala Gly Leu
420 425 430

Gln Arg Asn Ala Asp Gly Ala Phe Asp Asp Gly Asp Leu Ala Asn Met
435 440 445

Phe Ala Asp Gly Val Glu Asp Cys Ala Gly Ala Phe Gly Ala Gly Asn
450 455 460

Ile Pro Ser Val Phe Arg Asn Ile Glu Ala Leu Gly Ile Leu Gln Ala
465 470 475 480

Arg Ser Trp Asn Leu Ala Thr Leu Asn Glu Phe Arg Lys Phe Phe Asp
485 490 495

Leu Ala Pro Tyr Lys Thr Phe Glu Glu Ile Asn Pro Asp Pro Tyr Ile
500 505 510

Ala Ala Gln Leu Lys Asn Leu Tyr Asp Glu Pro Asp Leu Val Glu Met
515 520 525

Tyr Pro Gly Val Ile Val Glu Ala Thr Lys Asp Ala Ile Val Pro Gly
530 535 540

Ser Gly Leu Cys Thr Asn Phe Thr Ile Ser Arg Ala Ile Leu Ser Asp
545 550 555 560

Ala Val Ser Leu Val Arg Gly Asp Arg Phe Tyr Thr Val Asp Tyr Thr
565 570 575

Pro Lys His Leu Thr Asn Trp Ala Tyr Asn Glu Ile Gln Pro Gln Asp
580 585 590

Ser Val Asp Gln Gly Gln Val Phe Tyr Lys Leu Val Leu Arg Ala Phe
595 600 605

Pro Asn His Phe Lys Gly Asp Ser Val Tyr Ala His Phe Pro Leu Val
610 615 620

Ile Pro Ser Glu Asn Lys Lys Ile Leu Glu Lys Leu Ser Val Ala Gln
625 630 635 640

Asp Tyr Ser Trp Gly Arg Pro Ser Tyr Thr Pro Leu Pro Gln Phe Ile
645 650 655

Ser Ser Asn Ala Ala Cys Ile Ser Val Leu Asn Asp Gln Glu Ala Phe
660 665 670

Lys Val Thr Trp Gly Ser Lys Ile Glu Phe Leu Met Arg His Asn Asn
675 680 685

His Pro Tyr Gly Arg Asp Phe Met Leu Ser Gly Asp Lys Pro Pro Asn
690 695 700

Ala Ala Ser Arg Arg Met Met Gly Ser Ala Leu Tyr Arg Asp Lys Trp
705 710 715 720

Glu Ser Glu Val Lys Arg Phe Tyr Glu Asp Ile Thr Ile Lys Leu Leu
725 730 735

Arg Gln His Ser Tyr Gln Leu Gly Gly Val Asn Gln Val Asp Ile Val
740 745 750

Arg Asp Val Ala Asn Tyr Ala Gln Val His Phe Cys Ala Asn Val Phe
755 760 765

Ser Leu Pro Leu Lys Thr Glu Ser Asn Pro Arg Gly Ile Phe Ala Glu
770 775 780

Ser Glu Leu Tyr Glu Ile Leu Ala Leu Val Phe Ala Ser Ile Phe Tyr
785 790 795 800

Asp Ala Asp Val Gly Thr Ser Phe Gln Leu Asn Gln Thr Ala Arg Asp
805 810 815

Val Thr Gln Gln Leu Gly Glu Leu Thr Met Ala Asn Val Asp Phe Val
820 825 830

Asn Lys Ala Gly Phe Ile Ala Asn Leu Val Ser Ser Leu His Arg His
835 840 845

Asp Val Leu Ser Glu Tyr Gly Glu His Met Ile Gln Arg Leu Leu His
850 855 860

Ser Asn Val Pro Pro Ala Glu Ile Val Trp Thr His Leu Leu Pro Thr
865 870 875 880

Ala Gly Gly Met Val Ala Asn Gln Ala Gln Leu Phe Ser Gln Cys Leu

```
                885                 890                 895

Asp Tyr Tyr Leu Ser Asp Glu Gly Ser Ile His Leu Pro Asp Ile Lys
            900                 905                 910

Arg Leu Ala Lys Glu Asn Thr Ser Glu Ala Asp Ala Leu Leu Leu Arg
        915                 920                 925

Tyr Phe Met Glu Gly Ala Arg Leu Arg Ser Ser Val Gly Leu Pro Arg
    930                 935                 940

Leu Val Ala Lys Pro Thr Val Val Asp Asp Gly Gly Ser Lys Tyr Thr
945                 950                 955                 960

Leu Lys Pro Gly Gln Ser Val Leu Cys Asn Leu Val Ser Ala Ser Met
                965                 970                 975

Asp Pro Arg Ser Phe Pro Glu Pro Glu Lys Val Lys Leu Asp Arg Asp
            980                 985                 990

Met Ser Leu Tyr Ala His Phe Gly  Phe Gly Pro His Gln  Cys Leu Gly
        995                 1000                1005

Met Gly  Ile Cys Lys Leu Ala  Leu Thr Thr Met Leu  Arg Val Val
    1010                 1015                 1020

Gly Arg  Leu Asp Asn Leu Arg  Arg Ala Pro Gly Ser  Gln Gly Gln
    1025                 1030                 1035

Leu Lys  Lys Ile Ala Gly Pro  Gly Gly Ile Ser Met  Tyr Met Thr
    1040                 1045                 1050

Ala Asp  Gln Ser Ser Tyr Trp  Pro Phe Pro Ser Thr  Met Lys Ile
    1055                 1060                 1065

Gln Trp  Asp Gly Asp Leu Pro  Ser Leu Ala Thr Asn
    1070                 1075                 1080
```

<210> 7
<211> 1127
<212> PRT
<213> Glomerella cingulate

<400> 7

Met Ser Gln Gln Ser His Thr Glu Gln Phe Pro Lys Asn Gln Pro Pro
1               5                   10                  15

Leu Ala Glu Arg Leu Ala Ser Ala Arg Gln Leu Val Thr Lys Ala Ile

```
            20                  25                  30

Ser Ala Val Pro Pro His Pro Glu Pro Leu Pro Ser Pro Asn Ser Asp
        35                  40                  45

Gln Gly Glu Pro Ser Asn Leu Leu Gln Asp Val Lys Lys Leu Gly Phe
    50                  55                  60

Asp Asp Phe Asp Thr Leu Val His Phe Phe Ser Ser Ala Val Glu Gly
65                  70                  75                  80

Gln Ile Asn Asp Asn Glu Leu Leu Leu Glu Asn Leu Ile Gln Leu Phe
                85                  90                  95

Ala Lys Leu Pro Gln Asn Ser Val Lys Gly Lys Arg Leu Glu Asn Gly
            100                 105                 110

Leu Ile Asn Gln Leu Trp Asn Gly Ile Asp His Pro Pro Met Thr Thr
        115                 120                 125

Leu Gly Glu Asp His Lys Tyr Arg Ala Ala Asp Gly Ser Gly Asn Ala
    130                 135                 140

Ile His Asp Pro Lys Met Gly Ala Ala Gly Gln Pro Tyr Ala Arg Ser
145                 150                 155                 160

Thr Pro Ala Lys Ser Tyr Gln Asn Pro Asn Gln Pro Glu Pro Glu Met
                165                 170                 175

Ile Phe Asp Met Leu Phe Ala Arg Gly Gly Glu Phe Lys Pro His Pro
            180                 185                 190

Asn Lys Ile Ser Ser Phe Met Phe Tyr Leu Ala Thr Ile Ile Thr His
        195                 200                 205

Asp Ile Phe Gln Thr Lys Asn Gly Thr Ser Pro Ile Asn Gln Thr Ser
    210                 215                 220

Ser Tyr Leu Asp Leu Ala Pro Leu Tyr Gly Arg Asn Gln Ala Glu Gln
225                 230                 235                 240

Asp Leu Met Arg Thr Lys Lys Asn Gly Leu Leu Lys Pro Asp Thr Phe
                245                 250                 255

Ser Ser Lys Arg Val Leu Gly Phe Pro Pro Gly Val Gly Thr Leu Leu
            260                 265                 270
```

```
Ile Met Phe Asn Arg Tyr His Asn Tyr Val Ala Thr Asn Leu Ala Thr
        275                 280                 285

Ile Asn Glu Gly Gly Arg Phe Gln Lys Pro Thr Gly Asp Asp Pro Glu
    290                 295                 300

Lys Thr Ala Lys Tyr Asp Asn Asp Leu Phe Gln Thr Ala Arg Leu Ile
305                 310                 315                 320

Thr Cys Gly Leu Tyr Val Ser Ile Ile Leu Arg Asp Tyr Val Arg Thr
                325                 330                 335

Ile Leu Gly Met Asn Arg Thr Ala Ser Ser Trp Ala Leu Asp Pro Arg
            340                 345                 350

Thr Asn Glu Gly Lys Ser Ile Leu Ser Gln Gln Thr Pro Glu Gly Thr
        355                 360                 365

Gly Asn Gln Val Ser Val Glu Phe Asn Leu Ile Tyr Arg Trp His Asn
    370                 375                 380

Thr Ile Ser Pro Lys Asp Glu Gln Trp Thr Lys Asp Val Met Lys Lys
385                 390                 395                 400

Val Leu Gly Lys Asp Pro Thr Glu Met Ser Leu Met Glu Phe Gly His
                405                 410                 415

Ala Met Arg Asp Trp Glu Gln Glu Ile Pro Asp Asp Pro Ala Gln Arg
            420                 425                 430

Gly Phe Met Asp Leu Pro Arg Asn Ala Asp Gly Thr Leu Asn Glu Ala
        435                 440                 445

Asp Leu Ala Lys Ile Phe Lys Glu Ser Val Asp Asp Val Ala Gly Ser
    450                 455                 460

Tyr Gly Ala Asn Arg Ile Pro Glu Val Met Arg Pro Ile Glu Leu Met
465                 470                 475                 480

Gly Ile Met Ala Ser Arg Ser Trp Asn Cys Ala Thr Leu Asn Glu Phe
                485                 490                 495

Arg Glu His Phe Gly Leu Thr Arg His Pro Thr Phe Glu Asp Ile Asn
            500                 505                 510

Pro Asp Lys Glu Val Ala Ala Lys Leu Arg Phe Leu Tyr Gly Ser Pro
        515                 520                 525
```

Asp Ala Val Glu Leu Tyr Pro Gly Leu Met Ala Glu Lys Ala Lys Pro
530 535 540

Pro Met Ala Pro Gly Ser Gly Leu Cys Gly Asn Phe Thr Met Thr Arg
545 550 555 560

Ala Ile Leu Ser Asp Ala Val Ala Leu Val Arg Gly Asp Arg Phe Tyr
565 570 575

Thr Ile Asp Tyr Thr Pro Lys Asn Leu Thr Asn Trp Gly Phe Asn Gln
580 585 590

Ala Ser Tyr Asp Leu Asn Val Asp Gln Ser His Val Leu Tyr Lys Leu
595 600 605

Val Phe Arg Ala Phe Pro Asn Ser Phe Gln Asn Asn Ser Ile Tyr Ala
610 615 620

His Phe Pro Phe Val Ile Pro Ser Glu Asn Lys Lys Ile Leu Glu Ser
625 630 635 640

Ile Asp Lys Ala Tyr Leu Tyr Thr Trp Asp Glu Pro Lys Thr Lys Thr
645 650 655

Pro Leu Ile Pro Ile Leu Ser His Lys Ala Val Ser Glu Val Leu Tyr
660 665 670

Asn Gln Gln Asp Phe Lys Val Ile Thr Gly Asp Ala Ile Asn His Leu
675 680 685

Val Ala Gln Pro Asn Lys Pro His Tyr Gly Lys Asp Phe Cys Leu Ser
690 695 700

Gly Asp Gly Lys Glu His Ala Lys Asn Arg Thr Leu Val Arg Lys Ser
705 710 715 720

Leu Ile Ser Gly Pro Trp Glu Thr Glu Ile Trp Lys Trp Tyr Thr His
725 730 735

Met Thr Pro Lys Ile Leu Asn Leu Asn Ser Phe Pro Ile Pro Gly Asn
740 745 750

Lys Arg Glu Ile Asp Leu Val Arg Asp Val Ile Asn Val Thr Asn Thr
755 760 765

Arg Phe Asn Ala Ala Leu Phe Cys Met Pro Ile Lys Asn Glu Glu Ser
770 775 780

```
Pro Trp Gly Val Tyr Thr Asp Gln Glu Leu Tyr Ser Val Leu Gly Ala
785                 790                 795                 800

Leu Phe Gln Ala Val Phe Met Asp Ala Asp Ile Gly Asn Ser Phe Lys
                805                 810                 815

Leu Arg Thr Ile Ala Arg Glu Leu Ala Gln Asp Leu Gly Lys Val Val
            820                 825                 830

Met Leu Ile Ala Gln Thr Ile Lys Lys Ala Gly Leu Ile Thr Asp Ile
        835                 840                 845

Val Ala Lys Ile Arg Glu Gly Glu Ala Ser Leu Pro Thr Tyr Gly Asn
    850                 855                 860

His Leu Ile Glu Arg Met Leu Ser Asp Gly Lys Asp Val Glu Glu Val
865                 870                 875                 880

Val Trp Gly Thr Ile Met Pro Val Ile Thr Ala Asn Val Ala Asn Gln
                885                 890                 895

Ser Gln Val Thr Ser Leu Cys Val Asp Tyr Tyr Leu Asp Lys Glu Gly
            900                 905                 910

Lys Lys His Leu Pro Glu Leu Tyr Arg Leu Ala His Glu Asn Thr Pro
        915                 920                 925

Glu Ala Asp Glu Thr Leu Leu Lys Tyr Met Leu Glu Gly Cys Arg Leu
    930                 935                 940

Arg Gly Pro Val Ala Val Tyr Arg Glu Ala Thr Ser Thr Gln Val Ile
945                 950                 955                 960

Thr Asp Tyr Ser Pro Cys Leu Pro Ser Glu Ser Asp Pro Thr Gly Arg
                965                 970                 975

Asp Pro Ile Thr Asn Pro Asp Ile Glu Gly Thr Lys Arg Glu Val Lys
            980                 985                 990

Ile Pro Arg Gly Tyr Arg Val Val  Cys Asn Phe Ala Thr  Ala Gly Arg
        995                 1000                1005

Asp Pro  Ala Ile Phe Glu Asp  Pro Asn Glu Val Arg  Leu Asp Arg
    1010                 1015                 1020

Pro Leu  Asp Ser Tyr Val His  Phe Gly Leu Gly Pro  His Trp Cys
```

1025 1030 1035

Ala Gly Lys Glu Met Ser Arg Val Gly Gln Thr Ser Leu Phe Lys
1040 1045 1050

Gln Ile Val Gly Leu Lys Asn Leu Arg Arg Ala Pro Gly Gly Arg
1055 1060 1065

Gly Glu Met Lys Asn Phe Pro Ala Ser Pro Trp Asn Gly Gln Val
1070 1075 1080

Gly Leu Pro Val Glu Gly Gln Asn Gly Ser Ala Ala His Gln Gln
1085 1090 1095

Pro Trp Leu Gly Leu Arg Ala Phe Met Thr Val Asp Gln Ser Ser
1100 1105 1110

Leu Trp Pro Ile Pro Thr Thr Met Arg Val Gln Trp Asp Glu
1115 1120 1125

<210> 8
<211> 1165
<212> PRT
<213> Gaeumannomyces graminis

<400> 8

```
Met Thr Val Ser Thr His His Asp Asp Ser Pro Gly Leu Ser Gly Arg
1               5                   10                  15

Leu Arg Asp Leu Leu His His Val Phe Gly Asn Gln Lys Ser Pro Thr
            20                  25                  30

Val Tyr Pro Asn Ala Pro Gly Asn Ser Ala Lys Pro Val Pro Thr Gly
        35                  40                  45

Leu Ala Asp Asp Ile Asp Lys Leu Gly Phe Lys Asp Ile Asp Thr Leu
    50                  55                  60

Leu Ile Phe Leu Asn Ser Ala Val Lys Gly Val Asn Asp Asp Gln Gln
65                  70                  75                  80

Phe Leu Leu Glu Lys Met Ile Gln Leu Leu Ala Lys Leu Pro Pro Ala
                85                  90                  95

Ser Arg Glu Gly Lys Lys Leu Thr Asp Gly Leu Ile Asn Asp Leu Trp
            100                 105                 110

Asp Ser Leu Asp His Pro Pro Val Ala Ser Leu Gly Lys Gly Phe Ser
```

115 120 125

Phe Arg Glu Pro Asp Gly Ser Asn Asn Asn Ile His Leu Pro Ser Leu
130 135 140

Gly Ala Ala Asn Thr Pro Tyr Ala Arg Ser Thr Lys Pro Leu Val Phe
145 150 155 160

Gln Asn Pro Asn Pro Pro Asp Pro Ala Thr Ile Phe Asp Thr Leu Met
165 170 175

Val Arg Asp Pro Ala Lys Phe Arg Pro His Pro Asn Lys Ile Ser Ser
180 185 190

Met Leu Phe Tyr Leu Ala Thr Ile Ile Thr His Asp Ile Phe Gln Thr
195 200 205

Ser Pro Arg Asp Phe Asn Ile Asn Leu Thr Ser Ser Tyr Leu Asp Leu
210 215 220

Ser Pro Leu Tyr Gly Arg Asn His Asp Glu Gln Met Ala Val Arg Thr
225 230 235 240

Gly Lys Asp Gly Leu Leu Lys Pro Asp Thr Phe Ser Ser Lys Arg Val
245 250 255

Ile Gly Phe Pro Pro Gly Val Gly Ala Phe Leu Ile Met Phe Asn Arg
260 265 270

Phe His Asn Tyr Val Val Thr Gln Leu Ala Lys Ile Asn Glu Gly Gly
275 280 285

Arg Phe Lys Arg Pro Thr Thr Pro Asp Asp Thr Ala Gly Trp Glu Thr
290 295 300

Tyr Asp Asn Ser Leu Phe Gln Thr Gly Arg Leu Ile Thr Cys Gly Leu
305 310 315 320

Tyr Ile Asn Ile Val Leu Gly Asp Tyr Val Arg Thr Ile Leu Asn Leu
325 330 335

Asn Arg Ala Asn Thr Thr Trp Asn Leu Asp Pro Arg Thr Lys Glu Gly
340 345 350

Lys Ser Leu Leu Ser Lys Pro Thr Pro Glu Ala Val Gly Asn Gln Val
355 360 365

```
Ser Val Glu Phe Asn Leu Ile Tyr Arg Trp His Cys Thr Ile Ser Glu
    370                 375                 380

Arg Asp Asp Lys Trp Thr Thr Asn Ala Met Arg Glu Ala Leu Gly Gly
385                 390                 395                 400

Gln Asp Pro Ala Thr Ala Lys Met Glu Asp Val Met Arg Ala Leu Gly
                405                 410                 415

Met Phe Glu Lys Asn Ile Pro Asp Glu Pro Glu Lys Arg Thr Leu Ala
            420                 425                 430

Gly Leu Thr Arg Gln Ser Asp Gly Ala Phe Asp Asp Thr Glu Leu Val
        435                 440                 445

Lys Ile Leu Gln Glu Ser Ile Glu Asp Val Ala Gly Ala Phe Gly Pro
    450                 455                 460

Asn His Val Pro Ala Cys Met Arg Ala Ile Glu Ile Leu Gly Ile Lys
465                 470                 475                 480

Gln Ser Arg Thr Trp Asn Val Ala Thr Leu Asn Glu Phe Arg Gln Phe
                485                 490                 495

Ile Gly Leu Thr Pro His Asp Ser Phe Tyr His Met Asn Pro Asp Pro
            500                 505                 510

Lys Ile Cys Lys Ile Leu Ala Gln Met Tyr Asp Ser Pro Asp Ala Val
        515                 520                 525

Glu Leu Tyr Pro Gly Ile Met Ala Glu Ala Ala Lys Pro Pro Phe Ser
    530                 535                 540

Pro Gly Ser Gly Leu Cys Pro Pro Tyr Thr Thr Ser Arg Ala Ile Leu
545                 550                 555                 560

Ser Asp Ala Val Ser Leu Val Arg Gly Asp Arg Phe Tyr Thr Val Asp
                565                 570                 575

Tyr Thr Pro Arg Asn Ile Thr Asn Trp Gly Phe Asn Glu Ala Ser Thr
            580                 585                 590

Asp Lys Ala Val Asp Trp Gly His Val Ile Tyr Lys Leu Phe Phe Arg
        595                 600                 605

Ala Phe Pro Asn His Phe Leu Pro Asn Ser Val Tyr Ala His Phe Pro
    610                 615                 620
```

Phe Val Val Pro Ser Glu Asn Lys Leu Ile Phe Glu Gly Leu Gly Ala
625 630 635 640

Ala Asn Lys Tyr Ser Trp Asp Pro Pro Lys Ala Arg Ala Pro Ile Gln
645 650 655

Phe Ile Arg Ser His Lys Ala Val Leu Glu Val Leu Ser Asn Gln Lys
660 665 670

Asp Tyr Lys Val Thr Trp Gly Pro Ala Ile Lys Met Leu Ser Gly Asp
675 680 685

Pro Ala Thr Ser Phe Ala Leu Ala Gly Asp Glu Pro Ala Asn Ala Ala
690 695 700

Ser Arg His His Val Ile Ala Ala Leu Thr Ala Pro Lys Gln Trp Arg
705 710 715 720

Asp Glu Val Arg Arg Phe Tyr Glu Val Thr Thr Arg Asp Leu Leu Arg
725 730 735

Arg His Gly Ala Pro Val His Gly Val Gly Ala Gly Pro Arg Thr His
740 745 750

Glu Val Asp Val Ile Arg Asp Val Ile Gly Leu Ala His Ala Arg Phe
755 760 765

Met Ala Ser Leu Phe Ser Leu Pro Leu Lys Glu Glu Gly Lys Glu Glu
770 775 780

Gly Ala Tyr Gly Glu His Glu Leu Tyr Arg Ser Leu Val Thr Ile Phe
785 790 795 800

Ala Ala Ile Phe Trp Asp Ser Asp Val Cys Asn Ser Leu Lys Leu His
805 810 815

Gln Ala Ser Lys Ala Ala Ala Asp Lys Met Ser Ala Leu Ile Ala Glu
820 825 830

His Val Arg Glu Met Glu Ala Gly Thr Gly Phe Leu Gly Ala Leu Gly
835 840 845

Lys Leu Lys Asp Leu Ile Thr Gly Asn Asp Val His Ala Asn Gly Asn
850 855 860

Gly Val Tyr Thr Asn Gly Asn Gly Val Tyr Thr Asn Gly Asn Gly Val
865 870 875 880

```
His Thr Asn Gly Asn Gly Val His Thr Asn Gly Asn Gly Val Pro His
                885                 890                 895

Ala Ala Pro Ser Leu Arg Ser Phe Gly Asp Gln Leu Leu Gln Arg Met
            900                 905                 910

Leu Ser Gln Asp Gly Arg Ser Ile Glu Glu Thr Val Ser Gly Thr Ile
        915                 920                 925

Leu Pro Val Val Met Ala Gly Thr Ala Asn Gln Thr Gln Leu Leu Ala
    930                 935                 940

Gln Cys Leu Asp Tyr Tyr Leu Gly Val Gly Glu Lys His Leu Pro Glu
945                 950                 955                 960

Met Lys Arg Leu Ala Met Leu Asn Thr Ser Glu Ala Asp Glu Lys Leu
                965                 970                 975

Leu Lys Tyr Thr Met Glu Gly Cys Arg Ile Arg Gly Cys Val Ala Leu
            980                 985                 990

Tyr Arg Ala Val Val Thr Asp Gln  Ala Val Asp Asp Thr  Ile Pro Cys
        995                 1000                 1005

Ile Pro  Asn Lys Asp Asp Pro  Thr Phe Ala Arg Pro  Leu Ser Asn
    1010                 1015                 1020

Pro Gln  Val Ala Glu Ser Ala  Arg Thr Leu Lys Leu  Ser Thr Gly
    1025                 1030                 1035

Thr Arg  Met Leu Val Asp Leu  Thr Thr Ala Ser His  Asp Pro Ala
    1040                 1045                 1050

Ala Phe  Pro Asp Pro Asp Glu  Val Arg Leu Asp Arg  Pro Leu Glu
    1055                 1060                 1065

Ser Tyr  Val His Phe Gly Leu  Gly Pro His Arg Cys  Ala Gly Glu
    1070                 1075                 1080

Pro Ile  Ser Gln Ile Ala Leu  Ser Ser Val Met Lys  Val Leu Leu
    1085                 1090                 1095

Gln Leu  Asp Gly Leu Arg Arg  Ala Ala Gly Pro Arg  Gly Glu Ile
    1100                 1105                 1110

Arg Ser  Tyr Pro Ala Ser Gln  Trp Pro Gly Gln Ala  Gly Arg Pro
```

1115 1120 1125

Pro Arg Asp Pro Ala Trp Ser Gly Leu Arg Thr Phe Thr Ser Ala
1130 1135 1140

Asp Gln Ser Ala Phe Ser Pro Leu Ala Thr Thr Met Lys Ile Asn
1145 1150 1155

Trp Glu Gly Arg Gly Asp Leu
1160 1165

<210> 9
<211> 1171
<212> PRT
<213> Magnaporthe oryzae

<400> 9

```
Met Ala Ser Ser Ser Ser Ser Gly Ser Ser Thr Arg Ser Ser Ser Pro
1               5                   10                  15

Ser Asp Pro Pro Ser Ser Phe Phe Gln Lys Leu Gly Ala Phe Leu Gly
            20                  25                  30

Leu Phe Ser Lys Pro Gln Pro Pro Arg Pro Asp Tyr Pro His Ala Pro
        35                  40                  45

Gly Asn Ser Ala Arg Glu Glu Gln Thr Asp Ile Thr Glu Asp Ile Gln
    50                  55                  60

Lys Leu Gly Phe Lys Asp Val Glu Thr Leu Leu Leu Tyr Leu Asn Ser
65                  70                  75                  80

Ser Val Lys Gly Val Asn Asp Asp Lys Gln Leu Leu Leu Glu Arg Leu
                85                  90                  95

Ile Gln Leu Leu Ser Lys Leu Pro Pro Thr Ser Thr Asn Gly Lys Lys
            100                 105                 110

Val Thr Asp Gly Leu Ile Thr Gly Leu Trp Glu Ser Leu Asp His Pro
        115                 120                 125

Pro Val Ser Ser Leu Gly Glu Lys Tyr Arg Phe Arg Glu Ala Asp Gly
    130                 135                 140

Ser Asn Asn Asn Ile His Asn Pro Thr Leu Gly Val Ala Gly Ser His
145                 150                 155                 160

Tyr Ala Arg Ser Ala Lys Pro Met Val Tyr Gln Asn Pro Asn Pro Pro
```

165 170 175

Ala Pro Glu Thr Ile Phe Asp Thr Leu Met Ala Arg Asp Pro Ala Lys
180 185 190

Phe Arg Pro His Pro Asn Gln Ile Ser Ser Val Leu Phe Tyr Phe Ala
195 200 205

Thr Ile Ile Thr His Asp Ile Phe Gln Thr Ser Ser Arg Asp Pro Ser
210 215 220

Ile Asn Leu Thr Ser Ser Tyr Leu Asp Leu Ser Pro Leu Tyr Gly Arg
225 230 235 240

Asn Leu Glu Glu Gln Leu Ser Val Arg Ala Met Lys Asp Gly Leu Leu
245 250 255

Lys Pro Asp Thr Phe Cys Ser Lys Arg Val His Gly Phe Pro Pro Gly
260 265 270

Val Gly Val Leu Leu Ile Met Phe Asn Arg Phe His Asn Tyr Val Val
275 280 285

Thr Ser Leu Ala Lys Ile Asn Glu Gly Asn Arg Phe Lys Lys Pro Val
290 295 300

Gly Asp Asp Thr Ala Ala Trp Glu Lys Tyr Asp Asn Asp Leu Phe Gln
305 310 315 320

Thr Gly Arg Leu Ile Thr Cys Gly Leu Tyr Val Asn Ile Val Leu Val
325 330 335

Asp Tyr Val Arg Thr Ile Leu Asn Leu Asn Arg Val Asp Ser Ser Trp
340 345 350

Ile Leu Asp Pro Arg Thr Glu Glu Gly Lys Ser Leu Leu Ser Lys Pro
355 360 365

Thr Pro Glu Ala Val Gly Asn Gln Val Ser Val Glu Phe Asn Leu Ile
370 375 380

Tyr Arg Trp His Cys Gly Met Ser Gln Arg Asp Asp Lys Trp Thr Thr
385 390 395 400

Asp Met Leu Thr Glu Ala Leu Gly Gly Lys Asp Pro Ala Thr Ala Thr
405 410 415

Leu Pro Glu Phe Phe Gly Ala Leu Gly Arg Phe Glu Ser Ser Phe Pro
420 425 430

Asn Glu Pro Glu Lys Arg Thr Leu Ala Gly Leu Lys Arg Gln Glu Asp
435 440 445

Gly Ser Phe Glu Asp Glu Gly Leu Ile Lys Ile Met Gln Glu Ser Ile
450 455 460

Glu Glu Val Ala Gly Ala Phe Gly Pro Asn His Val Pro Ala Cys Met
465 470 475 480

Arg Ala Ile Glu Ile Leu Gly Met Asn Gln Ala Arg Ser Trp Asn Val
485 490 495

Ala Thr Leu Asn Glu Phe Arg Glu Phe Ile Gly Leu Lys Arg Tyr Asp
500 505 510

Thr Phe Glu Asp Ile Asn Pro Asp Pro Lys Val Ala Asn Leu Leu Ala
515 520 525

Glu Phe Tyr Gly Ser Pro Asp Ala Val Glu Leu Tyr Pro Gly Ile Asn
530 535 540

Ala Glu Ala Pro Lys Pro Val Ile Val Pro Gly Ser Gly Leu Cys Pro
545 550 555 560

Pro Ser Thr Thr Gly Arg Ala Ile Leu Ser Asp Ala Val Thr Leu Val
565 570 575

Arg Gly Asp Arg Phe Phe Thr Val Asp Tyr Thr Pro Arg Asn Leu Thr
580 585 590

Asn Phe Gly Tyr Gln Glu Ala Ala Thr Asp Lys Ser Val Asp Asn Gly
595 600 605

Asn Val Ile Tyr Lys Leu Phe Phe Arg Ala Phe Pro Asn His Tyr Ala
610 615 620

Gln Asn Ser Ile Tyr Ala His Phe Pro Phe Val Ile Pro Ser Glu Asn
625 630 635 640

Lys Lys Ile Met Glu Ser Leu Gly Leu Ala Asp Lys Tyr Ser Trp Gln
645 650 655

Pro Pro Gln Arg Lys Pro Ala Thr Gln Met Ile Arg Ser His Ala Ala
660 665 670

```
Ala Val Lys Ile Leu Asn Asn Gln Lys Asp Phe Lys Val Val Trp Gly
        675                 680                 685

Glu Ser Ile Gly Phe Leu Thr Lys Phe Pro Thr Gly Glu Asn Pro Gly
    690                 695                 700

Leu Gly Phe Ala Leu Ala Gly Asp Ala Pro Ala Asn Gln Gln Ser Arg
705                 710                 715                 720

Asp Gln Leu Met Lys Cys Ile Phe Ser Pro Lys Ala Trp Glu Asp Glu
                725                 730                 735

Val Arg Gln Phe Cys Glu Ala Thr Thr Trp Asp Leu Leu Arg Arg Tyr
            740                 745                 750

Ser Ala Lys Val Gln Asp Lys Gly Pro His Leu Lys Val His Thr His
        755                 760                 765

Glu Ile Asp Val Ile Arg Asp Val Ile Ser Leu Ala Asn Ala Arg Phe
    770                 775                 780

Phe Ala Ala Val Tyr Ser Leu Pro Leu Lys Thr Glu Asn Gly Asp Asp
785                 790                 795                 800

Gly Val Tyr Ser Asp His Glu Met Tyr Arg Ser Leu Met Leu Ile Phe
                805                 810                 815

Ser Ala Ile Phe Trp Asp Asn Asp Val Ser Lys Ser Phe Lys Leu Arg
            820                 825                 830

Arg Asp Ala Arg Ala Ala Thr Gln Lys Leu Gly Ala Leu Val Glu Lys
        835                 840                 845

His Ile Val Glu Met Gly Ser Leu Phe His Ser Phe Lys His Ser His
    850                 855                 860

Ser Ala Val Ser Asp Lys Thr Asn Gly Leu Ala Asn Gly Gly Ala Asn
865                 870                 875                 880

Gly His Ala Asn Gly Asn Ala Asn Gly His Thr Asn Gly Asn Gly Ile
                885                 890                 895

His Gln Asn Gly Gly Ala Ala Pro Ser Met Leu Arg Ser Tyr Gly Asp
            900                 905                 910

Leu Met Leu Arg Arg Met Ile Glu Ala Tyr Gly Glu Gly Lys Ser Val
        915                 920                 925
```

```
Lys Glu Ala Val Tyr Gly Gln Ile Met Pro Ser Ile Ala Ala Gly Thr
    930                 935                 940

Ala Asn Gln Thr Gln Ile Met Ala Gln Cys Leu Asp Tyr Tyr Met Ser
945                 950                 955                 960

Asp Asp Gly Ala Glu His Leu Pro Glu Met Lys Arg Leu Ala Ser Leu
                965                 970                 975

Glu Thr Pro Glu Ala Phe Asn Thr Leu Met Lys Tyr Leu Phe Glu Gly
            980                 985                 990

Ala Arg Ile Arg Asn Thr Thr Ala  Val Pro Arg Leu Val  Ala Thr Asp
        995                 1000                1005

Gln Thr  Val Glu Asp Asn Ile  Pro Cys Leu Pro Asp  Pro Lys Asp
    1010                 1015                 1020

Ser Thr  Phe Leu Arg Pro Ile  Pro Asn Pro Gln Gln  Ala Glu Thr
    1025                 1030                 1035

Thr Arg  Thr Val Lys Leu Ser  Arg Gly Ser Met Val  Leu Val Asp
    1040                 1045                 1050

Leu Thr  Val Ala Ala His Asp  Ala Thr Ala Phe Pro  Asp Pro Glu
    1055                 1060                 1065

Lys Val  Arg Leu Asp Arg Asp  Leu Asp Ser Tyr Thr  Phe Phe Gly
    1070                 1075                 1080

Leu Gly  Pro His Arg Cys Ala  Gly Asp Lys Val Val  Arg Ile Thr
    1085                 1090                 1095

Met Thr  Ala Val Phe Lys Val  Leu Leu Gln Leu Asp  Gly Leu Arg
    1100                 1105                 1110

Arg Ala  Glu Gly Gly Arg Gly  Val Phe Lys Ser Leu  Pro Ala Ser
    1115                 1120                 1125

Gln Trp  Asn Gly Gln Ala Gly  Arg Val Ala Gly Glu  Lys Pro Gln
    1130                 1135                 1140

Trp Ser  Gly Leu Arg Thr Tyr  Val Asn Ala Asp Glu  Ser Ala Phe
    1145                 1150                 1155

Ser Gln  Thr Pro Met Asn Met  Lys Ile Arg Trp Asp  Asp
```

1160 1165 1170

<210> 10
<211> 1079
<212> PRT
<213> Penicillium oxalicum

<400> 10

```
Met Val Gly His His Gly Ser Glu Thr His Gly Glu Lys Ser Pro Leu
1               5                   10                  15

Val Gln Ile Glu Gln Val Phe Lys Ala Ala Leu Arg Pro Leu Pro Thr
            20                  25                  30

Glu Thr Gly Asp Gly Thr Tyr Val Lys Asp Thr Lys Leu Thr Gly Leu
        35                  40                  45

Ala Gln Asp Leu Ser His Val Asp Leu Val Asp Val Lys Thr Leu Ala
    50                  55                  60

Asp Val Ala Lys Asn Ala Ile Thr Gly Glu Ala Met Asn Asp Arg Glu
65                  70                  75                  80

Tyr Ile Met Glu Arg Val Ile Gln Leu Ala Ala Gly Leu Pro Thr Thr
                85                  90                  95

Ser Lys Asn Gly Arg Asp Leu Thr Asn Thr Phe Leu Ser Thr Leu Trp
            100                 105                 110

Asn Asp Leu Gln His Pro Pro Thr Ser Tyr Leu Gly Arg Asp Ser Ala
        115                 120                 125

Tyr Arg Gln Ala Asp Gly Ser Gly Asn Asn Pro Phe Trp Pro Asn Ile
    130                 135                 140

Gly Ala Ala Gly Thr Pro Tyr Ala Arg Ser Val Arg Pro Gln Thr Met
145                 150                 155                 160

Gln Pro Gly Ala Leu Pro Glu Pro Glu Thr Leu Phe Asp Ser Leu Leu
                165                 170                 175

Ala Arg Gln Lys Phe Lys Glu His Pro Asn Lys Ile Ser Ser Val Leu
            180                 185                 190

Phe Tyr Leu Ala Ser Ile Ile Ile His Asp Leu Phe Gln Thr Asp Pro
        195                 200                 205

Arg Asn Pro Thr Val Ser Leu Ser Ser Ser Tyr Leu Asp Leu Gly Pro
```

210 215 220

Leu Tyr Gly Asn Asn Gln Asp Glu Gln Asn Ala Val Arg Thr Phe Lys
225 230 235 240

Asp Gly Lys Leu Lys Pro Asp Cys Phe Ser Ser Lys Arg Ile Leu Gly
245 250 255

Phe Pro Pro Gly Val Gly Val Leu Leu Ile Met Phe Asn Arg Phe His
260 265 270

Asn Tyr Val Ala Glu Gln Leu Ala Gln Ile Asn Glu Gly Gly Arg Phe
275 280 285

Thr Lys Pro Ala Glu Ser Asn Thr Lys Ala Tyr Ala Thr Trp Asp Asn
290 295 300

Asp Leu Phe Gln Thr Ser Arg Leu Val Thr Cys Gly Leu Tyr Val Asn
305 310 315 320

Ile Ile Leu Lys Asp Tyr Val Arg Thr Ile Leu Asn Ile Asn Arg Thr
325 330 335

Asp Ser Thr Trp Ser Leu Asp Pro Arg Ala Glu Met Lys Asp Gly Val
340 345 350

Leu Ser His Ala Ala Lys Gln Ala Thr Gly Asn Gln Val Ser Ala Glu
355 360 365

Phe Asn Leu Val Tyr Arg Trp His Ser Cys Ile Ser Ala Arg Asp Gln
370 375 380

Gln Trp Ser Glu Asp Leu Tyr Arg Glu Leu Phe Asn Gly Gln Asp Pro
385 390 395 400

Asn Thr Leu Ser Thr Gln Gln Phe Ile Met Gly Val Gly Arg Trp Glu
405 410 415

Gly Thr Leu Pro Gln Asp Pro Met Glu Arg Pro Phe Ala Lys Leu Gln
420 425 430

Arg Gln Ala Asp Gly Arg Phe Ser Asp Asp Asp Leu Val Arg Phe Phe
435 440 445

Glu Glu Ser Val Glu Asp Val Ala Gly Ala Phe Gly Ala Ser Asn Val
450 455 460

```
Pro Thr Val Phe Arg Thr Ile Glu Val Leu Gly Ile Lys Gln Ala Arg
465                 470                 475                 480

Ser Trp Asn Leu Ala Thr Leu Asn Glu Phe Arg Ser Phe Phe Asn Leu
                485                 490                 495

Gln Pro Tyr Lys Thr Phe Glu Glu Ile Asn Ser Asp Pro Tyr Ile Ala
            500                 505                 510

Asp Gln Leu Arg His Leu Tyr Asp His Pro Asp Gln Val Glu Leu Tyr
        515                 520                 525

Pro Gly Leu Val Val Glu Asp Ala Lys Glu Pro Met Leu Pro Gly Ser
    530                 535                 540

Gly Leu Cys Thr Asn Tyr Thr Thr Ser Arg Ala Ile Leu Ser Asp Ala
545                 550                 555                 560

Val Thr Leu Val Arg Gly Asp Arg Phe Tyr Thr Val Asp Tyr Thr Pro
                565                 570                 575

Lys His Leu Thr Asn Trp Ala Phe Asn Glu Ile Ser Tyr Asp Asp Ser
            580                 585                 590

Val Asp Asn Gly Ala Ile Phe Tyr Lys Leu Val Leu Arg Ala Phe Pro
        595                 600                 605

Asn His Val Arg Gly Asp Ser Val Tyr Ala His Phe Pro Met Val Val
    610                 615                 620

Pro Ser Glu Asn Lys Lys Ile Leu Thr Ser Leu Gly Lys Ser Glu Lys
625                 630                 635                 640

Tyr Ser Tyr Ser Arg Pro Thr Tyr Thr Pro Pro Pro Arg Met Ile Lys
                645                 650                 655

Ser His Gly Ala Cys Met Ser Ile Leu Ala Asp Lys Glu Thr Phe Lys
            660                 665                 670

Val Thr Trp Gly Gln Lys Leu Glu Phe Ile Leu Ser Arg Asp Gly His
        675                 680                 685

Ser Tyr Gly Gly Asp Phe Met Leu Ser Gly Asp Lys Ala Pro His Ala
    690                 695                 700

Gln Ser Arg Lys Met Ile Gly Asn Ala Leu Tyr Arg Asp Gln Trp Lys
705                 710                 715                 720
```

Ser Glu Val Arg Ser Phe Tyr Glu Ser Ile Thr Leu Gln Leu Leu Arg
725 730 735

Gln Lys Ser Tyr Lys Leu Ala Gly Val Asn Gln Val Asp Ile Val Arg
740 745 750

Asp Val Ser Asn Leu Ala Gln Ile His Phe Cys Ala Asn Ile Phe Ser
755 760 765

Leu Pro Leu Lys Thr Glu Ser Asn Pro His Gly Val Phe Thr Glu Gln
770 775 780

Glu Leu Tyr Glu Ile Met Ala Leu Val Phe Thr Cys Ile Phe Tyr Asp
785 790 795 800

Val Glu Val Thr Lys Ser Phe Gln Leu Glu Gln Ala Ser Arg Gln Val
805 810 815

Ala Gln Gln Leu Gly Glu Leu Val Met Ala Asn Val Asp Leu Val Ser
820 825 830

Lys Ser Gly Phe Val Ala Asp Ile Ile Ser Arg Leu Arg Arg His Glu
835 840 845

His Leu Thr Asp Tyr Gly Val His Met Ile Gln Arg Leu Leu Asp Ser
850 855 860

Gly Leu Pro Pro Lys Glu Ile Val Trp Thr His Ile Leu Pro Ser Ala
865 870 875 880

Ser Ser Met Val Ala Asn Gln Ala Gln Leu Phe Ile Gln Cys Leu Asp
885 890 895

Phe Tyr Leu Lys Pro Glu Asn Ala His His Leu Ala Asp Ile Gln Arg
900 905 910

Leu Ser Lys Glu Asp Thr Pro Glu Ser Asp Glu Leu Leu Leu Arg Tyr
915 920 925

Phe Met Glu Gly Gly Arg Ile Cys Ser Ser Val Ala Leu Pro Arg Val
930 935 940

Val Ala Lys Ser Thr Val Ile Glu Asp Asn Gly Glu Gln Val Ser Leu
945 950 955 960

Lys Glu Gly Glu Ala Ile Phe Leu Asn Leu Val Ser Ala Ser His Asp
965 970 975

Pro Lys Ala Trp Pro Asp Pro Glu Glu Val Arg Leu Asp Arg Asp Leu
980 985 990

Asn Gln Tyr Ala His Phe Gly Phe Gly Pro His Gln Cys Leu Gly Leu
995 1000 1005

Gly Val Cys Gln Val Ala Leu Pro Thr Met Leu Arg Val Val Gly
1010 1015 1020

Gln Leu Gln Asn Leu Arg Arg Ala Pro Gly Leu Gln Gly Gln Leu
1025 1030 1035

Lys Lys Leu Pro Ala Leu Gly Gly Leu Thr Met Tyr Met Asp Ala
1040 1045 1050

Asp His Ser Ser Ile Ser Pro Tyr Pro Ser Thr Met Lys Ile Gln
1055 1060 1065

Trp Asp Gly Glu Leu Pro Lys Ala Arg Tyr Thr
1070 1075

<210> 11
<211> 1074
<212> PRT
<213> Penicillium chrysogenum

<400> 11

Met Ala Glu Lys Glu Ser Asn Ser Ser Gly Lys Ile Ala Gln Leu Glu
1 5 10 15

Gln Val Val Ala Ala Ala Leu Arg Pro Leu Pro Thr Gln Thr Gly Asp
20 25 30

Gly Ser Tyr Val Gln Glu Pro Thr Val Thr Gly Leu Ala Lys Asp Leu
35 40 45

Leu Asn Phe Asp Leu Lys Asp Ala Lys Thr Leu Ala Asp Met Ala Lys
50 55 60

Thr Ala Val Thr Gly Lys Ala Val Asn Asp Arg Asp Tyr Ile Met Glu
65 70 75 80

Arg Val Ile Gln Leu Ala Ser Gly Leu Pro Ser Thr Ser Arg Asn Gly
85 90 95

Lys Glu Leu Thr Asn Thr Phe Leu Thr Gln Leu Trp Gly Asp Leu Glu
100 105 110

```
His Pro Pro Ile Ser Tyr Leu Gly Arg Asp Ala Ala Tyr Arg Lys Ala
        115                 120                 125

Asp Gly Ser Gly Asn Asn Thr Phe Trp Pro Gln Ile Gly Ala Ala Asn
    130                 135                 140

Thr Pro Tyr Ala Arg Ser Val Arg Pro Lys Thr Met Gln Pro Val Ala
145                 150                 155                 160

Leu Pro Glu Pro Glu Ala Leu Phe Asp Ser Leu Leu Ala Arg Lys Asp
                165                 170                 175

Phe Lys Glu His Pro Asn Lys Ile Ser Ser Val Leu Phe His Leu Ala
            180                 185                 190

Ser Ile Ile Ile His Asp Leu Phe Gln Thr Asp Pro Arg Asp Gln Thr
        195                 200                 205

Lys Ser Leu Thr Ser Ser Tyr Leu Asp Leu Ser Pro Leu Tyr Gly Asn
    210                 215                 220

Asn Gln Lys Glu Gln Asp Thr Val Arg Ala Phe Lys Asp Gly Lys Leu
225                 230                 235                 240

Lys Pro Asp Cys Phe Ser Thr Lys Arg Val Leu Gly Phe Pro Pro Gly
                245                 250                 255

Val Gly Val Ile Leu Ile Met Phe Asn Arg Phe His Asn Ser Val Val
            260                 265                 270

Thr Gln Leu Ala Ala Ile Asn Glu Gly Gly Arg Phe Thr Lys Pro Asp
        275                 280                 285

Glu Ser Asn Ala Glu Ala Tyr Ala Thr Trp Asp Asn Asp Leu Phe Gln
    290                 295                 300

Thr Ala Arg Leu Val Thr Cys Gly Leu Tyr Ile Asn Ile Ile Leu Lys
305                 310                 315                 320

Asp Tyr Val Arg Thr Ile Leu Asn Val Asn Arg Thr Asp Ser Leu Trp
                325                 330                 335

Ser Leu Asp Pro Arg Ala Asp Ile Arg Asp Gly Leu Leu Gly Glu Ala
            340                 345                 350

Pro Ala Gln Ala Thr Gly Asn Gln Val Ser Ala Glu Phe Asn Leu Val
```

355 360 365

Tyr Arg Trp His Ser Cys Val Ser Ser Arg Asp Glu Lys Trp Ser Glu
370 375 380

Asp Leu Tyr Lys Glu Ile Phe Asp Gly Lys Asp Pro Lys Glu Ile Ser
385 390 395 400

Met Gln Gln Phe Thr Gly Gly Leu Arg Gln Trp Glu Ser Lys Leu Pro
405 410 415

Ala Asp Pro Gln Glu Arg Pro Phe Ala Lys Leu Gln Arg Gln Ala Asp
420 425 430

Gly Lys Phe Asp Asp Asn Asp Leu Val Lys Ile Phe Glu Glu Ser Val
435 440 445

Glu Asp Pro Ala Gly Ala Phe Gly Ala Leu Asn Val Pro Asp Val Phe
450 455 460

Arg Gly Ile Glu Val Leu Gly Ile Lys Gln Ala Arg Ser Trp Asn Leu
465 470 475 480

Ala Thr Leu Asn Glu Phe Arg Gln Tyr Phe Gly Leu Ala Ala Tyr Gln
485 490 495

Thr Phe Glu Glu Ile Asn Pro Asp Pro Tyr Val Ala Asn Gln Leu Lys
500 505 510

His Phe Tyr Asp His Pro Asp Leu Val Glu Leu Tyr Pro Gly Leu Val
515 520 525

Val Glu Glu Thr Lys Gln Ala Met Thr Pro Gly Ser Gly Leu Cys Thr
530 535 540

Asn Phe Thr Thr Ser Arg Ala Ile Leu Ser Asp Ala Val Ala Leu Val
545 550 555 560

Arg Gly Asp Arg Phe Tyr Thr Val Asp Phe Thr Pro Lys His Leu Thr
565 570 575

Asn Trp Ala Phe Asn Glu Ile Asn Asn Asp Val Ser Val Asp Gly Gly
580 585 590

Gln Val Phe Tyr Lys Leu Ile Leu Lys Ala Phe Pro Asn His Phe Arg
595 600 605

```
Gly Asp Ser Val Tyr Ala His Phe Pro Leu Val Val Pro Asp Glu Asn
    610                 615                 620

Lys Lys Ile Leu Thr Ser Leu Gly Lys Val Lys Thr Tyr Ser Phe Asp
625                 630                 635                 640

Arg Pro Phe Tyr Lys Ala Pro Pro Leu Phe Ile Asn Ser His Ser Ala
                645                 650                 655

Cys Thr Lys Ile Leu Lys Asp Gln Glu Gly Phe Lys Val Val Trp Gly
            660                 665                 670

Glu Lys Ile Gln Phe Leu Met Glu Asn Ser Gly Arg Pro Tyr Gly Arg
        675                 680                 685

Asp Phe Ala Leu Ser Gly Asp Leu Pro Ala Asn Ala Ala Ser Arg Lys
    690                 695                 700

Met Ile Gly Ala Ala Leu His Arg Asp Lys Trp Glu Ser Glu Val Lys
705                 710                 715                 720

Ala Phe Tyr Glu Asp Ile Thr Leu Lys Leu Leu Glu Arg Asn Ser Phe
                725                 730                 735

Lys Val Ala Gly Val Asn Gln Val Asp Ile Val Arg Asp Val Ala Val
            740                 745                 750

Leu Ala Gln Val Asn Phe Cys Ala Asn Val Phe Ser Leu Ser Leu Lys
        755                 760                 765

Thr Glu Ser Asn Pro Arg Gly Val Phe Ser Glu Gln Glu Leu Tyr Gln
    770                 775                 780

Ile Leu Ala Val Ile Phe Ala Ser Ile Phe Tyr Asp Val Asp Val Ser
785                 790                 795                 800

Lys Ser Leu Gln Leu Cys Gln Thr Ala Arg Asn Val Ala Gln Gln Leu
                805                 810                 815

Gly Glu Leu Thr Leu Ala Asn Val Glu Leu Val Ala Lys Thr Gly Phe
            820                 825                 830

Ile Ser Asn Leu Val Asn Arg Leu His Arg His Asp Ile Leu Ser Glu
        835                 840                 845

Tyr Gly Ile His Met Ile Gln Arg Leu Leu Asp Ser Gln Leu Pro Val
    850                 855                 860
```

```
Lys Asp Val Val Trp Ser His Ile Leu Pro Thr Ala Gly Ala Leu Val
865                 870                 875                 880

Ala Asn Gln Gly Gln Leu Phe Ser Gln Cys Ile Asp Tyr Tyr Leu Ser
                885                 890                 895

Glu Glu Ala Ala Glu His Leu Ala Glu Ile Gln Arg Leu Ser Arg Glu
            900                 905                 910

Asp Thr Pro Glu Ala Asp Glu Leu Leu Val Arg Tyr Phe Met Glu Gly
        915                 920                 925

Ala Arg Leu Arg Cys Ser Val Ala Leu Pro Arg Phe Ala Thr Lys Pro
    930                 935                 940

Thr Val Val Asp Asp Asn Gly Lys Arg Val Thr Leu Lys Ala Gly Gln
945                 950                 955                 960

Glu Ile Ile Cys Asn Leu Val Val Ala Gly Arg Asp Pro Val Ala Phe
                965                 970                 975

Pro Asp Pro Asp Lys Val Arg Leu Asp Arg Asp Met Ser Leu Tyr Thr
            980                 985                 990

His Phe Gly Phe Gly Pro His Glu  Cys Leu Gly Val Lys  Met Cys Pro
        995                 1000                1005

Leu Ala  Leu Ser Thr Met Leu  Lys Val Leu Gly Arg  Leu Asp Asn
    1010                1015                1020

Val Arg  Arg Ala Pro Gly Pro  Gln Gly His Leu Lys  Arg Leu Asp
    1025                1030                1035

Gly Leu  Gly Gly Ile Ala Met  Tyr Met Asp Ala Glu  His Ser Ser
    1040                1045                1050

Phe Ser  Pro Phe Pro Met Thr  Met Lys Ile Gln Trp  Asp Gly Asp
    1055                1060                1065

Leu Pro  Ala Arg Arg Glu
    1070
```

<210> 12
<211> 1121
<212> PRT
<213> Penicillium digitatum

<400> 12

```
Met Leu Arg Arg Ile Ser Thr Gln Phe Lys Arg Ser Lys Asp Leu Lys
1               5                   10                  15

Asp Ser Lys Asp Phe Lys Asp Ser Asn Gly Glu Asn Thr Glu Asn Ser
            20                  25                  30

Thr Glu Lys Asn Ser Lys Arg Ala Ser Lys Val Ser Pro Thr Arg Lys
        35                  40                  45

Ser Phe Ser Ala Lys Glu Glu His His Val Val Lys Arg Ala Glu Val
    50                  55                  60

Val Ala Val Phe Glu Lys Phe Ala Gln Ala Ile His Ala Ser Lys Glu
65                  70                  75                  80

Pro Leu Pro Asn Gln Thr Ser Asp Gly Ala Tyr Leu Lys His Asp Lys
                85                  90                  95

Ser Ser Gly Leu Ile Asn Asp Ile Lys Ser Leu Gly Phe Arg Glu Leu
            100                 105                 110

Asn Thr Val Lys Asp Leu Ile Ala Ser Lys Ala Ser Gly Glu Leu Val
        115                 120                 125

Asp Asp Lys Thr Tyr Leu Met Glu Arg Ile Ile Gln Met Val Ala Asp
    130                 135                 140

Leu Pro Gly Asn Ser Lys Asn Arg Thr Glu Leu Thr Ser Leu Phe Leu
145                 150                 155                 160

Asp Glu Leu Trp Asn Ser Ile Pro His Pro Pro Leu Ser Tyr Met Gly
                165                 170                 175

Asp Glu Tyr Lys Tyr Arg Ser Ala Asp Gly Ser Asn Asn Asn Pro Thr
            180                 185                 190

Leu Pro Trp Leu Gly Ala Ala Asn Thr Ala Tyr Cys Arg Thr Ile Pro
        195                 200                 205

Pro Leu Thr Ile Gln Pro Ser Gly Leu Pro Asp Ala Gly Leu Ile Phe
    210                 215                 220

Asp Thr Leu Phe Ala Arg Gln Glu Phe Thr Pro His Pro Asn Lys Val
225                 230                 235                 240

Ser Ser Val Phe Phe Asp Trp Ala Ser Leu Ile Ile His Asp Ile Phe
                245                 250                 255
```

```
Gln Thr Asp Tyr Arg Gln Gln His Leu Asn Lys Thr Ser Ala Tyr Leu
            260                 265                 270

Asp Leu Ser Ile Leu Tyr Gly Asp Val Gln Glu Gln Gln Asp Leu Ile
        275                 280                 285

Arg Ser His Gln Asp Gly Lys Leu Lys Pro Asp Cys Phe Ser Glu Gly
    290                 295                 300

Arg Leu Gln Ala Leu Pro Ala Ala Cys Gly Val Leu Leu Val Met Leu
305                 310                 315                 320

Asn Arg Phe His Asn His Val Val Thr Gln Leu Ala Glu Ile Asn Glu
                325                 330                 335

Asn Gly Arg Phe Ser Lys Pro Arg Pro Gly Leu Ser Glu Glu Asp Ala
            340                 345                 350

Lys Lys Val Trp Thr Lys Arg Asp Glu Asp Leu Phe Gln Thr Gly Arg
        355                 360                 365

Leu Ile Thr Cys Gly Leu Tyr Ile Asn Ile Thr Leu Tyr Asp Tyr Leu
    370                 375                 380

Arg Thr Ile Val Asn Leu Asn Arg Thr Asn Ser Thr Trp Cys Leu Asp
385                 390                 395                 400

Pro Arg Ala Gln Val Glu Lys Ala Gly Ala Thr Pro Ser Gly Leu Gly
                405                 410                 415

Asn Gln Cys Ser Val Glu Phe Asn Leu Ala Tyr Arg Trp His Ser Thr
            420                 425                 430

Ile Ser Gln Gly Asp Glu Lys Trp Ile Glu Gln Ile Tyr His Asp Leu
        435                 440                 445

Met Gly Lys Pro Ala Glu Glu Val Thr Met Pro Glu Leu Leu Met Gly
    450                 455                 460

Leu Lys Lys Val Glu Gly Leu Leu Asp Thr Asp Pro Ala Lys Arg Thr
465                 470                 475                 480

Phe Ala Arg Leu Gln Arg Asn Glu Asp Gly Phe Phe Asn Asp Gly Glu
                485                 490                 495

Leu Val Asn Ile Leu Thr His Ala Thr Glu Asp Val Ala Ser Ser Phe
```

500 505 510

Gly Pro Arg Asn Val Pro Lys Ala Met Arg Ser Ile Glu Ile Leu Gly
515 520 525

Ile Glu Ala Ser Arg Arg Trp Asn Val Gly Ser Leu Asn Glu Phe Arg
530 535 540

Lys His Phe Gly Leu Lys Pro Tyr Glu Thr Phe Glu Glu Val Asn Ser
545 550 555 560

Asn Pro Glu Ile Ser Asn Thr Leu Arg His Leu Tyr Asp His Pro Asp
565 570 575

Phe Ile Glu Leu Tyr Pro Gly Ile Val Thr Glu Glu Ala Lys Glu Pro
580 585 590

Met Ile Pro Gly Val Gly Ile Ala Pro Thr Tyr Thr Ile Ser Arg Ala
595 600 605

Val Leu Ser Asp Ala Val Ala Leu Val Arg Gly Asp Arg His Tyr Thr
610 615 620

Ile Asp Tyr Asn Pro Arg Asn Leu Thr Asn Trp Gly Tyr Asn Glu Cys
625 630 635 640

Arg Tyr Asp Leu Asn Ile Asn Gln Gly Cys Ile Phe Tyr Lys Leu Ala
645 650 655

Thr Arg Ala Phe Pro Asn His Tyr Arg Pro Asp Ser Ile Tyr Ala His
660 665 670

Tyr Pro Met Thr Ile Pro Ser Glu Asn Arg Asn Ile Met Lys Asp Leu
675 680 685

Gly Arg Glu Gln Asp Tyr Ser Trp Asp Lys Pro Ala Phe Ile Glu Pro
690 695 700

Arg Val Asn Leu Ala Ser His Gln Asn Ala Lys Leu Leu Leu Glu Asn
705 710 715 720

Gln Arg Asp Phe Arg Pro Ser Trp Ala Arg Ser Val Ser Glu Leu Phe
725 730 735

Gly Lys Gly Glu Phe Asp Thr Lys Gln Arg Glu Ala Ile Gly Lys Ala
740 745 750

```
Leu Asn Thr Glu Asp Phe Pro Lys Leu Val Lys Thr Phe Tyr Glu Asp
        755                 760                 765

Ile Thr Glu Arg Leu Ile Val Glu Lys Gly Gly Gln Leu Gly Lys Ile
    770                 775                 780

Asn Gln Ile Asp Ile Thr Arg Asp Val Gly Asn Leu Ala His Val His
785                 790                 795                 800

Phe Ala Ser Thr Ile Phe Gly Ile Pro Leu Lys Thr Glu Gln Ser Pro
                805                 810                 815

Gln Gly Leu Phe Thr Glu His Glu Met Tyr Met Ile Leu Ser Thr Ile
            820                 825                 830

Phe Ser Ala Leu Phe Phe Asp Val Asp Ala Pro Arg Ser Tyr Ala Leu
        835                 840                 845

Asn His Ala Ala Ser Ala Val Ser Thr Gln Leu Gly Gln Val Val Glu
    850                 855                 860

Ala Thr Val Lys Ala Asp Thr Asn Ser Gly Leu Phe Ser Gly Ile Met
865                 870                 875                 880

Asp Ser Phe Arg Pro His Asp Asn Ala Leu Arg Glu Phe Gly Thr Glu
                885                 890                 895

Ala Val Arg Arg Met Lys Glu Ala Gly Ser Ser Ala Ser Asp Ile Thr
            900                 905                 910

Trp Ser Ala Ile Ile Pro Thr Ile Val Gly Leu Val Pro Ser Gln Gly
        915                 920                 925

Gln Val Phe Thr Gln Ile Ile Glu Phe Tyr Thr Ala Pro Glu Asn Gln
    930                 935                 940

Ala His Leu Ala Ala Ile His Ser Leu Thr Lys Thr Asp Ser Ala Glu
945                 950                 955                 960

Ser Asp Glu Lys Leu His Arg Tyr Cys Leu Glu Ala Ile Arg Leu Asn
                965                 970                 975

Gly Thr Phe Gly Ala Phe Arg Glu Ala Lys Glu Ala Val Thr Ile Glu
            980                 985                 990

Glu Asp Gly Lys Val Tyr Ala Val  Gln Pro Gly Gln Gln  Val Phe Ala
        995                 1000                1005
```

Ser Phe Asn Gln Ala Asn His Asp Pro Ser Val Phe Pro Glu Pro
1010 1015 1020

Tyr Gln Val Asn Leu His Arg Pro Leu Asn Ser Tyr Ile Asn His
1025 1030 1035

Gly Gln Gly Pro Thr Thr Gly Phe Gly Glu Gln Ile Thr Lys Ile
1040 1045 1050

Ala Leu Val Ala Met Leu Arg Val Val Gly Arg Leu Gln Gly Leu
1055 1060 1065

Arg Arg Ala Ala Gly Ala Gln Gly Gln Leu Gln Lys Ile Pro Gln
1070 1075 1080

Glu Gly Gly Tyr Tyr Val Tyr Leu Arg Gly Asp Gly Ala Ala Tyr
1085 1090 1095

Cys Pro Phe Pro Met Ser Leu Lys Leu His Trp Asp Gly Pro Val
1100 1105 1110

Gly Gln Lys Lys Thr Pro Ser Ser
1115 1120

<210> 13
<211> 773
<212> PRT
<213> Nostoc sp. PCC 7120

<400> 13

Met Asp Leu Asn Thr Tyr Leu Lys Leu Leu Asn Leu Leu Asp Ser Glu
1 5 10 15

Ser Gln Lys Ile Met Leu Glu Leu Gln Ala Met Phe Ser Ala Ala Gly
20 25 30

Leu Ala Leu Arg Gly Arg Gly Thr His Thr Asp Gly Ile Ile Val Lys
35 40 45

Gly Asn Leu Thr Val Leu His Ser Ser Asp Val Pro Ser His Ser Leu
50 55 60

Phe Thr Pro Gly Lys Lys Tyr Asp Val Ile Phe Arg His Ala Asn Ile
65 70 75 80

Val Gly Gly Ala Lys Asp Asp Ala Leu Ile Asn Gly Arg Gly Ser Ala
85 90 95

```
Ile Arg Ile Gly Asn Ile Gly Asp Asp Leu Ser Lys Pro Arg Leu Leu
            100                 105                 110

Asp Leu Val Leu Asn Thr Gly Glu Val Phe Gly Leu Pro Thr Ala Arg
        115                 120                 125

Leu Tyr His Gln Phe Phe Gly Ser Asp Phe His Gln Lys Ser Asp Met
    130                 135                 140

Leu Ala Ser Gly Ser Leu Arg Arg Tyr Ala Val Glu Ala Ala Leu Arg
145                 150                 155                 160

Asn Pro Asp Ser Phe Thr Glu Leu Tyr Tyr His Thr Gln Leu Cys Tyr
                165                 170                 175

Glu Trp Val Asp Ser Lys Lys Lys Ser Arg Tyr Ala Arg Phe Arg Leu
            180                 185                 190

Leu Asn Pro Asn Gln Ser Thr Glu Gly Gly Leu Leu Asp Asp Ser Val
        195                 200                 205

Glu Ile Gly Pro Arg Leu Val Leu Pro Arg Lys Arg Gly Asp Thr Arg
    210                 215                 220

Glu Lys Asn Tyr Leu Arg Asn Glu Phe Arg Gln Arg Leu Thr Asp Gly
225                 230                 235                 240

Asn Ile Val Glu Tyr Val Leu Gln Ala Gln Phe Arg Ser Ile Glu Asp
                245                 250                 255

Val Ala Val Asp Cys Ser Asn Ile Trp Asp Pro Asn Thr Tyr Pro Trp
            260                 265                 270

Leu Asp Ile Ala Ala Ile Val Leu Asn Gln Asp Glu Ser Glu Asn Asp
        275                 280                 285

Tyr Tyr Gln Glu Ile Ala Tyr Asn Pro Gly Asn Thr His Tyr Asp Leu
    290                 295                 300

Lys Leu Pro Asn Ser Tyr Ser Val Asp Asp Phe Ala Ser Leu Gly Val
305                 310                 315                 320

Ser Gly Ala Leu Val His Tyr Phe Gly Ser Ile Val Arg Ala Glu Arg
                325                 330                 335

Thr Gln Tyr Leu Tyr Gly Ser Lys Asp Asp Leu Pro Gly Lys Pro Val
            340                 345                 350
```

Tyr Phe Pro Leu Pro Val Thr Glu Ile Pro Ser Lys Arg Phe Leu Phe
355 360 365

Leu Leu Glu Lys Tyr Asn Phe Leu Thr Asp Asn Ser Tyr Pro Ser Asp
370 375 380

Gly Glu His Asp Lys Ile Glu Ala Leu Val Ser Ala Met Pro Thr Thr
385 390 395 400

Ala Leu Asp Leu Ala Val Gly Thr Thr Asp Pro Thr Asp Ile Pro Asp
405 410 415

Ser Tyr Phe Leu Glu Arg Arg Leu Asn Gly Tyr Asn Pro Gly Ala Ile
420 425 430

Arg Glu Ser Ser Gly Gln Glu Gly Trp Thr His Glu Leu Thr His Asn
435 440 445

Leu Ala Lys Tyr Asp Ile Lys Pro Gly Leu His Phe Pro Asp Phe Val
450 455 460

Gln Cys Arg Leu Phe Val Asp Lys Gln Asn Gly Val Lys Leu His Ser
465 470 475 480

Ile Lys Ile Asp Asp His Glu Ile Thr Pro Cys Gln Glu Gln Trp Gln
485 490 495

Tyr Ala Lys Arg Thr Tyr Leu Gln Ala Glu Phe Leu Ser Gln Glu Leu
500 505 510

Lys Leu His Leu Ala Arg Cys His Phe Asn Ile Glu Gln Tyr Val Met
515 520 525

Ala Ile Lys Arg Arg Leu Ala Pro Thr His Pro Val Arg Ala Phe Ile
530 535 540

Asn Pro His Leu Glu Gly Leu Ile Phe Ile Asn Ser Ser Ala Val Pro
545 550 555 560

Lys Ile Ile Gly Ser Thr Gly Phe Ile Pro Ile Ala Ser Met Leu Thr
565 570 575

Gln Gly Ser Ile Val Asp Val Met Lys Asn Glu Leu Ser Lys Leu Ser
580 585 590

Tyr Met Trp Asn Pro Ile Ala Asp Leu Pro Arg Asp Ile Pro Gly Asp

595 600 605

Leu Phe Thr Pro Ala Ala Thr Ala Tyr Trp Glu Leu Leu Asn Asn Tyr
610 615 620

Val Glu Gln Gly Leu Leu Gln Pro Phe Glu Asp Glu Leu Arg Thr Glu
625 630 635 640

Val Asn Ala Ile Gln Val Asp Glu Leu Phe Ala Glu Leu Lys Glu Arg
645 650 655

Ser Leu Tyr Ser Gly Asp Gln Pro Pro Lys Tyr Asp Ser Ser Glu Leu
660 665 670

Lys Ser Leu Leu Met Tyr Ile Ile Tyr His Ser Ser Phe Leu His Ser
675 680 685

Trp Ala Asn Phe Lys Gln Tyr Asp Asp Ala Gly Asn Pro Asn His Val
690 695 700

Ser Met Gly Asp Tyr Ser Gln Tyr Asp Gln Gln Thr Gln Asp Lys Ile
705 710 715 720

Arg Phe Ser Gln Arg Ser Leu Thr Trp Val Leu Ser Ser Ile Arg Tyr
725 730 735

Asn Ser Val Ala Val Tyr Gly Ser Asp Leu Leu Lys Gln Leu Ile Arg
740 745 750

Glu Lys Ser Ser Ile Leu Glu Pro Gly Leu Pro Leu Glu Asp Leu Met
755 760 765

Met Ser Ile Asn Ile
770

<210> 14
<211> 805
<212> PRT
<213> Acaryochloris marina

<400> 14

```
Met Asp Ser Arg Asp Pro Arg Thr Glu His Val Asp Asp Glu Phe Lys
1               5                   10                  15

Lys Leu Ile Ser Asn Ile Ala Arg Ala Phe Gly Arg Thr Ala Gln Ile
            20                  25                  30

Lys Gly Arg Arg Ala Thr His Ser Tyr Gly Thr Val Ala Lys Gly Val
```

```
        35                  40                  45

Leu Lys Val Leu Asp Thr Leu Asp Ile Pro Gln His Gln Ile Phe Ser
    50                  55                  60

Ala Gly Lys Gln Tyr Pro Val Leu Leu Arg His Ala Asn Ile Lys Gly
65                  70                  75                  80

Phe Arg Asp Asp Ala Ile Leu Asp Gly Arg Gly Ala Thr Val Arg Val
                85                  90                  95

Leu Ala Gly Asp Ala Gln Ala Pro Leu Ser Asp Leu Asn Leu Asp Glu
            100                 105                 110

Gly Ile Val Asp Ile Leu Met Ser Thr Gly Arg Ser Phe Ile Leu Ala
        115                 120                 125

Glu Ala Leu Ser Phe Ala Arg Trp Ala Ala Gly Pro Met Lys Ser Arg
    130                 135                 140

Ala Ala Met Leu Gln Glu Phe Pro Lys Ile Ala Pro Ile Phe His Glu
145                 150                 155                 160

Ile Ile Arg Asp Pro Asp Ser Tyr Thr Gln Leu His Tyr Tyr Ser Glu
                165                 170                 175

Thr Thr Tyr Ser Phe Thr Ser Leu Asn Gln Gln Ser Phe Phe Leu Arg
            180                 185                 190

Tyr Arg Leu Val Asn Arg Gln Asn Pro Ser Ala Asp Thr Gly Trp Leu
        195                 200                 205

Lys Pro Glu Glu Val Lys Leu Pro Leu Asp Tyr Leu Pro Arg Val Ala
    210                 215                 220

Ser Asp Thr Arg Pro Glu Thr Tyr Leu Gln Asp Asp Phe Arg Gln Gln
225                 230                 235                 240

Val Arg Ser Thr Gly Val Ser Tyr Leu Leu Gln Ile Gln Leu Gln Pro
                245                 250                 255

Val Ser Asp Asp Ala Ala Met Asn Glu Thr Ala Lys Asp Cys Thr Ile
            260                 265                 270

Pro Trp Glu Glu Glu Asp His Pro Phe His Asp Val Ala Val Leu Asp
        275                 280                 285
```

```
Leu Gly Ser Ile Leu Pro Asp Glu Leu Ala Glu Ala Leu Glu Phe Asn
    290                 295                 300

Pro Tyr Asn Ala Pro Pro Glu Leu Ser Leu Ile Leu Ala Lys Thr Ala
305                 310                 315                 320

Arg Glu Thr Ala Ser Val Asn His Leu Arg Ser Val Val Tyr Gln Ile
                325                 330                 335

Ser Ala Asn Met Arg Lys Tyr Gln Thr Pro Ser Ser Ser Leu Val Asp
            340                 345                 350

Trp Gly Ser Gly His Gln Pro Ser Leu Pro Glu Gln Tyr Pro Tyr Gly
        355                 360                 365

Thr Gly Lys Thr Pro Ser Phe Asp Asn Thr Lys Pro Leu Pro Ala Arg
    370                 375                 380

Val Lys Pro Lys Pro Arg Tyr Trp Ala Asn Phe Gly Leu Lys Leu Ile
385                 390                 395                 400

Pro Asn Gln Gln Leu Asp Pro Asp Leu Pro Glu Leu Gly Ile Thr Gly
                405                 410                 415

Ala Leu Asp Leu Met Gly Thr Ser Val Val Ser Tyr Met Pro Pro Asn
            420                 425                 430

Leu Thr Arg Thr Arg Leu Asp Lys Phe Ser Asp Asp Phe Phe Val Glu
        435                 440                 445

Arg Arg Leu Asn Gly Phe Asn Pro Gly Lys Leu Asn Arg Val Thr Gly
    450                 455                 460

His Ala Trp Gln Tyr Gln Val Cys Tyr Asp Cys Ser Lys His Gln Val
465                 470                 475                 480

Glu Pro Ala Gly Ile Leu Pro Thr Lys Ile Thr Ala Arg Phe Asn Phe
                485                 490                 495

Cys Gly Gln Tyr Leu His Pro His Ser Ile Gln Phe Thr Leu Asn Gly
            500                 505                 510

Gln Thr Glu Thr Gln Gln Pro Gly Asp Glu Asn Trp Glu Trp Ser Lys
        515                 520                 525

Arg Leu Phe Arg Cys Ala Glu Phe Val Phe Gln Glu Ala Gln Ser His
    530                 535                 540
```

Leu Gly Arg Thr His Met Asn Leu Asp Gln Tyr Ala Met Ala Tyr Tyr
545 550 555 560

Arg Asn Val Val Asn Asn Pro Ile Arg Leu Leu Leu Glu Pro His Leu
565 570 575

Glu Gly Leu Leu Ser Ile Asn Lys Leu Gly Ala Asn Leu Ile Ser Gly
580 585 590

Pro Thr Gly Phe Ile Pro Glu Ala Ser Ser Leu Thr Pro Glu Ser Val
595 600 605

Asp Asp Val Leu Lys Asp Glu Ile Ser His Leu Ser Tyr His Trp Thr
610 615 620

Pro His Arg Gln Thr Leu Pro Asp Arg Val Leu Asn Asn His Tyr Asp
625 630 635 640

Pro Ala Ala Ile Ala Met Trp Asn Leu Leu Thr Gln Tyr Val Arg Glu
645 650 655

Phe Phe Glu Asp His Gln Ala Gly Met Glu Glu Tyr Trp Ser Glu Ile
660 665 670

Gln Ala Met Ser His Asp Leu Val Thr His Ser Ile Leu Lys Pro Glu
675 680 685

Leu Gly Thr Leu Ala Val Gln Asn Asn Ala Asp Leu Gln Gln Leu Cys
690 695 700

Val Tyr Val Ile Phe Leu Ser Ser Phe Phe His Ser Trp Val Asn Asn
705 710 715 720

Lys Gln Tyr Glu Asp Gly Gly Asp Val Ser Tyr Ser Thr Ile Gly Leu
725 730 735

Trp Asp Thr Arg His Pro Lys Tyr Asp Pro Leu Arg Val Ala Glu Arg
740 745 750

Glu Ala Lys Gln Val Thr Leu Leu Trp Thr Leu Ser His Val Arg Tyr
755 760 765

Asn Pro Ile Met Asp Val Gly Pro Thr Ala Leu Lys Asn Leu Leu Trp
770 775 780

Gln Gln Arg Gln His Ile Glu Pro Gly Ile Pro Leu Ala Asn Leu Met
785 790 795 800

Met Ser Thr Asn Ile
805

<210> 15
<211> 822
<212> PRT
<213> Nostoc sp. NIES-4103

<400> 15

Met Thr Asn Glu Ile Gln Asn Pro Val Asp His Leu Val Gly Asp Pro
1 5 10 15

Arg Val Arg Asp Ile Glu Pro Lys Phe Ser Lys Ile Ile Ser Asp Ile
20 25 30

Ala Arg Val Phe Gly Gln Met Ala Gln Leu Lys Gly Arg Arg Ala Thr
35 40 45

His Ser Phe Gly Thr Val Ala Lys Gly Val Leu Glu Val Val Lys Gln
50 55 60

Pro Asp Ile Pro Pro His Arg Leu Leu Glu Ala Gly Lys Lys Phe Pro
65 70 75 80

Val Leu Leu Arg His Ala Asn Ile Lys Gly Phe Arg Asp Asp Ala Ile
85 90 95

Leu Asp Gly Arg Gly Ala Thr Leu Arg Ile Leu Asn Gly Pro Ala Asp
100 105 110

Ala Pro Ile Thr Ala Leu Asp Leu His Thr Pro Ile Leu Asp Val Leu
115 120 125

Met Ser Thr Gly Arg Cys Phe Ile Leu Pro Asp Ala Ala Ser Phe Ser
130 135 140

Arg Trp Val Ala Ser Pro Leu Gln Asp Arg Ala Lys Leu Leu Val Glu
145 150 155 160

Phe Pro Lys Ile Thr Pro Ile Phe Ala Glu Ile Ile Arg Asn Pro Asp
165 170 175

Ser Tyr Thr Lys Leu His Tyr Tyr Ser Glu Thr Thr Tyr Leu Phe Ile
180 185 190

Gly Leu Asp Gly Lys Gln Tyr Tyr Leu Arg Tyr Arg Leu Ile Asn Ser
195 200 205

```
Asp Arg Ser Ala Asp Thr Gly Phe Ile Asn Ser Ala Asp Leu Arg Leu
    210                 215                 220

Pro Leu Asp Tyr Leu Pro Arg Leu Glu Asp Asp Thr Arg Pro Glu Thr
225                 230                 235                 240

Tyr Leu Gln Asn Asp Tyr Gln Gln Lys Val Lys Asn Gly Gly Val Lys
                245                 250                 255

Tyr Ile Leu Gln Phe Gln Leu Arg Ala Val Ser Asp Asn Gln Ala Ala
            260                 265                 270

Asn Glu Glu Ala Lys Asp Cys Thr Ile Pro Trp Asp Glu Thr Gln Tyr
        275                 280                 285

Pro Cys Lys Asp Val Ala Val Ile Ser Leu Thr Glu Ile Val Pro Ser
    290                 295                 300

Glu Leu Ala Glu Pro Leu Glu Phe Asn Pro Tyr His Ala Pro Pro Asp
305                 310                 315                 320

Leu Ser Leu Ile Leu Ala His Ser Ile Asn Glu Thr Ala Ser Val Asn
                325                 330                 335

His Leu Arg Ser Val Val Tyr Gln Ile Ser Ala Asn Met Arg Lys Phe
            340                 345                 350

Gln Gln Pro Ser Ala Glu Leu Val Asp Trp Gly Ile Lys Gly Asn Gln
        355                 360                 365

Pro Asp Pro Lys Gln Val Tyr Thr Tyr Tyr Gly Gln Ile Gly Gln Asp
    370                 375                 380

Ile Pro Arg Tyr Asp Phe Arg Arg Pro Leu Pro Asp Arg Val Lys Pro
385                 390                 395                 400

Lys Pro Arg Tyr Ile Ala Asn Phe Gly Leu His Leu Phe Pro Ala Arg
                405                 410                 415

Pro Leu Gly Ser Ile Pro Met Leu Gly Ile Val Gly Val Ala Glu Thr
            420                 425                 430

Met Gln Ala Leu Gly Gln Thr Ala Pro Gln Trp Met Pro Ala Asn Leu
        435                 440                 445

Thr Arg Thr Arg Pro Asp Lys Tyr Glu Asp Gln Phe Phe Val Glu Arg
```

450 455 460

Arg Leu Asn Gly Phe Asn Pro Gly Lys Phe Asn Arg Val His Thr Phe
465 470 475 480

Glu Pro Trp Gln Tyr Thr Ile Arg Tyr Asp Cys Arg Lys Tyr Lys Val
485 490 495

Glu Glu Ala Gly Ile Leu Pro Ala Glu Ile Glu Ala Arg Phe Lys Phe
500 505 510

Glu Asp His Asn Leu His Leu His Ser Ile Lys Phe Ile Leu Asn Gly
515 520 525

Lys Thr Glu Thr His Lys Pro Gly Asp Ala Asp Trp Glu Trp Ser Lys
530 535 540

Arg Leu Phe Arg Thr Ala Glu Phe Val Phe Gln Glu Ile Gln Ser His
545 550 555 560

Leu Gly Arg Thr His Met Asn Leu Asp Gln Tyr Ala Met Ala Tyr Tyr
565 570 575

Arg Asn Val Val Asn Asn Pro Ile Arg Leu Leu Leu Glu Pro His Phe
580 585 590

Asp Gly Leu Leu Asn Ile Asn Ser Leu Gly Ala Ala Leu Ile Leu Gly
595 600 605

Ala Thr Gly Phe Ile Pro Glu Ala Ser Ser Leu Ser Pro Glu Glu Val
610 615 620

Asp Ile Val Leu Lys Asp Glu Ile Ser Arg Leu Ser Tyr Arg Asn Trp
625 630 635 640

Ser Pro His Ile Gln Ala Leu Lys Asp Glu Val Gln Asn Asn His Phe
645 650 655

Asp Arg Ala Ala Leu Ser Val Trp Glu Ala Ile Glu Glu Tyr Val Ser
660 665 670

Glu Phe Phe Gln Lys Gln Glu Ala Gly Ile Lys Ala Tyr Trp Ser Glu
675 680 685

Ile Gly Gly Met Ser Glu Asp Leu Val Lys His Ser Val Leu Gly Gln
690 695 700

```
Lys Ser Gln Ser Leu Ala Ile Ala Asn Ile Asn Asp Leu Lys Gln Leu
705                 710                 715                 720

Cys Ile Tyr Val Ile Tyr Leu Ser Ser Phe Phe His Ser Trp Val Asn
                725                 730                 735

Asn Lys Gln Tyr Asp Asp Gly Gly Asp Pro Ala Tyr Ala Ser Ile Gly
            740                 745                 750

Leu Trp Asp Gly His Asn Pro Gln Tyr Asn Pro Ile Thr Val Ala Glu
        755                 760                 765

Lys His Ala Arg Gln Val Thr Leu Leu Trp Thr Leu Ser Ser Val Arg
    770                 775                 780

Tyr Asn Pro Val Met Glu Val Gly Pro Pro Ala Leu Lys Asp Arg Leu
785                 790                 795                 800

Trp Lys Arg Arg Lys Ile Ile Gln Pro Gly Ile Pro Val Glu Ser Ile
                805                 810                 815

Met Met Ser Thr Asn Ile
            820
```

<210> 16
<211> 3261
<212> DNA
<213> None

<400> 16

```
atgggcgaag acaaggagac caacattctg gcgggtctgg gcaacaccat cagccaggtg      60
gaaaacgtgg ttgcggcgag cctgcgtccg ctgccgaccg cgaccggtga tggcacctat     120
gttgcggaga gcacccaaac cggtctggcg aaagacctga gccacgttga tctgaaggac     180
gtgcgtaccc tggcggaagt ggttaaaagc gcggcgaccg gtgaaccggt ggacgataaa     240
cagtacatta tggaacgtgt tatccagctg gcggcgggtc tgccgagcac cagccgtaac     300
gcggcggaac tgaccaagag cttcctgaac atgctgtgga acgatctgga gcacccgccg     360
gttagctatc tgggtgcgga tagcatgcac cgtaaagcgg acggtagcgg caacaaccgt     420
ttttggccgc agctgggtgc ggcgggtagc gcgtacgcgc gtagcgttcg tccgaaaacc     480
atgcaaagcc cgagcctgcc ggatccggag accatctttg actgcctgct gcgtcgtaaa     540
gaatatcgtg agcacccgaa caagattagc agcgtgctgt tctacctggc gagcatcatt     600
atccacgacc tgtttcagac cgatccgaaa gacaacagcg ttagcaagac cagcagctac     660
ctggatctga gcccgctgta tggcaacaac caggacgaac aaaacctggt gcgtaccttc     720
aaggatggca agctgaaacc ggactgcttc gcgaccaaac gtgttctggg ctttccgccg     780
```

ggtgttggcg tgctgctgat catgttcaac cgttttcaca actacgtggt tgatcagctg 840
gcggcgatta acgagtgcgg tcgtttcacc aagccggatg aaagcaacgt ggacgagtac 900
gcgaaatatg ataacaacct gtttcaaacc ggtcgtctgg tgacctgcgg cctgtacgcg 960
aacattatcc tgaaggacta tgttcgtacc attctgaaca tcaaccgtac cgatagcacc 1020
tggagcctgg acccgcgtat ggaaatgaaa gacggtctgc tgggtgaagc ggcggcgatg 1080
gcgaccggta accaagttag cgcggaattc aacgtggttt accgttggca cgcgtgcatt 1140
agcaagcgtg atgaaaaatg gaccgaggac ttccaccgtg agatcatgcc gggcgtggat 1200
ccgagcaccc tgagcatgca ggactttgtt gcgggtctgg gccgttggca agcgggtctg 1260
ccgcaagaac cgctggagcg tccgtttagc ggtctgcagc gtaagccgga tggcgcgttc 1320
aacgacgatg acctggtgaa cctgtttgag aagagcgtgg aggactgcgc gggtgcgttt 1380
ggtgcgagcc atgtgccggc gatttttaag agcgttgaag cgctgggtat catgcaggcg 1440
cgtcgttgga acctgggcac cctgaacgaa ttccgtcaat actttaacct ggcgccgcac 1500
aagaccttcg aggatattaa cagcgacccg tacatcgcgg accagctgaa acgtctgtat 1560
gatcacccgg acctggtgga gatctacccg ggcgtggttg tggaggaagc gaaagatagc 1620
atggttccgg gtagcggcct gtgcaccaac ttcaccatta gccgtgcgat tctgagcgat 1680
gcggttgcgc tggtgcgtgg tgatcgtttt tacaccgtgg actatacccc gaagcacctg 1740
accaactggg cgtataacga aatccagccg aacaacgcgg ttgatcaggg ccaagtgttc 1800
tacaaactgg ttctgcgtgc gttcccgaat cactttgacg gtaacagcat ttatgcgcac 1860
tttccgctgg ttgtgccgag cgagaacgaa aagatcctga aaagcctggg cgtggcggaa 1920
aaatacagct gggagaagcc gagccgtatt agccacccga ttttcatcag cagccacgcg 1980
gcgtgcatga gcatcctgga aaaccaggag accttcaaag ttacctgggg tcgtaagatt 2040
gaatttctga tgcagcgtga taaacaccaa tatggcaagg atttcatgct gagcggtgac 2100
cgtccgccga acgcggcgag ccgtaagatg atgggcagcg cgctgtatcg tgacgagtgg 2160
gaagcggaag tgaaaaactt ttacgagcaa accaccctga agctgctgca caaaaacagc 2220
tacaagctgg cgggtgttaa ccaggtggat atcgttcgtg acgtggcgaa cctggcgcaa 2280
gtgcacttct gcagcagcgt tttagcctg ccgctgaaga ccgacagcaa cccgcgtggc 2340
attttcgcgg aaagcgagct gtataaaatc atggcggcgg ttttcaccgc gatcttctac 2400
gatgcggaca tcggcaagag ctttgaactg aaccaagcgg cgcgtaccgt gacccagcaa 2460
ctgggtcaac tgaccatggc gaacgttgag attatcgcga aaaccggcct gatcgcgaac 2520
ctggtgaacc gtctgcaccg tcgtgatgtt ctgagcgaat atggtattca catgattcaa 2580
cgtctgctgg acagcggtct gccggcgacc gagattgttt ggacccatat cctgccgacc 2640

```
gcgggtggca tggttgcgaa ccaggcgcaa ctgttcagcc aatgcctgga ttactatctg     2700
agcgaggaag gtagcggcca cctgccggaa atcaaccgtc tggcgaagga gaacaccccg     2760
gaagcggatg agctgctgac ccgttacttt atggaaggtg cgcgtctgcg tagcagcgtg     2820
gcgctgccgc gtgttgcggc gcagccgacc gttgtggaag ataacggcga gaaactgacc     2880
attaaggcgg gccaagttgt gatgtgcaac ctggttagcg cgtgcatgga tccgaccgcg     2940
ttcccggacc cggagaaggt taaactggat cgtgacatga acctgtatgc gcacttcggt     3000
tttggcccgc acaaatgcct gggtctggat ctgtgcaaga ccggcctgag caccatgctg     3060
aaagttctgg gtcgtctgga taacctgcgt cgtgcgccgg gtgcgcaggg tcaactgaag     3120
aaactgagcg gtccgggtgg catcgcgaaa tacatgaacg aggaccagag cggcttcacc     3180
ccgtttccga gcaccatgaa gattcagtgg gatggtgaac tgccgcaact gaaagaggac     3240
tttcatcatc accatcacca c                                               3261
```

<210> 17
<211> 1087
<212> PRT
<213> Emericella nidulans

<400> 17

Met Gly Glu Asp Lys Glu Thr Asn Ile Leu Ala Gly Leu Gly Asn Thr
1               5                   10                  15

Ile Ser Gln Val Glu Asn Val Val Ala Ala Ser Leu Arg Pro Leu Pro
            20                  25                  30

Thr Ala Thr Gly Asp Gly Thr Tyr Val Ala Glu Ser Thr Gln Thr Gly
        35                  40                  45

Leu Ala Lys Asp Leu Ser His Val Asp Leu Lys Asp Val Arg Thr Leu
    50                  55                  60

Ala Glu Val Val Lys Ser Ala Ala Thr Gly Glu Pro Val Asp Asp Lys
65                  70                  75                  80

Gln Tyr Ile Met Glu Arg Val Ile Gln Leu Ala Ala Gly Leu Pro Ser
                85                  90                  95

Thr Ser Arg Asn Ala Ala Glu Leu Thr Lys Ser Phe Leu Asn Met Leu
            100                 105                 110

Trp Asn Asp Leu Glu His Pro Pro Val Ser Tyr Leu Gly Ala Asp Ser
        115                 120                 125

Met His Arg Lys Ala Asp Gly Ser Gly Asn Asn Arg Phe Trp Pro Gln

130 135 140

Leu Gly Ala Ala Gly Ser Ala Tyr Ala Arg Ser Val Arg Pro Lys Thr
145 150 155 160

Met Gln Ser Pro Ser Leu Pro Asp Pro Glu Thr Ile Phe Asp Cys Leu
165 170 175

Leu Arg Arg Lys Glu Tyr Arg Glu His Pro Asn Lys Ile Ser Ser Val
180 185 190

Leu Phe Tyr Leu Ala Ser Ile Ile Ile His Asp Leu Phe Gln Thr Asp
195 200 205

Pro Lys Asp Asn Ser Val Ser Lys Thr Ser Ser Tyr Leu Asp Leu Ser
210 215 220

Pro Leu Tyr Gly Asn Asn Gln Asp Glu Gln Asn Leu Val Arg Thr Phe
225 230 235 240

Lys Asp Gly Lys Leu Lys Pro Asp Cys Phe Ala Thr Lys Arg Val Leu
245 250 255

Gly Phe Pro Pro Gly Val Gly Val Leu Leu Ile Met Phe Asn Arg Phe
260 265 270

His Asn Tyr Val Val Asp Gln Leu Ala Ala Ile Asn Glu Cys Gly Arg
275 280 285

Phe Thr Lys Pro Asp Glu Ser Asn Val Asp Glu Tyr Ala Lys Tyr Asp
290 295 300

Asn Asn Leu Phe Gln Thr Gly Arg Leu Val Thr Cys Gly Leu Tyr Ala
305 310 315 320

Asn Ile Ile Leu Lys Asp Tyr Val Arg Thr Ile Leu Asn Ile Asn Arg
325 330 335

Thr Asp Ser Thr Trp Ser Leu Asp Pro Arg Met Glu Met Lys Asp Gly
340 345 350

Leu Leu Gly Glu Ala Ala Ala Met Ala Thr Gly Asn Gln Val Ser Ala
355 360 365

Glu Phe Asn Val Val Tyr Arg Trp His Ala Cys Ile Ser Lys Arg Asp
370 375 380

```
Glu Lys Trp Thr Glu Asp Phe His Arg Glu Ile Met Pro Gly Val Asp
385                 390                 395                 400

Pro Ser Thr Leu Ser Met Gln Asp Phe Val Ala Gly Leu Gly Arg Trp
                405                 410                 415

Gln Ala Gly Leu Pro Gln Glu Pro Leu Glu Arg Pro Phe Ser Gly Leu
            420                 425                 430

Gln Arg Lys Pro Asp Gly Ala Phe Asn Asp Asp Asp Leu Val Asn Leu
        435                 440                 445

Phe Glu Lys Ser Val Glu Asp Cys Ala Gly Ala Phe Gly Ala Ser His
    450                 455                 460

Val Pro Ala Ile Phe Lys Ser Val Glu Ala Leu Gly Ile Met Gln Ala
465                 470                 475                 480

Arg Arg Trp Asn Leu Gly Thr Leu Asn Glu Phe Arg Gln Tyr Phe Asn
                485                 490                 495

Leu Ala Pro His Lys Thr Phe Glu Asp Ile Asn Ser Asp Pro Tyr Ile
            500                 505                 510

Ala Asp Gln Leu Lys Arg Leu Tyr Asp His Pro Asp Leu Val Glu Ile
        515                 520                 525

Tyr Pro Gly Val Val Val Glu Glu Ala Lys Asp Ser Met Val Pro Gly
    530                 535                 540

Ser Gly Leu Cys Thr Asn Phe Thr Ile Ser Arg Ala Ile Leu Ser Asp
545                 550                 555                 560

Ala Val Ala Leu Val Arg Gly Asp Arg Phe Tyr Thr Val Asp Tyr Thr
                565                 570                 575

Pro Lys His Leu Thr Asn Trp Ala Tyr Asn Glu Ile Gln Pro Asn Asn
            580                 585                 590

Ala Val Asp Gln Gly Gln Val Phe Tyr Lys Leu Val Leu Arg Ala Phe
        595                 600                 605

Pro Asn His Phe Asp Gly Asn Ser Ile Tyr Ala His Phe Pro Leu Val
    610                 615                 620

Val Pro Ser Glu Asn Glu Lys Ile Leu Lys Ser Leu Gly Val Ala Glu
625                 630                 635                 640
```

```
Lys Tyr Ser Trp Glu Lys Pro Ser Arg Ile Ser His Pro Ile Phe Ile
                645                 650                 655

Ser Ser His Ala Ala Cys Met Ser Ile Leu Glu Asn Gln Glu Thr Phe
            660                 665                 670

Lys Val Thr Trp Gly Arg Lys Ile Glu Phe Leu Met Gln Arg Asp Lys
        675                 680                 685

His Gln Tyr Gly Lys Asp Phe Met Leu Ser Gly Asp Arg Pro Pro Asn
    690                 695                 700

Ala Ala Ser Arg Lys Met Met Gly Ser Ala Leu Tyr Arg Asp Glu Trp
705                 710                 715                 720

Glu Ala Glu Val Lys Asn Phe Tyr Glu Gln Thr Thr Leu Lys Leu Leu
                725                 730                 735

His Lys Asn Ser Tyr Lys Leu Ala Gly Val Asn Gln Val Asp Ile Val
            740                 745                 750

Arg Asp Val Ala Asn Leu Ala Gln Val His Phe Cys Ser Ser Val Phe
        755                 760                 765

Ser Leu Pro Leu Lys Thr Asp Ser Asn Pro Arg Gly Ile Phe Ala Glu
    770                 775                 780

Ser Glu Leu Tyr Lys Ile Met Ala Ala Val Phe Thr Ala Ile Phe Tyr
785                 790                 795                 800

Asp Ala Asp Ile Gly Lys Ser Phe Glu Leu Asn Gln Ala Ala Arg Thr
                805                 810                 815

Val Thr Gln Gln Leu Gly Gln Leu Thr Met Ala Asn Val Glu Ile Ile
            820                 825                 830

Ala Lys Thr Gly Leu Ile Ala Asn Leu Val Asn Arg Leu His Arg Arg
        835                 840                 845

Asp Val Leu Ser Glu Tyr Gly Ile His Met Ile Gln Arg Leu Leu Asp
    850                 855                 860

Ser Gly Leu Pro Ala Thr Glu Ile Val Trp Thr His Ile Leu Pro Thr
865                 870                 875                 880

Ala Gly Gly Met Val Ala Asn Gln Ala Gln Leu Phe Ser Gln Cys Leu
                885                 890                 895
```

```
Asp Tyr Tyr Leu Ser Glu Glu Gly Ser Gly His Leu Pro Glu Ile Asn
            900                 905                 910

Arg Leu Ala Lys Glu Asn Thr Pro Glu Ala Asp Glu Leu Leu Thr Arg
        915                 920                 925

Tyr Phe Met Glu Gly Ala Arg Leu Arg Ser Ser Val Ala Leu Pro Arg
    930                 935                 940

Val Ala Ala Gln Pro Thr Val Val Glu Asp Asn Gly Glu Lys Leu Thr
945                 950                 955                 960

Ile Lys Ala Gly Gln Val Val Met Cys Asn Leu Val Ser Ala Cys Met
                965                 970                 975

Asp Pro Thr Ala Phe Pro Asp Pro Glu Lys Val Lys Leu Asp Arg Asp
            980                 985                 990

Met Asn Leu Tyr Ala His Phe Gly  Phe Gly Pro His Lys  Cys Leu Gly
        995                 1000                1005

Leu Asp  Leu Cys Lys Thr Gly  Leu Ser Thr Met Leu  Lys Val Leu
    1010                1015                1020

Gly Arg  Leu Asp Asn Leu Arg  Arg Ala Pro Gly Ala  Gln Gly Gln
    1025                1030                1035

Leu Lys  Lys Leu Ser Gly Pro  Gly Gly Ile Ala Lys  Tyr Met Asn
    1040                1045                1050

Glu Asp  Gln Ser Gly Phe Thr  Pro Phe Pro Ser Thr  Met Lys Ile
    1055                1060                1065

Gln Trp  Asp Gly Glu Leu Pro  Gln Leu Lys Glu Asp  Phe His His
    1070                1075                1080

His His  His His
    1085
```